# EUROPÄISCHE PATENTSCHRIFT

(11) **EP 4 088 337 B1**
(45) Veröffentlichungstag und Bekanntmachung des Hinweises auf die Patenterteilung: **25.03.2026**
(21) Anmeldenummer: 21700829.1
(22) Anmeldetag: 05.01.2021
(51) Int. Cl.: H01M 10/0525, H01M 10/0587, H01M 50/103, H01M 50/15, H01M 50/171, H01M 50/176, H01M 50/184, H01M 50/188, H01M 50/193, H01M 50/195, H01M 50/342, H01M 50/533, H01M 50/55, H01M 50/553, H01M 50/564

(54) **ELEKTROCHEMISCHE ZELLE, ELEKTROCHEMISCHES SYSTEM UND VERFAHREN ZUR HERSTELLUNG EINER ELEKTROCHEMISCHEN ZELLE**
ELECTROCHEMICAL CELL, ELECTROCHEMICAL SYSTEM, AND METHOD FOR PRODUCING AN ELECTROCHEMICAL CELL
CELLULE ÉLECTROCHIMIQUE, SYSTÈME ÉLECTROCHIMIQUE ET PROCÉDÉ DE FABRICATION D'UNE CELLULE ÉLECTROCHIMIQUE

(30) Priorität: 07.01.2020 DE 102020200063
(43) Veröffentlichungstag der Anmeldung: 16.11.2022
(73) Patentinhaber: ElringKlinger AG, 72581 Dettingen (DE)
(72) Erfinder: WIDMAIER, Mathias, 71106 Magstadt (DE); SCHWINDOWSKY, Matthias, 72805 Lichtenstein (DE); REITZ, Elisabeth, 72072 Tübingen (DE); SCHERER, Mathias, 72488 Sigmaringen (DE); BECK, Christian, 89343 Jettingen-Scheppach (DE)
(74) Vertreter: DTS Patent- und Rechtsanwälte PartmbB
(86) Internationale Anmeldenummer: PCT/EP2021/050050
(87) Internationale Veröffentlichungsnummer: WO 2021/140083

(56) Entgegenhaltungen:
- DE-A1- 102014 221 626
- DE-A1- 102017 200 390
- DE-A1- 102017 223 738
- DE-A1- 102018 209 270

## Beschreibung

Die vorliegende Erfindung betrifft eine elektrochemische Zelle für ein elektrochemisches System.

Ferner betrifft die vorliegende Erfindung ein elektrochemisches System, umfassend eine oder mehrere elektrochemische Zellen.

Die vorliegende Erfindung betrifft weiter ein Verfahren zur Herstellung einer elektrochemischen Zelle.

Elektrochemische Zellen sind aus der DE 10 2018 209 270 A1, der DE 10 2017 200 390 A1, der EP 2 541 650 A1, der US 2015/0214516 A1, der DE 10 2012 213 871 A1, der EP 1 459 882 A1, der US 2018/0097208 A1 und der WO 2017/159760 A1 bekannt.

Der vorliegenden Erfindung liegt die Aufgabe zugrunde, eine elektrochemische Zelle bereitzustellen, welche möglichst einfach herstellbar ist und eine lange Lebensdauer aufweist.

Diese Aufgabe wird durch eine elektrochemische Zelle gemäß Anspruch 1 gelöst.

Die elektrochemische Zelle für ein elektrochemisches System umfasst ein elektrochemisches Element zur Aufnahme, Speicherung und/oder Bereitstellung elektrischer Energie.

Die elektrochemische Zelle umfasst ferner ein Gehäuse zur Aufnahme des elektrochemischen Elements, wobei das Gehäuse einen Innenraum der elektrochemischen Zelle umgibt und ein Abdeckelement umfasst.

Das Abdeckelement ist vorzugsweise formschlüssig und/oder kraftschlüssig und/oder stoffschlüssig mit einem weiteren, insbesondere becherförmigen, Gehäusebauteil verbunden.

Die elektrochemische Zelle umfasst ein erstes Zellterminal und ein zweites Zellterminal zum Verbinden der elektrochemischen Zelle mit einem Zellkontaktierungssystem.

Das erste Zellterminal ist beispielsweise eine Anode.

Das zweite Zellterminal ist beispielsweise eine Kathode.

Alternativ kann vorgesehen sein, dass das erste Zellterminal die Kathode und/oder dass das zweite Zellterminal die Anode bildet.

Günstig kann es sein, wenn die elektrochemische Zelle ein erstes Kontaktelement umfasst, welches das erste Zellterminal mit einem ersten Verbindungsleiter der elektrochemischen Zelle verbindet und wenn die elektrochemische Zelle ein zweites Kontaktelement umfasst, welches das zweite Zellterminal mit einem zweiten Verbindungsleiter der elektrochemischen Zelle verbindet.

Der erste Verbindungsleiter dient vorzugsweise einer elektrischen Verbindung des elektrochemischen Elements mit dem ersten Kontaktelement.

Der zweite Verbindungsleiter dient insbesondere einer elektrischen Verbindung des elektrochemischen Elements mit dem zweiten Kontaktelement.

Das erste Kontaktelement ist in einem ersten Verbindungsbereich mittels eines ersten Vergusselements an dem Abdeckelement festgelegt.

Das erste Vergusselement ist aus einem ersten Polymermaterial gebildet, welches insbesondere ein erstes Harzmaterial umfasst oder daraus gebildet ist.

Ergänzend oder alternativ ist das zweite Kontaktelement in einem zweiten Verbindungsbereich mittels eines zweiten Vergusselements an dem Abdeckelement festgelegt.

Das zweite Vergusselement ist aus einem zweiten Polymermaterial gebildet, welches insbesondere ein zweites Harzmaterial umfasst oder daraus gebildet ist.

Durch das Festlegen des ersten Kontaktelements mittels des ersten Vergusselements und/oder des zweiten Kontaktelements mittels des zweiten Vergusselements ist vorzugsweise eine vereinfachte Herstellung der elektrochemischen Zelle ermöglicht.

Zusätzliche Werkzeuge zur Herstellung des ersten Vergusselements und/oder des zweiten Vergusselements sind vorzugsweise entbehrlich. Es ist insbesondere eine werkzeuglose Terminaldurchführung ausgebildet.

Durch die Verwendung des ersten Harzmaterial und/oder des zweiten Harzmaterials kann insbesondere eine Spaltbildung, welche beispielsweise bei einem Anspritzen eines thermoplastischen Materials auftreten kann, vermieden oder reduziert werden. Hierdurch ist vorzugsweise eine Dichtwirkung des ersten Vergusselements und/oder des zweiten Vergusselements optimiert.

Vorteilhaft kann es sein, wenn das erste Vergusselement und/oder das zweite Vergusselement Füllvergusselemente sind.

Alternativ zu einer Festlegung des zweiten Kontaktelements mittels des zweiten Vergusselements kann das zweite Zellterminal auch direkt stoffschlüssig mit dem Abdeckelement verbunden werden, beispielsweise mittels Laserschweißens und/oder Reibschweißens und/oder Ultraschallschweißens.

Es kann vorgesehen sein, dass das erste Kontaktelement einen zumindest näherungsweise T-förmigen Querschnitt oder einen zumindest näherungsweise L-förmigen Querschnitt aufweist. Der Querschnitt ist vorzugsweise parallel zu einer Hauptseite der elektrochemischen Zelle genommen.

Vorzugsweise weist das zweite Kontaktelement einen zumindest näherungsweise T-förmigen Querschnitt oder einen zumindest näherungsweise L-förmigen Querschnitt auf. Der Querschnitt ist vorzugsweise parallel zu einer Hauptseite der elektrochemischen Zelle genommen.

Günstig kann es sein, wenn das erste Vergusselement in einem parallel zu einer Hauptseite der elektrochemischen Zelle genommenen Querschnitt eine Ankerform und/oder zumindest näherungsweise zwei C-Formen aufweist. So ist vorzugsweise ein Formschluss und/oder Kraftschluss zwischen dem Abdeckelement und dem ersten Vergusselement, insbesondere längs einer parallel zu einer Mittelachse des ersten Kontaktelements angeordneten Richtung, ausgebildet.

Die Mittelachse des ersten Kontaktelements ist vorzugsweise eine Haupterstreckungsrichtung des ersten Kontaktelements. Insbesondere ist die Mittelachse des ersten Kontaktelements zumindest näherungsweise senkrecht zu einer Haupterstreckungsebene des Abdeckelements angeordnet.

Günstig kann es sein, wenn das zweite Vergusselement in einem parallel zu einer Hauptseite der elektrochemischen Zelle genommenen Querschnitt eine Ankerform und/oder zumindest näherungsweise zwei C-Formen aufweist. So ist vorzugsweise ein Formschluss und/oder Kraftschluss zwischen dem Abdeckelement und dem zweiten Vergusselement, insbesondere längs einer parallel zu einer Mittelachse des zweiten Kontaktelements angeordneten Richtung, ausgebildet.

Die Mittelachse des zweiten Kontaktelements ist vorzugsweise eine Haupterstreckungsrichtung des zweiten Kontaktelements. Insbesondere ist die Mittelachse des zweiten Kontaktelements zumindest näherungsweise senkrecht zu einer Haupterstreckungsebene des Abdeckelements angeordnet.

Vorteilhaft kann es sein, wenn die elektrochemische Zelle mindestens eine Sollbruchstelle aufweist, welche beispielsweise in einem Zentralabschnitt des Abdeckelements zwischen dem ersten Zellterminal und dem zweiten Zellterminal angeordnet ist. Die mindestens eine Sollbruchstelle ist insbesondere eine mindestens Materialschwachstelle, beispielsweise mindestens ein Berstelement.

Bei einem Übersteigen einer kritischen Temperatur und/oder eines kritischen Drucks in dem Innenraum der elektrochemischen Zelle bricht und/oder reißt die mindestens eine Sollbruchstelle vorzugsweise.

Günstig kann es sein, wenn das Abdeckelement ein metallisches Material oder umfasst oder aus einem metallischen Material gebildet ist. Dies kann eine Verarbeitung erleichtern.

Beispielsweise ist das Abdeckelement aus einem Blech, beispielsweise aus Aluminium, hergestellt.

Vorteilhaft kann es sein, wenn das erste Polymermaterial eine Härte von ca. 40 Shore D oder mehr, insbesondere von ca. 50 Shore D oder mehr, beispielsweise von ca. 60 Shore D oder mehr, aufweist.

Vorzugsweise weist das erste Polymermaterial eine Härte von ca. 100 Shore D oder weniger, insbesondere von ca. 97 Shore D oder weniger, beispielsweise von ca. 95 Shore D oder weniger, auf.

Insbesondere weist zweite Polymermaterial eine Härte von ca. 40 Shore D oder mehr, insbesondere von ca. 50 Shore D oder mehr, beispielsweise von ca. 60 Shore D oder mehr, auf.

Günstig kann es sein, wenn das zweite Polymermaterial eine Härte von ca. 100 Shore D oder weniger, insbesondere von ca. 97 Shore D oder weniger, beispielsweise von ca. 95 Shore D oder weniger, aufweist.

Die Härte ist insbesondere gemäß DIN EN ISO 868 bestimmt.

Die genannten Härten gelten vorzugsweise auch für das erste Harzmaterial und/oder das zweite Harzmaterial in einem ausgehärteten Zustand.

Vorteilhaft kann es sein, wenn das erste Polymermaterial eine Glasübergangstemperatur von ca. 90°C oder mehr, insbesondere von ca. 95°C oder mehr, beispielsweise von ca. 100°C oder mehr, aufweist.

Günstig kann es sein, wenn das zweite Polymermaterial eine Glasübergangstemperatur von ca. 90°C oder mehr, insbesondere von ca. 95°C oder mehr, beispielsweise von ca. 100°C oder mehr, aufweist.

Die genannten Werte für die Glasübergangstemperatur gelten vorzugsweise auch für das erste Harzmaterial und/oder das zweite Harzmaterial in einem ausgehärteten Zustand.

Vorzugsweise umfasst das erste Harzmaterial und/oder das zweite Harzmaterial eines oder mehrere der folgenden Materialien oder sind daraus gebildet: Epoxidharzmaterial, Phenolharzmaterial, Aminoplastmaterial, Polyurethanmaterial, Silikonmaterial, Polyesterharzmaterial, ABS(AcrylnitrilButadien-Styrol)-Harzmaterial.

Ein Epoxidharzmaterial, beispielsweise ein Epoxidharz, hat sich als besonders vorteilhaft für die Verwendung als erstes Harzmaterial und/oder als zweites Harzmaterial erwiesen. Dieses weist eine optimierte Beständigkeit gegenüber Korrosion auf. Dies kann insbesondere im Hinblick auf einen Kontakt mit einem in dem Innenraum der elektrochemischen Zelle verwendeten Elektrolyten von Vorteil sein.

Insbesondere weisen Epoxidharzmaterialien eine optimierte Gasdichtigkeit auf, weshalb eine Abdichtung mit Epoxidharzmaterialien für eine optimierte Dichtigkeit vorteilhaft ist.

Bei einer Verwendung eines Epoxidharzmaterials als erstes Harzmaterial und/oder zweites Harzmaterial treten vorzugsweise bei einer Aushärtung und/oder Trocknung geringe Volumenschwindungen auf. So kann eine Spaltbildung in dem ersten Vergusselement und/oder zweiten Vergusselement reduziert oder vermieden werden.

Vorzugsweise werden ein-komponentige Harzmaterialien als erstes Harzmaterial und/oder zweites Harzmaterial verwendet.

Vorteilhaft kann es sein, wenn das erste Polymermaterial und/oder das zweite Polymermaterial hochvernetzte Materialien, beispielsweise hochvernetzte Epoxidharzmaterialien, sind.

Vorteilhaft kann es sein, wenn das erste Harzmaterial und/oder das zweite Harzmaterial bei der Herstellung des ersten Vergusselements und/oder des zweiten Vergusselements eine Viskosität von ca. 10² mPa.s oder mehr, insbesondere von ca. 10³ mPa·s oder mehr, aufweisen.

Die Viskosität des ersten Harzmaterials und/oder des zweiten Harzmaterials bei einer Herstellung der elektrochemischen Zelle beträgt vorzugsweise ca. 10⁶ mPa·s oder weniger, insbesondere 10⁵ mPa·s oder weniger.

Eine Befüllung des ersten Verbindungsbereichs mit dem ersten Harzmaterial und/oder des zweiten Verbindungsbereichs mit dem zweiten Harzmaterial findet vorzugsweise bei Umgebungsdruck statt.

Insbesondere um Sauerstoff und/oder Wasserdiffusion in den Innenraum der elektrochemischen Zelle hinein zu vermeiden, kann es günstig sein, wenn das erste Harzmaterial und/oder das zweite Harzmaterial einen oder mehrere Füllstoffe umfassen.

Der eine oder die mehreren Füllstoff können auch eine Diffusion des Elektrolyten aus dem Innenraum der elektrochemischen Zelle heraus minimieren.

Der eine oder die mehreren Füllstoffe sind insbesondere ausgewählt aus einem oder mehreren der folgenden: anorganische Füllstoffe, insbesondere Siliziumoxid, Carbonat, Carbid, insbesondere Siliziumcarbid, Nitrid, insbesondere Metallnitrid, Metalloxid.

Vorteilhaft kann es sein, wenn das Abdeckelement auf einer dem Innenraum zugewandten Innenseite mit einem, insbesondere plattenförmigen, Isolierelement verbunden ist. Das Isolierelement weist insbesondere auf einer dem Abdeckelement zugewandten Seite einen oder mehrere Positioniervorsprünge auf.

Der eine oder die mehreren Positioniervorsprünge greifen vorzugsweise in einen oder mehrere komplementär dazu ausgebildete Positionierrücksprünge des Abdeckelements ein.

Ergänzend oder alternativ kann vorgesehen sein, dass das Isolierelement einen oder mehrere Positionierrücksprünge aufweist. Die einen oder die mehreren Positionierrücksprünge des Isolierelements greifen insbesondere in einen oder mehrere Positioniervorsprünge des Abdeckelements ein.

Insbesondere durch die einen oder mehreren Positioniervorsprünge und/oder die einen oder mehreren Positionierrücksprünge ist vorzugsweise ein Formschluss und/oder Kraftschluss zwischen dem Abdeckelement und dem Isolierelement ausgebildet.

Die einen oder die mehreren Positioniervorsprünge und/oder Positionierrücksprünge blockieren vorzugsweise eine Verschiebung des Abdeckelements relativ zu dem Isolierelement in einer Richtung, welche parallel zu einer Haupterstreckungsebene des Abdeckelements angeordnet ist.

Insbesondere hintergreifen der eine oder die mehreren Positioniervorsprünge des Isolierelements das Abdeckelement in einer parallel zu einer Haupterstreckungsebene des Abdeckelements angeordneten Richtung.

Insbesondere hintergreifen der eine oder die mehreren Positioniervorsprünge des Abdeckelements das Isolierelement in einer parallel zu einer Haupterstreckungsebene des Isolierelements angeordneten Richtung.

Es kann vorgesehen sein, dass der eine oder die mehreren Positioniervorsprünge stiftförmig, beispielsweise als Positionierpins, ausgebildet sind.

Ergänzend oder alternativ zu stiftförmigen Positioniervorsprüngen kann vorgesehen sein, dass ein oder mehrere Positioniervorsprünge einen ovalen oder rechteckförmigen oder linienförmigen Querschnitt aufweisen. Der Querschnitt ist vorzugsweise parallel zu der Haupterstreckungsebene des Abdeckelements genommen.

Günstig kann es sein, wenn eine durchschnittliche Dicke des Isolierelements der elektrochemischen Zelle ca. 1/10 oder weniger, beispielsweise ca. 1/15 oder weniger, einer senkrecht zur Dicke genommenen durchschnittlichen Breite des Isolierelements beträgt. Beispielsweise beträgt die durchschnittliche Dicke des Isolierelements vorzugsweise ca. 1,7 mm oder weniger.

Die Dicke des Isolierelements ist vorzugsweise senkrecht zu einer Haupterstreckungsebene des Isolierelements definiert.

Bei einer "Dicke" handelt es sich im Sinne der vorliegenden Beschreibung und den beigefügten Ansprüchen vorzugsweise um eine Materialstärke, insbesondere um eine durchschnittliche Materialstärke, des entsprechenden Elements (Ausnehmungen und/oder Durchtrittsöffnungen ausgenommen).

Das Isolierelement ist vorzugsweise ein Spritzgusselement und/oder ein Vergusselement.

Es kann vorgesehen sein, dass das Isolierelement mehrteilig, beispielsweise zweiteilig, hergestellt ist und/oder wird.

Vorteilhaft kann es sein, wenn das Isolierelement mehrere, insbesondere regelmäßig angeordnete, Durchtrittsöffnungen aufweist. Beispielsweise sind in sämtlichen Isolierelementteilen mehrere Durchtrittsöffnungen angeordnet. Die Durchtrittsöffnungen sind vorzugsweise zumindest näherungsweise oval oder zumindest näherungsweise rechteckförmig.

Die Durchtrittsöffnungen können in Form von Ausnehmungen ausgebildet sein.

Insbesondere umfasst das Isolierelement ein Ausgleichselement zur Aufnahme von mechanischen Spannungen.

Günstig kann es sein, wenn das Isolierelement ein fünftes Polymermaterial umfasst oder aus einem fünften Polymermaterial gebildet ist.

Das fünfte Polymermaterial ist vorzugsweise ein thermoplastisches Polymermaterial, insbesondere ein elektrolytbeständiges thermoplastisches Polymermaterial.

Ergänzend oder alternativ ist das fünfte Polymermaterial insbesondere ein in einem Spritzgussverfahren verarbeitbares Polymermaterial.

Beispielsweise umfasst das fünfte Polymermaterial eines oder mehrere der folgenden Materialien oder ist daraus gebildet: Polyethylenterephthalat, Polyethylen, Polypropylen, Polybutylenterephthalat.

Es kann vorgesehen sein, dass das Abdeckelement an einer dem Innenraum abgewandten Seite einen ersten vertieften Bereich zur Aufnahme des ersten Vergusselements aufweist.

Ergänzend oder alternativ kann vorgesehen sein, dass das Abdeckelement an einer dem Innenraum abgewandten Seite einen zweiten vertieften Bereich zur Aufnahme des zweiten Vergusselements aufweist.

Der erste vertiefte Bereich und/oder der zweite vertiefte Bereich sind beispielsweise Vergussbecken.

Vorzugsweise sind der erste vertiefte Bereich und/oder der zweite vertiefte Bereich durch Prägung gebildet. Beispielsweise sind der erste vertiefte Bereich und/oder der zweite vertiefte Bereich niedergeprägte Bereiche.

Günstig kann es sein, wenn der erste vertiefte Bereich eine Ausbuchtung aufweist, welche vorzugsweise eine Entgasungsöffnung bei einem Einfüllvorgang des ersten Harzmaterials bildet.

Insbesondere weist der zweite vertiefte Bereich eine Ausbuchtung auf. Die Ausbuchtung bildet vorzugsweise eine Entgasungsöffnung bei einem Einfüllvorgang des zweiten Harzmaterials.

Durch die Ausbildung eines ersten vertieften Bereichs und/oder eines zweiten vertieften Bereichs sind (weitere und/oder separate) Dichtelemente im jeweiligen Verbindungsbereich vorzugsweise entbehrlich.

Vorteilhaft kann es sein, wenn die elektrochemische Zelle ein erstes Dichtelement umfasst, welches das erste Vergusselement auf einer dem Innenraum der elektrochemischen Zelle abgewandten Außenseite des Abdeckelements bezüglich einer Mittelachse des ersten Kontaktelements radial umgibt.

Das erste Dichtelement ist beispielsweise ringförmig geschlossen.

"Ringförmig geschlossen" ist vorzugsweise nicht auf Elemente beschränkt, welche in einem Querschnitt eine Kreisform aufweisen, sondern bezeichnet auch Elemente mit einem ovalen Querschnitt oder einem rechteckförmigen Querschnitt, deren Grundkörper keine freien Enden aufweisen.

Alternativ kann vorgesehen sein, dass das erste Dichtelement mindestens eine Unterbrechung aufweist.

Günstig kann es sein, wenn das erste Dichtelement in radialer Richtung bezüglich der Mittelachse des ersten Kontaktelements mindestens eine Unterbrechung aufweist.

Die mindestens eine Unterbrechung des ersten Dichtelements bildet vorzugsweise mindestens eine Entlüftungsöffnung, durch welche Luft bei einer Einfüllung des ersten Harzmaterials in den ersten Verbindungsbereich entweichen kann.

Unabhängig von der Form des ersten Dichtelements sind vorzugsweise in einem Querschnitt ca. 350° bis ca. 355° eines Kreises, dessen Mittelpunkt die Mittelachse des ersten Kontaktelements bildet, von dem ersten Dichtelement umgeben.

Der Querschnitt ist in einer Einbausituation des ersten Dichtelements vorzugsweise parallel zu einer Haupterstreckungsebene des Abdeckelements genommen.

Ergänzend oder alternativ kann vorgesehen sein, dass das erste Dichtelement in radialer Richtung bezüglich der Mittelachse des ersten Kontaktelements über das erste Zellterminal hinausragt.

Beispielsweise ist durch einen Überstand des ersten Dichtelements, insbesondere in radialer Richtung bezüglich der Mittelachse des ersten Kontaktelements, über das erste Zellterminal eine Entlüftungsöffnung gebildet.

Die Mittelachse des ersten Kontaktelements ist vorzugsweise eine Mittelachse des ersten Zellterminals.

Ergänzend oder alternativ umfasst die elektrochemische Zelle insbesondere ein zweites Dichtelement, welches das zweite Vergusselement auf einer dem Innenraum der elektrochemischen Zelle abgewandten Außenseite des Abdeckelements bezüglich einer Mittelachse des zweiten Kontaktelements radial umgibt.

Das zweite Dichtelement ist beispielsweise ringförmig geschlossen.

Alternativ kann vorgesehen sein, dass das zweite Dichtelement mindestens eine Unterbrechung aufweist.

Günstig kann es sein, wenn das zweite Dichtelement in radialer Richtung bezüglich der Mittelachse des zweiten Kontaktelements mindestens eine Unterbrechung aufweist.

Die mindestens eine Unterbrechung des zweiten Dichtelements bildet vorzugsweise mindestens eine Entlüftungsöffnung, durch welche Luft bei einer Einfüllung des zweiten Harzmaterials in den zweiten Verbindungsbereich entweichen kann.

Unabhängig von der Form des zweiten Dichtelements sind vorzugsweise in einem Querschnitt ca. 350° bis ca. 355° eines Kreises, dessen Mittelpunkt die Mittelachse des zweiten Kontaktelements bildet, von dem zweiten Dichtelement umgeben.

Der Querschnitt ist in einer Einbausituation des zweiten Dichtelements vorzugsweise parallel zu einer Haupterstreckungsebene des Abdeckelements genommen.

Ergänzend oder alternativ kann vorgesehen sein, dass das zweite Dichtelement in radialer Richtung bezüglich der Mittelachse des zweiten Kontaktelements über das zweite Zellterminal hinausragt.

Beispielsweise ist durch einen Überstand des zweiten Dichtelements, insbesondere in radialer Richtung bezüglich der Mittelachse des zweiten Kontaktelements, über das zweite Zellterminal eine Entlüftungsöffnung gebildet.

Die Mittelachse des zweiten Kontaktelements ist vorzugsweise eine Mittelachse des zweiten Zellterminals.

Vorteilhaft kann es sein, wenn sich das erste Dichtelement auf einer dem Innenraum der elektrochemischen Zelle abgewandten Außenseite des Abdeckelements von dem Grundkörper des Abdeckelements weg erstreckt.

Vorzugsweise erstreckt sich das zweite Dichtelement auf einer dem Innenraum der elektrochemischen Zelle abgewandten Außenseite des Abdeckelements von dem Grundkörper des Abdeckelements weg.

Es kann vorgesehen sein, dass das erste Dichtelement und/oder das zweite Dichtelement einen zumindest rechteckförmigen Querschnitt oder einen zumindest näherungsweise ovalen Querschnitt aufweisen. Der Querschnitt ist vorzugsweise parallel zu der Haupterstreckungsebene des Abdeckelements genommen.

Alternativ kann vorgesehen sein, dass das erste Dichtelement und/oder das zweite Dichtelement einen oder mehrere gewölbte Abschnitte aufweist.

Ergänzend oder alternativ kann vorgesehen sein, dass das erste Dichtelement und/oder das zweite Dichtelement einen oder mehrere Vorsprünge aufweisen, welche sich in einen von dem jeweiligen Dichtelement umgebenen Innenraum hineinerstrecken.

Der eine oder die mehreren Vorsprünge bilden insbesondere Einbuchtungen in dem jeweiligen Verbindungsbereich und/oder sind von dem Vergusselement umschlossen.

Es kann ergänzend oder alternativ vorgesehen sein, dass das erste Dichtelement und/oder das zweite Dichtelement einen oder mehrere Vorsprünge aufweisen, welche von einem den jeweiligen Verbindungsbereich radial umgebenden Grundkörper beabstandet angeordnet sind. Der eine oder die mehreren Vorsprünge sind insbesondere sockelförmig und/oder quaderförmig ausgebildet.

Beispielsweise weisen das erste Dichtelement und/oder das zweite Dichtelement zumindest bereichsweise einen wellenförmigen und/oder zackenförmigen Querschnitt auf.

Wölbung(en), eine Wellenform und/oder Zackenform des Querschnitts des ersten Dichtelements und/oder des zweiten Dichtelements sowie ein oder mehrere Vorsprünge können eine Stabilität einer Kontaktfläche zwischen dem ersten Dichtelement und dem ersten Vergusselement und/oder einer Kontaktfläche zwischen dem zweiten Dichtelement und dem zweiten Vergusselement erhöhen.

Insbesondere bei der Herstellung des ersten Vergusselements und/oder des zweiten Vergusselements kann so eine Haftung des ersten Harzmaterials an dem ersten Dichtelement und/oder eine Haftung des zweiten Harzmaterials an dem zweiten Dichtelement optimiert sein.

Es kann vorgesehen sein, dass das erste Zellterminal und das erste Dichtelement bezüglich einer radialen Richtung der Mittelachse des ersten Kontaktelements bündig zueinander abschließen.

Ergänzend oder alternativ kann vorgesehen sein, dass das zweite Zellterminal und das zweite Dichtelement bezüglich einer radialen Richtung der Mittelachse des zweiten Kontaktelements bündig zueinander abschließen.

Alternativ zu einem bündigen Abschluss kann vorgesehen sein, dass das erste Zellterminal an einer oder mehreren Seiten seitlich über das erste Dichtelement hinausragt und/oder dass das zweite Zellterminal an einer oder mehreren Seiten seitlich über das zweite Dichtelement hinausragt.

Alternativ zu den genannten Alternativen kann - wie bereits beschrieben -vorgesehen sein, dass das erste Dichtelement seitlich über das erste Zellterminal hinausragt und/oder dass das zweite Dichtelement seitlich über das zweite Zellterminal hinausragt.

Ein seitliches Hinausragen des ersten Dichtelements und/oder des zweiten Dichtelements über das jeweilige Zellterminal kann ausgebildet werden, indem ein erstes Zellterminal und/oder ein zweites Zellterminal verwendet werden, welche kleiner sind als von dem ersten Dichtelement und/oder dem zweiten Dichtelement umgebene Flächen.

Durch das seitliche Hinausragen der Dichtelemente über die Zellterminals sind vorzugsweise Entlüftungsöffnungen gebildet, durch welche bei einer Einfüllung des ersten Harzmaterials und/oder zweiten Harzmaterials Luft entweichen kann.

"Seitlich" ist vorzugsweise auf eine Orientierung der elektrochemischen Zelle bezogen, in welcher das erste und das zweite Zellterminal oben sind und eine dem Abdeckelement abgewandte Bodenseite des Gehäuses unten angeordnet ist.

Vorteilhaft kann es sein, wenn zwischen dem ersten Dichtelement und dem ersten Zellterminal auf einer dem Innenraum abgewandten Seite des Abdeckelements eine Kavität zur Aufnahme des ersten Harzmaterials gebildet ist.

Insbesondere ist durch das zweite Dichtelement und das zweite Zellterminal auf einer dem Innenraum abgewandten Seite des Abdeckelements eine Kavität zur Aufnahme des zweiten Harzmaterials gebildet.

Günstig kann es sein, wenn das erste Dichtelement eine elektrische und/oder thermische und/oder räumliche Trennung und/oder Isolierung zwischen dem ersten Zellterminal und dem Abdeckelement bildet.

Ergänzend oder alternativ kann vorgesehen sein, dass das zweite Dichtelement eine elektrische und/oder thermische und/oder räumliche Trennung und/oder Isolierung zwischen dem zweiten Zellterminal und dem Abdeckelement bildet.

Beispielsweise bildet das erste Dichtelement eine Auflage für das erste Zellterminal und/oder das zweite Dichtelement bildet eine Auflage für das zweite Zellterminal.

Vorzugsweise ist das erste Dichtelement in einem Druckverfahren auf den Grundkörper des Abdeckelements, insbesondere in Form einer Dichtraupe, aufgebracht.

Das zweite Dichtelement ist beispielsweise in einem Druckverfahren auf den Grundkörper des Abdeckelements, insbesondere in Form einer Dichtraupe, aufgebracht.

Beispielsweise sind das erste Dichtelement und/oder das zweite Dichtelement in einem Musterdruckverfahren, beispielsweise in einem Siebdruckverfahren und/oder Schablonendruckverfahren und/oder Tampondruckverfahren, auf den Grundkörper des Abdeckelements aufgebracht.

Alternativ kann vorgesehen sein, dass das erste Dichtelement separat hergestellt ist und/oder ein separat handhabbares Bauteil ist.

Insbesondere ist das erste Dichtelement ein Einlegeteil, beispielsweise ein Kunststoffrahmen.

In Ausführungsformen mit einem separat hergestellten ersten Dichtelement wird dieses vorzugsweise in einen komplementär hierzu ausgebildeten Aufnahmeraum in dem Abdeckelement und/oder einen komplementär zu dem ersten Dichtelement ausgebildeten Aufnahmeraum in dem ersten Zellterminal eingelegt. So kann eine Positionierung erfolgen.

Ergänzen oder alternativ zu einem separat hergestellten ersten Dichtelement kann vorgesehen sein, dass das zweite Dichtelement separat hergestellt ist und/oder ein separat handhabbares Bauteil ist.

Insbesondere ist das zweite Dichtelement ein Einlegeteil, beispielsweise ein Metallrahmen.

In Ausführungsformen mit einem separat hergestellten zweiten Dichtelement wird dieses vorzugsweise in einen komplementär hierzu ausgebildeten Aufnahmeraum in dem Abdeckelement und/oder einen komplementär zu dem zweiten Dichtelement ausgebildeten Aufnahmeraum in dem zweiten Zellterminal eingelegt. So kann eine Positionierung erfolgen.

Es kann vorgesehen sein, dass das erste Dichtelement ein drittes Polymermaterial umfasst oder daraus gebildet ist.

Das zweite Dichtelement umfasst vorzugsweise ein viertes Polymermaterial oder ist daraus gebildet.

Das dritte Polymermaterial und das vierte Polymermaterial sind insbesondere voneinander verschieden.

Alternativ sind das dritte Polymermaterial und das vierte Polymermaterial identisch.

Das dritte Polymermaterial und/oder das vierte Polymermaterial umfassen vorzugsweise eines oder mehrere der folgenden Materialien oder sind daraus gebildet: ein duroplastisches Polymermaterial, ein thermoplastisches Polymermaterial, ein elastomeres Polymermaterial oder Mischungen daraus.

Beispielsweise umfassen das dritte Polymermaterial und/oder das vierte Polymermaterial eines oder mehrere der folgenden Polymermaterialien oder sind daraus gebildet: Polyolefin, insbesondere Polypropylen und/oder Polyethylen, Polyester, insbesondere Polyethylenterephthalat und/oder Polybutylenterephthalat, Polyamid, Polyimid, Copolyamid, Polyamid-Elastomer, Polyether, insbesondere Epoxidharze, Polyurethan, Polyurethan-Acrylat, Polyvinylchlorid, Polystyrol, Polymethylmethacrylat, Acryl-Butadien-Styrol, Synthesekautschuk, insbesondere Ethylen-Propylen-Dien-Kautschuk, Polycarbonat, Polyethersulfon, Polyoxymethylen, Polyetheretherketon, Polytetrafluorethylen, Silikon, insbesondere Silikonkautschuk und/oder silikonbasiertes Elastomer.

Bevorzugt sind thermoplastische Polymermaterialien für das dritte Polymermaterial und/oder das vierte Polymermaterial. Beispielsweise werden Hotmelt-Materialien für das dritte Polymermaterial und/oder das vierte Polymermaterial verwendet.

Das dritte Polymermaterial und/oder das vierte Polymermaterial härten vorzugsweise unter Bildung des ersten Dichtelements bzw. des zweiten Dichtelements aus.

Es kann vorgesehen sein, dass das dritte Polymermaterial und/oder das vierte Polymermaterial einen oder mehrere Füllstoffe umfassen.

Der eine oder die mehreren Füllstoffe sind insbesondere ausgewählt aus einem oder mehreren der folgenden: anorganische Füllstoffe, insbesondere Siliziumoxid, Carbonat, Carbid, insbesondere Siliziumcarbid, Nitrid, insbesondere Metallnitrid, Metalloxid.

Durch die Verwendung eines oder mehrerer Füllstoffe ist vorzugsweise ein Setzungsverhalten des dritten Polymermaterials und/oder des vierten Polymermaterials optimiert.

Es kann vorgesehen sein, dass das vierte Polymermaterial ein oder mehrere Leitadditive umfasst. Das eine oder die mehreren Leitadditive sind insbesondere ausgewählt aus einem oder mehreren der folgenden: Kohlenstoffmaterialien, insbesondere Leitruß, Graphit, Graphen, Kohlenstoffnanoröhren, Kohlenstofffasern und/oder Kohlenstoffnanozwiebeln, partikuläre metallische Materialien, insbesondere Metall-Pulver, elektrisch leitfähige keramische Materialien, insbesondere Nitride und/oder Carbide, elektrisch leitfähige Polymere, insbesondere trans-Polyacetylen, Polypyrrol, Polyanilin, Poly(-phenylen), Polythiophen und/oder Polystyrol dotiertes Poly-(3,4-ethylendioxythiophen) (PEDOT: PSS).

Bevorzugte partikuläre metallische Materialien umfassen vorzugsweise Aluminium, Kupfer, Titan, Eisen, Silber oder sind daraus gebildet.

Insbesondere umfassen die partikulären metallische Materialien Legierungen der genannten Materialien oder sind daraus gebildet.

Unter "elektrisch leitfähig" ist insbesondere eine elektrische Leitfähigkeit von 10⁻¹ S/m oder mehr, insbesondere 10⁶ S/m oder mehr, zu verstehen.

Vorzugsweise umfasst das vierte Polymermaterial in Ausführungsformen, in welchen ein Umschnappelement ausgebildet ist, ein oder mehrere Leitadditive.

Es kann vorgesehen sein, dass das erste Dichtelement einen Bestandteil des Abdeckelements bildet und insbesondere durch eine, insbesondere ringförmig geschlossene oder mindestens eine Unterbrechung aufweisende, Erhebung des Abdeckelements gebildet ist.

Die Erhebung des Abdeckelements, welche das erste Dichtelement bildet, erstreckt sich vorzugsweise längs einer von dem Innenraum der elektrochemischen Zelle weg weisenden Richtung von dem Grundkörper des Abdeckelements weg.

Ergänzend oder alternativ kann vorgesehen sein, dass das zweite Dichtelement der elektrochemischen Zelle einen Bestandteil des Abdeckelements bildet und insbesondere durch eine, beispielsweise ringförmig geschlossene oder mindestens eine Unterbrechung aufweisende, Erhebung des Abdeckelements gebildet ist.

Die Erhebung des Abdeckelements, welche das zweite Dichtelement bildet, erstreckt sich insbesondere längs einer von dem Innenraum der elektrochemischen Zelle weg weisenden Richtung von dem Grundkörper des Abdeckelements weg.

Beispielsweise sind das erste Dichtelement und/oder das zweite Dichtelement durch Einprägungen und/oder Sicken in dem Abdeckelement gebildet. Dabei wird das Abdeckelement beispielsweise von einer in einem montierten Zustand dem Innenraum zugewandten Innenseite her bearbeitet.

Alternativ zu einer vollständigen Ausbildung des ersten Dichtelements durch Einprägungen und/oder Sicken kann vorgesehen sein, dass das erste Dichtelement sowohl mindestens eine Dichtraupe als auch mindestens eine Sicke umfasst oder daraus gebildet ist.

Beispielsweise ist das erste Dichtelement bereichsweise aus einer oder mehreren Dichtraupen und bereichsweise aus einer oder mehreren Sicken gebildet.

Alternativ zu einer vollständigen Ausbildung des zweiten Dichtelements durch Einprägungen und/oder Sicken kann vorgesehen sein, dass das zweite Dichtelement sowohl mindestens eine Dichtraupe als auch mindestens eine Sicke umfasst oder daraus gebildet ist.

Beispielsweise ist das zweite Dichtelement bereichsweise aus einer oder mehreren Dichtraupen und bereichsweise aus einer oder mehreren Sicken gebildet.

Vorzugsweise besteht das zweite Dichtelement teilweise aus mindestens einer Sicke aus einem metallischen Material und teilweise aus mindestens einer Dichtraupe aus einem vierten Polymermaterial. Das vierte Polymermaterial ist gemäß dieser Ausführungsform vorzugsweise elektrisch isolierend. Die Sicke setzt das Abdeckelement vorzugsweise auf Potential und/oder ein Strom wird in einem Fehlerfall stärker limitiert, insbesondere da durch die teilweise Ausbildung des zweiten Dichtelements aus einem elektrisch isolierenden Polymermaterial eine Kontaktfläche zwischen dem Gehäuse und dem zweiten Zellterminal minimiert ist.

In Ausführungsformen, in welchen das erste Dichtelement und/oder das zweite Dichtelement durch Erhebungen des Abdeckelements gebildet sind, bilden komplementär dazu ausgebildete Einbuchtungen des Abdeckelements auf einer dem Innenraum zugewandten Innenseite des Abdeckelements beispielsweise Positionierrücksprünge.

Es sind dann vorzugsweise komplementär dazu ausgebildete Positioniervorsprünge in dem Isolierelement ausgebildet, welche insbesondere eine Positionierung des Isolierelements relativ zu dem Abdeckelement ermöglichen.

Es kann vorgesehen sein, dass das erste Kontaktelement und/oder das zweite Kontaktelement als Einlegeteile in dem Isolierelement ausgebildet sind.

So ist insbesondere ein Formschluss zwischen dem ersten Kontaktelement und dem Isolierelement und/oder ein Formschluss zwischen dem zweiten Kontaktelement und dem Isolierelement ausgebildet. Dies bildet beispielsweise einen Auslaufschutz und/oder dichtet gegenüber dem ersten Harzmaterial und/oder dem zweiten Harzmaterial ab.

Das Isolierelement wird vorzugsweise an das erste Kontaktelement und/oder das zweite Kontaktelement angespritzt.

Günstig kann es sein, wenn ein Kontaktbereich zwischen dem ersten Zellterminal und dem ersten Dichtelement und/oder ein Kontaktbereich zwischen dem zweiten Zellterminal und dem zweiten Dichtelement ausgebildet ist.

Es kann vorgesehen sein, dass das erste Dichtelement und/oder das zweite Dichtelement, insbesondere in Ausführungsformen, in welchen diese einen Bestandteil des Abdeckelements bilden, eine behandelte Oberfläche aufweisen und/oder einer Oberflächenbehandlung unterzogen werden.

Beispielsweise ist und/oder wird das zweite Dichtelement in einem Kontaktbereich mit dem zweiten Zellterminal eloxiert und/oder weist eine Oberfläche mit einer erhöhten Rauigkeit auf.

Eine Oberfläche mit einer erhöhten Rauigkeit kann beispielsweise mittels Sandstrahlen erzeugt sein und/oder werden.

Es kann vorgesehen sein, dass das zweite Kontaktelement in einem Bereich einer zweiten Öffnung des Abdeckelements an dem Abdeckelement anliegt und/oder in direktem stofflichem und/oder elektrischem Kontakt damit steht. So kann das Abdeckelement auf eine Potential des zweiten Zellterminals gebracht werden.

Vorteilhaft kann es sein, dass das erste Kontaktelement mindestens zwei Kontaktelementbauteile umfasst, welche insbesondere voneinander verschiedene metallische Materialien umfassen oder daraus gebildet sind.

Beispielsweise umfasst ein erstes Kontaktelementbauteil des ersten Kontaktelements ein erstes metallisches Material, beispielsweise Aluminium, oder ist daraus gebildet und ein zweites Kontaktelementbauteil des ersten Kontaktelements umfasst ein zweites metallisches Material, beispielsweise Kupfer, oder ist daraus gebildet.

Die mindestens zwei Kontaktelementbauteile des ersten Kontaktelements sind vorzugsweise in dem ersten Verbindungsbereich stoffschlüssig, beispielsweise mittels Laserschweißens und/oder Walzplattierens, miteinander verbunden.

Alternativ kann vorgesehen sein, dass die mindestens zwei Kontaktelementbauteile des ersten Kontaktelements außerhalb des ersten Verbindungsbereichs, beispielsweise auf einer dem elektrochemischen Element zugewandten Seite, stoffschlüssig, insbesondere mittels Laserschweißens und/oder Walzplattierens, miteinander verbunden sind.

Es kann vorgesehen sein, dass das erste Kontaktelement ein drittes Kontaktelementbauteil umfasst, welches beispielsweise mit dem ersten Kontaktelementbauteil und/oder mit dem zweiten Kontaktelementbauteil verbunden ist.

Ergänzend oder alternativ kann vorgesehen sein, dass das zweite Kontaktelement mindestens zwei Kontaktelementbauteile umfasst.

Die mindestens zwei Kontaktelementbauteile des zweiten Kontaktelements sind insbesondere in dem zweiten Verbindungsbereich stoffschlüssig, insbesondere mittels Laserschweißens und/oder Walzplattierens, miteinander verbunden.

Alternativ kann vorgesehen sein, dass die unterschiedlichen Kontaktelementbauteile des zweiten Kontaktelements außerhalb des zweiten Verbindungsbereichs, beispielsweise auf einer dem elektrochemischen Element zugewandten Seite, stoffschlüssig, insbesondere mittels Laserschweißens und/oder Walzplattierens, miteinander verbunden sind.

In Ausführungsformen, in welchen das zweite Kontaktelement einen ersten Kontaktelementabschnitt und einen zweiten Kontaktelementabschnitt aufweist, sind diese vorzugsweise aus demselben metallischen Material gebildet oder umfassen dasselbe metallische Material. Als metallisches Material für das zweite Kontaktelement ist Aluminium bevorzugt.

Ergänzend zu einem ersten Kontaktelementbauteil und einem zweiten Kontaktelementbauteil des zweiten Kontaktelements kann vorgesehen sein, dass das zweite Kontaktelement ein drittes Kontaktelementbauteil umfasst, welches insbesondere stoffschlüssig mit dem ersten Kontaktelementbauteil und/oder mit dem zweiten Kontaktelementbauteil des zweiten Kontaktelements verbunden ist. Das stoffschlüssige Verbinden erfolgt beispielsweise mittels Laserschweißens und/oder Walzplattierens.

Das erste Kontaktelement und/oder das zweite Kontaktelement sind vorzugsweise aus einem Flachmaterial gefertigt.

Das erste Kontaktelement und/oder das zweite Kontaktelement sind vorzugsweise in einem Querschnitt der zumindest näherungsweise in Form eines umgedrehten T oder in L-Form ausgebildet. Der Querschnitt ist vorzugsweise parallel zu einer Hauptseite der elektrochemischen Zelle genommen.

Vorzugsweise weist das zweite Kontaktelement mindestens ein Sicherungselement auf. Das mindestens eine Sicherungselement ist insbesondere durch einen Bereich einer lokal reduzierten Querschnittsfläche des zweiten Kontaktelements gebildet.

Die Querschnittsfläche ist vorzugsweise senkrecht zu einer Haupterstreckungsrichtung und/oder senkrecht zu einer Mittelachse des zweiten Kontaktelements definiert.

Das mindestens eine Sicherungselement ist vorzugsweise mindestens eine Schmelzsicherung.

Günstig kann es sein, wenn das mindestens eine Sicherungselement in dem zweiten Verbindungsbereich angeordnet ist.

Das mindestens eine Sicherungselement bildet insbesondere einen Überstromschutz, welcher bei einem Übersteigen eines kritischen Stroms und/oder einer kritischen Spannung schmilzt.

Alternativ zu einer Anordnung des mindestens einen Sicherungselements in dem zweiten Verbindungsbereich, kann vorgesehen sein, dass das mindestens eine Sicherungselement außerhalb des zweiten Verbindungsbereichs angeordnet ist.

Beispielsweise ist das mindestens eine Sicherungselement ein Bestandteil des zweiten Verbindungsleiters.

Es kann vorgesehen sein, dass das mindestens eine Sicherungselement mit einem Polymermaterial ummantelt ist, wobei hier vorzugsweise ein elektrolytbeständiges thermoplastisches Polymermaterial verwendet wird.

Günstig kann es sein, wenn das erste Kontaktelement eine erste Harzmaterialeinfüllöffnung zur Einfüllung des ersten Harzmaterials in den ersten Verbindungsbereich aufweist.

Vorzugsweise weist das zweite Kontaktelement eine zweite Harzmaterialeinfüllöffnung zur Einfüllung des zweiten Harzmaterials in den zweiten Verbindungsbereich auf.

Vorteilhaft kann es sein, wenn der erste Verbindungsleiter eine durchschnittliche Dicke aufweist, welche ca. 1/10 oder weniger einer senkrecht zur Dicke genommenen durchschnittlichen Breite des ersten Verbindungsleiters beträgt.

Vorzugsweise beträgt die durchschnittliche Dicke des ersten Verbindungsleiters ca. 0,8 mm oder weniger, beispielsweise ca. 0,7 mm oder weniger.

Günstig kann es sein, wenn der zweite Verbindungsleiter eine durchschnittliche Dicke aufweist, welche ca. 1/10 oder weniger einer senkrecht zur Dicke genommenen durchschnittlichen Breite des zweiten Verbindungsleiters beträgt.

Vorzugsweise beträgt die durchschnittliche Dicke des zweiten Verbindungsleiters ca. 0,8 mm oder weniger, beispielsweise ca. 0,7 mm oder weniger.

Durch die genannten durchschnittlichen Dicken des ersten Verbindungsleiters und/oder des zweiten Verbindungsleiters ist vorzugsweise eine Materialprägung bei der Herstellung der Verbindungsleiter entbehrlich.

Der erste Verbindungsleiter und/oder der zweite Verbindungsleiter weisen vorzugsweise jeweils eine homogene Dicke über deren gesamte Erstreckung auf.

Durch die vergleichsweise geringe durchschnittliche Dicke des ersten Verbindungsleiters und/oder des zweiten Verbindungsleiters kann vorzugsweise Material eingespart werden. Hierdurch können Kosten für die entsprechenden Elemente reduziert werden.

Gemäß einer bevorzugten Ausführungsform weist das erste Kontaktelement in einem ersten Fügebereich eine durchschnittliche Dicke auf, welche ca. 2/10 oder weniger, insbesondere ca. 1/10 oder weniger, einer senkrecht zur Dicke genommenen durchschnittlichen Breite des ersten Kontaktelements beträgt.

Die durchschnittliche Dicke des ersten Kontaktelements beträgt im ersten Fügebereich vorzugsweise ca. 0,8 mm oder weniger, beispielsweise ca. 0,7 mm oder weniger.

Der erste Fügebereich ist vorzugsweise ein Bereich, in welchem das erste Kontaktelement und das erste Zellterminal miteinander verbunden sind. Insbesondere ist das erste Kontaktelement im ersten Fügebereich durch eine Durchtrittsöffnung des ersten Zellterminals durchgeführt.

Vorteilhaft kann es sein, wenn das zweite Kontaktelement in einem zweiten Fügebereich eine durchschnittliche Dicke aufweist, welche ca. 2/10 oder weniger, insbesondere ca. 1/10 oder weniger, einer senkrecht zur Dicke genommenen durchschnittlichen Breite des zweiten Kontaktelements beträgt.

Vorzugsweise beträgt die durchschnittliche Dicke des zweiten Kontaktelements im zweiten Fügebereich ca. 0,8 mm oder weniger, beispielsweise ca. 0,7 mm oder weniger.

Der zweite Fügebereich ist vorzugsweise ein Bereich, in welchem das zweite Kontaktelement und das zweite Zellterminal miteinander verbunden sind. Beispielsweise ist das zweite Kontaktelement im zweiten Fügebereich durch eine Durchtrittsöffnung der zweiten Zellterminals geführt.

Günstig kann es sein, wenn eine durchschnittliche Breite des ersten Kontaktelements in einem ersten Fügebereich mit dem ersten Zellterminal ca. ½ oder geringer, insbesondere 2/5 oder geringer, als eine durchschnittliche Breite des ersten Zellterminals in einer parallel zur Breite des ersten Kontaktelements genommenen Richtung ist.

Vorteilhaft kann es sein, wenn die durchschnittliche Breite des ersten Kontaktelements im ersten Fügebereich ca. 10,0 mm oder weniger, beispielsweise ca. 9,5 mm oder weniger, beträgt.

Vorzugsweise ist eine durchschnittliche Breite des zweiten Kontaktelements in einem zweiten Fügebereich mit dem zweiten Zellterminal ca. ½ oder geringer, insbesondere 2/5 oder geringer, als eine durchschnittliche Breite des zweiten Zellterminals in einer parallel zur Breite des zweiten Kontaktelements genommenen Richtung.

Insbesondere beträgt die durchschnittliche Breite des zweiten Kontaktelements im zweiten Fügebereich ca. 10,0 mm oder weniger, beispielsweise ca. 9,5 mm oder weniger.

Die durchschnittliche Dicke des ersten Kontaktelements im ersten Fügebereich ist vorzugsweise im Wesentlichen identisch mit einer durchschnittlichen Länge der Durchtrittsöffnung des ersten Zellterminals im ersten Fügebereich.

Insbesondere ist die durchschnittliche Dicke des zweiten Kontaktelements im zweiten Fügebereich im Wesentlichen identisch mit einer durchschnittlichen Länge der Durchtrittsöffnung des zweiten Zellterminals im zweiten Fügebereich.

Vorzugsweise entspricht die durchschnittliche Breite des ersten Kontaktelements im ersten Fügebereich im Wesentlichen einer durchschnittlichen Breite der Durchtrittsöffnung des ersten Zellterminals.

Insbesondere entspricht die durchschnittliche Breite des zweiten Kontaktelements im zweiten Fügebereich im Wesentlichen einer durchschnittlichen Breite der Durchtrittsöffnung des zweiten Zellterminals.

Vorteilhaft kann es sein, wenn der erste Verbindungsleiter und das erste Kontaktelement einteilig ausgebildet sind und/oder wenn der zweite Verbindungsleiter und das zweite Kontaktelement einteilig ausgebildet sind.

Das erste Kontaktelement ist vorzugsweise in einem parallel zu einer Haupterstreckungsebene des Abdeckelements genommenen Querschnitt zumindest näherungsweise rechteckförmig ausgebildet. Insbesondere ist das zweite Kontaktelement in einem parallel zur Haupterstreckungsebene des Abdeckelements genommenen Querschnitt zumindest näherungsweise rechteckförmig ausgebildet.

Es kann vorgesehen sein, dass eine durchschnittliche Dicke des Abdeckelements in einem senkrecht zu dessen Haupterstreckungsebene genommenen Querschnitt ca. 1/10 oder weniger, beispielsweise ca. 1/20 oder weniger, einer durchschnittlichen Breite des Abdeckelements senkrecht zu dessen Dicke beträgt. Beispielsweise beträgt die durchschnittliche Dicke des Abdeckelements ca. 1,9 mm oder weniger, beispielsweise ca. 1,8 mm oder weniger.

Durch die zuvor genannten Abmessungen kann die elektrochemische Zelle vergleichsweise kostengünstig hergestellt werden.

Es kann vorgesehen sein, dass die elektrochemische Zelle mindestens ein Umschnappelement umfasst, welches bei einem Übersteigen eines kritischen Drucks und/oder einer kritischen Temperatur in dem Innenraum der elektrochemischen Zelle von einem Ruhezustand in einen Arbeitszustand nach außen umlenkbar ist und/oder umgelenkt wird, und so einen elektrischen Kontakt zwischen dem Abdeckelement und dem ersten Zellterminal herstellt.

Durch das Umlenken des mindestens einen Umschnappelements von dem Ruhezustand in den Arbeitszustand ist insbesondere eine elektrisch leitende Verbindung zwischen dem Abdeckelement und dem ersten Zellterminal, welches zunächst eine der Polarität des Abdeckelements entgegengesetzte Polarität aufweist, hergestellt.

Das Umschnappelement kann insbesondere in einen Gehäusedeckel des Gehäuses der elektrochemischen Zelle eingeschweißt werden.

Das Umschnappelement wird bei einem vorgegebenen Zellinnendruck nach außen ausgelenkt und stellt dadurch eine elektrisch leitende Verbindung zwischen dem Abdeckelement und dem ersten Zellterminal her.

Der erhöhte Zellinnendruck entsteht insbesondere durch elektrochemische Prozesse und durch die Wärmeentwicklung beim Überladen der elektrochemischen Zelle. Da das Abdeckelement auf dem entgegengesetzten elektrischen Potential, beispielsweise auf dem Potential des zweiten Zellterminals, liegt, wird die elektrochemische Zelle durch den Kontakt des Umschnappelements mit dem ersten Zellterminal kurzgeschlossen.

Durch den Kurzschluss kann beispielsweise das mindestens eine Sicherungselement, beispielsweise mindestens eine Schmelzsicherung, ausgelöst werden.

Nach Auslösen des mindestens einen Sicherungselements besteht keine elektrische Verbindung mehr zwischen dem Zellterminal und dem elektrochemischen Element im Innenraum elektrochemischen Zelle, sodass die elektrochemische Zelle nicht weiter geladen werden kann. Dies verhindert ein weiteres Überladen der Zelle.

Vorzugsweise ist das erste Kontaktelement stoffschlüssig und/oder formschlüssig und/oder kraftschlüssig mit dem Isolierelement der elektrochemischen Zelle verbunden.

Ergänzend oder alternativ kann vorgesehen sein, dass das zweite Kontaktelement stoffschlüssig und/oder formschlüssig und/oder kraftschlüssig mit dem Isolierelement der elektrochemischen Zelle verbunden ist.

Beispielsweise hintergreifen das erste Kontaktelement und/oder das zweite Kontaktelement das Isolierelement in einer senkrecht zu einer Haupterstreckungsebene des Abdeckelements angeordneten Richtung.

Günstig kann es sein, wenn das Isolierelement auf einer dem Innenraum zugewandten Innenseite des Abdeckelements mit dem Abdeckelement verbunden ist.

Das Isolierelement weist vorzugsweise benachbart zu dem ersten Verbindungsbereich und/oder benachbart zu dem zweiten Verbindungsbereich jeweils mindestens eine Einfüllöffnung zur Einfüllung des ersten Harzmaterials in den ersten Verbindungsbereich und/oder zur Einfüllung des zweiten Harzmaterials in den zweiten Verbindungsbereich auf.

Dies kann eine Einfüllung des ersten Harzmaterials und/oder des zweiten Harzmaterials erleichtern und/oder ermöglichen.

Es kann vorgesehen sein, dass mit der mindestens einen Einfüllöffnung mindestens ein Einfüllkanal verbunden ist, welcher insbesondere die mindestens eine Einfüllöffnung mit einer Vertiefung des Isolierelements verbindet, welche den ersten Verbindungsbereich bzw. den zweiten Verbindungsbereich begrenzt.

Vorteilhaft kann es sein, wenn zwei Einfüllkanäle ausgebildet sind, welche einen zumindest näherungsweise Y-förmigen Querschnitt aufweisen und jeweils in einer Vertiefung des Isolierelements münden.

Günstig kann es sein, wenn das Isolierelement der elektrochemischen Zelle mehrere Vertiefungen zur Aufnahme des ersten Vergusselements und/oder des zweiten Vergusselements aufweist, wobei in den Vertiefungen insbesondere jeweils ein oder mehrere Strömungsleitelemente zur Verteilung des ersten Harzmaterials und/oder des zweiten Harzmaterials während der Herstellung der elektrochemischen Zelle angeordnet sind.

Die Vertiefungen sind beispielsweise taschenförmig ausgebildet.

Die Vertiefungen bilden in einem Zustand, in welchem das Isolierelement mit dem Abdeckelement verbunden ist, vorzugsweise einen Hohlraum zur Aufnahme des ersten Harzmaterials und/oder des zweiten Harzmaterials.

Das eine oder die mehreren Strömungsleitelemente weisen vorzugsweise einen zumindest näherungsweise rechteckförmigen Querschnitt, einen zumindest näherungsweise ovalen Querschnitt oder einen zumindest näherungsweise spiralförmigen Querschnitt auf.

Alternativ ist ein Querschnitt des einen oder der mehreren Strömungsleitelemente V-förmig.

Der Querschnitt ist vorzugsweise parallel zu einer Haupterstreckungsebene des Isolierelements genommen.

Optimierte Eigenschaften werden vorzugsweise erreicht, wenn in dem ersten Verbindungsbereich und/oder dem zweiten Verbindungsbereich:
- ein Abstand zwischen dem Abdeckelement und dem ersten Zellterminal in einer parallel zu der Mittelachse des ersten Kontaktelements angeordneten Richtung und/oder ein Abstand zwischen dem Abdeckelement und dem zweiten Zellterminal in einer parallel zu der Mittelachse des zweiten Kontaktelements angeordneten Richtung bei 0,05 mm oder mehr liegt; und/oder
- ein Abstand zwischen dem ersten Kontaktelement und dem Abdeckelement im Bereich der ersten Öffnung des Abdeckelements und/oder ein Abstand zwischen dem zweiten Kontaktelement und dem Abdeckelement im Bereich der zweiten Öffnung des Abdeckelements bei 0,05 mm oder mehr liegt; und/oder
- ein Verhältnis zwischen dem erstgenannten Abstand und einer Dicke des Abdeckelements in einem Bereich von ca. 0,005 und 1 liegt.

Die vorliegende Erfindung betrifft ferner ein elektrochemisches System, umfassend eine oder mehrere erfindungsgemäße elektrochemische Zellen.

Das erfindungsgemäße elektrochemische System weist vorzugsweise eines oder mehrere der im Zusammenhang mit der erfindungsgemäßen elektrochemischen Zelle beschriebenen Merkmale und/oder einen oder mehrere der im Zusammenhang mit der erfindungsgemäßen elektrochemischen Zelle beschriebenen Vorteile auf.

Die vorliegende Erfindung betrifft ferner ein Verfahren zur Herstellung einer elektrochemischen Zelle, insbesondere einer erfindungsgemäßen elektrochemischen Zelle.

Das Verfahren umfasst vorzugsweise das Bereitstellen eines Abdeckelements, welches eine erste Öffnung und/oder eine zweite Öffnung umfasst.

Die erste Öffnung ist beispielsweise zumindest eine Anodenöffnung.

Die zweite Öffnung ist beispielsweise zumindest eine Kathodenöffnung.

Alternativ kann vorgesehen sein, dass die erste Öffnung zumindest eine Kathodenöffnung ist und/oder dass die zweite Öffnung zumindest eine Anodenöffnung ist.

Vorzugsweise wird ein erstes Kontaktelement, welches insbesondere mit einem ersten Zellterminal verbunden oder verbindbar ist, in der ersten Öffnung positioniert.

Ergänzend oder alternativ wird ein zweites Kontaktelement, welches insbesondere mit einem zweiten Zellterminal verbunden oder verbindbar ist, in der zweiten Öffnung positioniert.

Es wird vorzugsweise ein erstes Harzmaterial in einen von dem Abdeckelement, dem ersten Kontaktelement und insbesondere dem ersten Zellterminal umgebenen ersten Verbindungsbereich in einem Gießverfahren eingefüllt.

Ergänzend oder alternativ wird ein zweites Harzmaterial in einen von dem Abdeckelement, dem zweiten Kontaktelement und insbesondere dem zweiten Zellterminal umgebenen zweiten Verbindungsbereich in einem Gießverfahren eingefüllt.

Das Verfahren umfasst vorzugsweise ferner ein Trocknen und/oder Aushärten des ersten Harzmaterials unter Bildung eines ersten Vergusselements und/oder ein Trocknen und/oder Aushärten des zweiten Harzmaterials unter Bildung des zweiten Vergusselements.

Das Abdeckelement wird anschließend vorzugsweise mit einem weiteren Gehäusebauteil des Gehäuses verbunden, insbesondere stoffschlüssig, beispielsweise mittels Schweißens.

Das erfindungsgemäße Verfahren weist vorzugsweise eines oder mehrere der im Zusammenhang mit der erfindungsgemäßen elektrochemischen Zelle beschriebenen Merkmale und/oder einen oder mehrere der im Zusammenhang mit der erfindungsgemäßen elektrochemischen Zelle beschriebenen Vorteile auf.

Vorzugsweise wird auf einer einem Innenraum der elektrochemischen Zelle abgewandten Außenseite des Abdeckelements mindestens ein erstes Dichtelement auf das Abdeckelement aufgebracht und/oder in das Abdeckelement eingebracht, welches den ersten Verbindungsbereich bezüglich einer Mittelachse des ersten Kontaktelements radial umgibt.

Ergänzend oder alternativ wird auf einer dem Innenraum der elektrochemischen Zelle abgewandten Außenseite des Abdeckelements mindestens ein zweites Dichtelement auf das Abdeckelement aufgebracht und/oder in das Abdeckelement eingebracht, welches den zweiten Verbindungsbereich bezüglich einer Mittelachse des zweiten Kontaktelements radial umgibt.

Günstig kann es sein, wenn das Abdeckelement vor, während oder nach der Einfüllung des ersten Harzmaterials und/oder des zweiten Harzmaterials mit einem Isolierelement kraftschlüssig und/oder formschlüssig verbunden wird.

Das erste Zellterminal wird vorzugsweise vor oder nach dem Vergießen des ersten Kontaktelements und/oder Herstellen des ersten Vergusselements stoffschlüssig, beispielsweise mittels Laserschweißens, mit dem ersten Kontaktelement verbunden.

Das zweite Zellterminal wird vorzugsweise vor oder nach dem Vergießen des zweiten Kontaktelements und/oder Herstellen des zweiten Vergusselements stoffschlüssig, beispielsweise mittels Laserschweißens, mit dem zweiten Kontaktelement verbunden.

Es kann vorgesehen sein, dass eine Relativposition des Abdeckelements und des Isolierelements während des Trocknens und/oder Aushärtens des ersten Harzmaterials und/oder zweiten Harzmaterials mittels eines Halteelements fixiert wird, beispielsweise mittels eines Niederhalters.

Nach dem Festlegen der Zellterminals wird die entsprechende Baugruppe vorzugsweise gehärtet, beispielsweise in einer Härtestraße.

Ergänzend oder alternativ zu der Verwendung und/oder Herstellung von Dichtelementen kann vorgesehen sein, dass ein erster vertiefter Bereich in einen Grundkörper des Abdeckelements eingebracht wird, beispielsweise durch Prägen. Der erste vertiefte Bereich dient vorzugsweise als Aufnahme für das erste Vergusselement.

Insbesondere wird das erste Harzmaterial in einem fließfähigen Zustand in den ersten vertieften Bereich eingefüllt.

Gemäß einer bevorzugten Ausführungsform wird ein zweiter vertiefter Bereich in das Abdeckelement eingebracht, beispielsweise durch Prägen. Der zweite vertiefte Bereich dient vorzugsweise als Aufnahme für das zweite Vergusselement.

Insbesondere wird das zweite Harzmaterial in einem fließfähigen Zustand in den zweiten vertieften Bereich eingefüllt.

Vorteilhaft kann es sein, wenn das erste Harzmaterial durch eine erste Harzmaterialeinfüllöffnung in dem ersten Kontaktelement in einen im ausgehärteten Zustand das erste Vergusselement bildenden Hohlraum eingefüllt wird.

Vorzugsweise wird das zweite Harzmaterial durch eine zweite Harzmaterialeinfüllöffnung in dem zweiten Kontaktelement in einen im ausgehärteten Zustand das zweite Vergusselement bildenden Hohlraum eingefüllt.

Alternativ kann (wie zuvor beschrieben) eine Befüllung über Einfüllöffnungen im Isolierelement erfolgen.

Weitere bevorzugte Merkmale und/oder Vorteile der Erfindung sind Gegenstand der nachfolgenden Beschreibung und der zeichnerischen Darstellung von Ausführungsbeispielen.

Es zeigen:
- Fig. 1: eine schematische Schnittdarstellung einer ersten Ausführungsform einer elektrochemischen Zelle, in welcher ein erstes Kontaktelement mittels eines ersten Vergusselements an einem Abdeckelement eines Gehäuses festgelegt ist und in welcher ein zweites Kontaktelement mittels eines zweiten Vergusselements an dem Abdeckelement festgelegt ist;
- Fig. 2: eine schematische Schnittdarstellung des ersten Kontaktelements aus Fig. 1, wobei ein erstes Kontaktelementbauteil und ein L-förmiges zweites Kontaktelementbauteil des ersten Kontaktelements stoffschlüssig miteinander verbunden sind;
- Fig. 3: eine schematische Draufsicht auf das erste Kontaktelement längs einer in Fig. 2 mit III bezeichneten Richtung;
- Fig. 4: eine schematische Schnittdarstellung des zweiten Kontaktelements aus Fig. 1, wobei das zweite Kontaktelement L-Form aufweist;
- Fig. 5: eine schematische Draufsicht auf das zweite Kontaktelement längs einer in Fig. 4 mit V bezeichneten Richtung;
- Fig. 6: einen Ausschnitt der schematischen Schnittansicht aus Fig. 1;
- Fig. 7: eine vergrößerte Darstellung des in Fig. 6 mit VII bezeichneten Bereichs;
- Fig. 8: eine schematische Draufsicht auf das Abdeckelement der elektrochemischen Zelle aus den Fig. 1 bis 7;
- Fig. 9: eine schematische Draufsicht auf das Abdeckelement der elektrochemischen Zelle aus der Fig. 1 während einer Her-stellung der elektrochemischen Zelle, wobei ein erstes Dichtelement um eine erste Öffnung des Abdeckelements herum und davon beabstandet aufgebracht ist und wobei ein zweites Dichtelement um eine zweite Öffnung des Abdeckelements herum und davon beabstandet aufgebracht ist;
- Fig. 10: eine schematische Draufsicht auf das Isolierelement der elektrochemischen Zelle aus Fig. 1;
- Fig. 11: eine schematische Draufsicht auf ein Isolierelement einer weiteren Ausführungsform einer elektrochemischen Zelle, wobei das Isolierelement zweiteilig ausgebildet ist;
- Fig. 12: eine schematische Draufsicht auf ein Isolierelement einer weiteren Ausführungsform einer elektrochemischen Zelle, wobei das Isolierelement ein Ausgleichselement mittig zwischen einer ersten Öffnung zur Durchführung des ersten Kontaktelements und einer zweiten Öffnung zur Durchführung des zweiten Kontaktelements aufweist;
- Fig. 13: eine schematische Draufsicht auf einen Ausschnitt einer weiteren Ausführungsform einer elektrochemischen Zelle, bei welcher eine erste Ausnehmung des ersten Zellterminals zumindest näherungsweise oval ist und bei welcher eine zweite Ausnehmung des zweiten Zellterminals zumindest näherungsweise oval ist;
- Fig. 14: eine schematische Draufsicht auf das Abdeckelement aus Fig. 13 während der Herstellung der elektrochemischen Zelle;
- Fig. 15: eine schematische Draufsicht auf das Isolierelement der weiteren Ausführungsform einer elektrochemischen Zelle aus den Fig. 13 und 14, wobei das Isolierelement eine zumindest näherungsweise ovale erste Öffnung und eine zumindest näherungsweise ovale zweite Öffnung aufweist und wobei das Isolierelement optional zweiteilig ausgebildet ist;
- Fig. 16: eine schematische Draufsicht auf einen Ausschnitt einer weiteren Ausführungsform einer elektrochemischen Zelle, bei welcher eine Durchtrittsöffnung des ersten Zellterminals und eine Durchtrittsöffnung des zweiten Zellterminals jeweils eine Haupterstreckungsrichtung aufweisen, welche zumindest näherungsweise parallel zu einer Hauptseite der elektrochemischen Zelle angeordnet sind;
- Fig. 17: eine schematische Draufsicht auf einen Ausschnitt der elektrochemischen Zelle aus Fig. 16 während der Herstellung;
- Fig. 18: eine schematische Schnittdarstellung eines Ausschnitts einer weiteren Ausführungsform einer elektrochemischen Zelle, bei welcher ein Sicherungselement des zweiten Kontaktelements in Form einer Schmelzsicherung außerhalb eines zweiten Verbindungsbereichs angeordnet ist;
- Fig. 19: eine schematische Schnittdarstellung eines Ausschnitts einer weiteren Ausführungsform einer elektrochemischen Zelle;
- Fig. 20: eine schematische Schnittdarstellung eines Ausschnitts einer weiteren Ausführungsform einer elektrochemischen Zelle, wobei das erste Vergusselement und das zweite Vergusselement das Abdeckelement nicht in einer senkrecht zu einer Haupterstreckungsebene des Abdeckelements angeordneten Richtung hintergreifen;
- Fig. 21: eine schematische Schnittdarstellung eines Ausschnitts einer weiteren Ausführungsform einer elektrochemischen Zelle, wobei die elektrochemische Zelle ein Umschnappelement in Form eines Springelements umfasst, mittels welchem das erste Zellterminal im Falle eines Übersteigens eines kritischen Drucks und/oder einer kritischen Temperatur in einem Innenraum der elektrochemischen Zelle mit dem Abdeckelement elektrisch leitend kontaktierbar ist;
- Fig. 22: eine schematische Draufsicht auf das Abdeckelement der elektrochemischen Zelle aus Fig. 21 während der Herstellung der elektrochemischen Zelle;
- Fig. 23: eine schematische Draufsicht auf das Isolierelement der elektrochemischen Zelle aus den Fig. 21 und 22;
- Fig. 24: eine schematische Schnittdarstellung eines Ausschnitts einer weiteren Ausführungsform einer elektrochemischen Zelle, bei welcher das erste Kontaktelement und das zweite Kontaktelement jeweils einen zumindest näherungsweise T-förmigen Querschnitt aufweisen;
- Fig. 25: eine schematische Schnittdarstellung des ersten Kontaktelements aus Fig. 24, welches drei Kontaktelementbauteile umfasst;
- Fig. 26: eine schematische Draufsicht auf das erste Kontaktelement längs einer in Fig. 25 mit XXVI bezeichneten Richtung;
- Fig. 27: eine schematische Schnittdarstellung des zweiten Kontaktelements aus Fig. 24, welches zumindest zwei Kontaktelementbauteile umfasst;
- Fig. 28: eine Draufsicht auf das zweite Kontaktelement aus Fig. 27 längs einer in Fig. 27 mit XXVIII bezeichneten Richtung;
- Fig. 29: eine schematische Schnittdarstellung eines ersten Kontaktelements einer weiteren Ausführungsform einer elektrochemischen Zelle, welches in einem parallel zu einer Haupterstreckungsebene des Abdeckelements genommenen Querschnitt zumindest näherungsweise oval ist;
- Fig. 30: eine schematische Draufsicht auf das erste Kontaktelement aus Fig. 29 längs einer in Fig. 29 mit XXX bezeichneten Richtung;
- Fig. 31: eine schematische Schnittdarstellung eines zweiten Kontaktelements der elektrochemischen Zelle aus den Fig. 29 und 30, wobei das zweite Kontaktelement in einem parallel zu der Haupterstreckungsebene des Abdeckelements genommenen Querschnitt zumindest näherungsweise oval ausgebildet ist;
- Fig. 32: eine schematische Draufsicht auf das zweite Kontaktelement aus Fig. 31 längs einer in Fig. 31 mit XXXII bezeichneten Richtung;
- Fig. 33: eine schematische Schnittdarstellung eines Ausschnitts einer weiteren Ausführungsform einer elektrochemischen Zelle, bei welcher Erhebungen des Abdeckelements seitliche Begrenzungen des ersten Vergusselements und des zweiten Vergusselements bilden;
- Fig. 34: eine schematische Draufsicht auf das Abdeckelement der elektrochemischen Zelle aus Fig. 33 während der Herstellung der elektrochemischen Zelle;
- Fig. 35: eine schematische Draufsicht auf ein Isolierelement der elektrochemischen Zelle aus den Fig. 34 und 35, wobei das Isolierelement mehrere Positioniervorsprünge aufweist, welche jeweils einen zumindest näherungsweise rechteckigen Querschnitt aufweisen;
- Fig. 36: eine schematische Schnittdarstellung eines Ausschnitts einer weiteren Ausführungsform einer elektrochemischen Zelle, bei welcher das erste Kontaktelement und das zweite Kontaktelement jeweils kraftschlüssig und/oder formschlüssig relativ zu dem Isolierelement mit diesem verbunden sind;
- Fig. 37: eine schematische Schnittdarstellung eines Ausschnitts einer weiteren Ausführungsform einer elektrochemischen Zelle, bei welcher das Isolierelement eine erste Einfüllöffnung zur Einfüllung eines ersten Harzmaterials in den ersten Verbindungsbereich und eine zweite Einfüllöffnung zur Einfüllung eines zweiten Harzmaterials in den zweiten Verbindungsbereich aufweist;
- Fig. 38: eine schematische Schnittdarstellung eines Ausschnitts einer weiteren Ausführungsform einer elektrochemischen Zelle, bei welcher das zweite Zellterminal an einer als zweites Dichtelement ausgebildeten Erhebung des Abdeckelements anliegt;
- Fig. 39: eine schematische Schnittdarstellung eines Ausschnitts einer weiteren Ausführungsform einer elektrochemischen Zelle, bei welcher das zweite Kontaktelement mit einem Randbereich einer zweiten Öffnung des Abdeckelements stofflich kontaktiert ist;
- Fig. 40: eine schematische Schnittdarstellung einer weiteren Ausführungsform einer elektrochemischen Zelle, bei welcher das erste Kontaktelement mittels eines ersten Verbindungsleiters und das zweite Kontaktelement mittels eines zweiten Verbindungsleiters seitlich an dem elektrochemischen Element angebunden sind;
- Fig. 41: eine schematische Schnittdarstellung des ersten Kontaktelements und des ersten Zellterminals der elektrochemischen Zelle aus der Fig. 40;
- Fig. 42: eine schematische Draufsicht auf das erste Kontaktelement aus der Fig. 41 längs einer in Fig. 41 mit XLII bezeichneten Richtung;
- Fig. 43: eine schematische Schnittdarstellung des zweiten Kontaktelements und des ersten Zellterminals der elektrochemischen Zelle aus der Fig. 40;
- Fig. 44: eine schematische Draufsicht auf das zweite Kontaktelement aus der Fig. 43 längs einer in Fig. 43 mit XLIV bezeichneten Richtung;
- Fig. 45: eine schematische Schnittdarstellung eines Ausschnitts einer weiteren Ausführungsform einer elektrochemischen Zelle, bei welcher eine Befüllung des ersten Harzmaterials in den ersten Verbindungsbereich und/oder eine Befüllung des zweiten Harzmaterials in den zweiten Verbindungsbereich von einer dem Innenraum zugewandten Seite erfolgt;
- Fig. 46: eine schematische Schnittdarstellung eines Ausschnitts einer weiteren Ausführungsform einer elektrochemischen Zelle, bei welcher das erste Kontaktelement und das zweite Kontaktelement an einer dem Innenraum zugewandten Seite jeweils dünner ausgebildet sind;
- Fig. 47: eine schematische Schnittdarstellung eines Ausschnitts einer weiteren Ausführungsform einer elektrochemischen Zelle, bei welcher mittels des ersten Kontaktelements und/oder des zweiten Kontaktelements das Abdeckelement und das Isolierelement bei einer Bildung des ersten Vergusselements und/oder des zweiten Vergusselements zusammenhaltbar sind;
- Fig. 48: eine schematische Schnittdarstellung des ersten Kontaktelements und des ersten Zellterminals der elektrochemischen Zelle aus Fig. 47;
- Fig. 49: eine schematische Draufsicht auf das erste Kontaktelement aus Fig. 48 längs einer in Fig. 48 mit XLIX bezeichneten Richtung;
- Fig. 50: eine schematische Schnittdarstellung des zweiten Kontaktelements und des zweiten Zellterminals der elektrochemischen Zelle aus der Fig. 47;
- Fig. 51: eine schematische Draufsicht auf das zweite Kontaktelement aus Fig. 50 längs einer in Fig. 50 mit LI bezeichneten Richtung;
- Fig. 52: eine schematische Draufsicht auf ein Isolierelement einer weiteren Ausführungsform einer elektrochemischen Zelle, bei welcher das Isolierelement im Bereich des ersten Verbindungsbereichs und im Bereich des zweiten Verbindungsbereichs jeweils taschenartige Vertiefungen aufweisen, in welchen V-förmig ausgebildete Strömungsleitelemente angeordnet sind;
- Fig. 53: eine schematische Schnittdarstellung des Isolierelements aus Fig. 52 längs einer in Fig. 52 mit LIII bezeichneten Ebene;
- Fig. 54: eine schematische Draufsicht auf ein Isolierelement einer weiteren Ausführungsform einer elektrochemischen Zelle, bei welcher jeweils zwei Strömungsleitelemente voneinander beabstandet in einer ersten Vertiefung und in einer zweiten Vertiefung des Isolierelements angeordnet sind;
- Fig. 55: eine schematische Draufsicht auf ein Isolierelement einer weiteren Ausführungsform einer elektrochemischen Zelle, bei welcher eine erste taschenartige Vertiefung und eine zweite taschenartige Vertiefung ausgebildet sind, wobei in den taschenartigen Vertiefungen angeordnete Positioniervorsprünge als Strömungsleitelemente dienen;
- Fig. 56: eine schematische Draufsicht auf ein Isolierelement einer weiteren Ausführungsform einer elektrochemischen Zelle, bei welcher das Isolierelement einen ersten Einfüllkanal zur Befüllung der ersten Vertiefung und einen zweiten Einfüllkanal zur Befüllung der zweiten Vertiefung aufweist;
- Fig. 57: eine schematische Draufsicht auf ein Isolierelement einer weiteren Ausführungsform einer elektrochemischen Zelle, bei welcher das Isolierelement mehrere in Randbereichen der ersten Vertiefung angeordnete Einfüllöffnungen und mehrere in Randbereichen der zweiten Vertiefung angeordnete Einfüllöffnungen aufweist;
- Fig. 58: eine schematische Draufsicht auf ein Isolierelement einer weiteren Ausführungsform einer elektrochemischen Zelle, bei welcher das Isolierelement ein spiralförmig um eine erste Öffnung des Isolierelements angeordnetes erstes Strömungsleitelement und ein spiralförmig um eine zweite Öffnung des Isolierelements angeordnetes zweites Strömungsleitelement aufweist;
- Fig. 59: eine schematische Draufsicht auf ein Isolierelement einer weiteren Ausführungsform einer elektrochemischen Zelle, bei welcher ein erstes Strömungsleitelement die erste Öffnung des Isolierelements äquidistant umgibt und bei welcher ein zweites Strömungsleitelement die zweite Öffnung des Isolierelements äquidistant umgibt, wobei eine Höhe der Strömungsleitelemente unterschiedlich sein kann;
- Fig. 60: eine schematische Draufsicht auf eine Variante eines Dichtelements, gemäß welcher das Dichtelement einen zumindest näherungsweise rechteckförmigen Querschnitt aufweist;
- Fig. 61: eine schematische Draufsicht auf eine weitere Variante eines Dichtelements, gemäß welcher das Dichtelement an einer der Öffnung des Abdeckelements abgewandten Seite mindestens eine Unterbrechung aufweist;
- Fig. 62: eine schematische Draufsicht auf eine weitere Variante eines Dichtelements, gemäß welcher das Dichtelement einen Querschnitt einer abgeschnittenen Ellipse aufweist;
- Fig. 63: eine schematische Draufsicht auf eine weitere Variante eines Dichtelements, gemäß welcher das Dichtelement an einer der Öffnung des Abdeckelements abgewandten Seite eine Wölbung aufweist;
- Fig. 64: eine schematische Draufsicht auf eine weitere Variante eines Dichtelements, gemäß welcher das Dichtelement an einer der Öffnung des Abdeckelements abgewandten Seite zwei aneinander angrenzende Wölbungen aufweist;
- Fig. 65: eine schematische Draufsicht auf eine weitere Variante eines Dichtelements, gemäß welcher das Dichtelement nach innen ragende Vorsprünge aufweist, deren Haupterstreckungsrichtung zumindest näherungsweise parallel zu einer Haupterstreckungsrichtung der Öffnung des Abdeckelements ist;
- Fig. 66: eine schematische Draufsicht auf eine weitere Variante eines Dichtelements, gemäß welcher die nach innen ragenden Vorsprünge des Dichtelements zu der Öffnung des Abdeckelements geneigt ausgebildet sind;
- Fig. 67: eine schematische Draufsicht auf eine weitere Variante eines Dichtelements, gemäß welcher drei nach innen ragende Vorsprünge des Dichtelements alternierend auf gegenüberliegenden Seiten des Dichtelements angeordnet sind;
- Fig. 68: eine schematische Draufsicht auf eine weitere Variante eines Dichtelements, gemäß welcher die nach innen ragenden Vorsprünge von der Öffnung des Abdeckelements weg geneigt ausgebildet sind;
- Fig. 69: eine schematische Draufsicht auf eine weitere Variante eines Dichtelements, gemäß welcher mehrere Vorsprünge des Dichtelements von einem Grundkörper des Dichtelements beabstandet und von dem Grundkörper umgeben sind;
- Fig. 70: eine schematische Draufsicht auf eine weitere Variante eines Dichtelements, gemäß welcher das Dichtelement einen Vorsprung aufweist, welcher einen zumindest näherungsweise kreisförmigen Querschnitt aufweist und welcher von dem Grundkörper des Dichtelements beabstandet angeordnet ist;
- Fig. 71: eine schematische Draufsicht auf eine weitere Variante eines Dichtelements, gemäß welcher der Vorsprung einen zumindest näherungsweise ovalen Querschnitt aufweist;
- Fig. 72: eine schematische Draufsicht auf eine weitere Variante eines Dichtelements, gemäß welcher das Dichtelement einen Grundkörper aus einem Polymermaterial und mindestens einen Vorsprung aus einem metallischen Material umfasst;
- Fig. 73: eine schematische Draufsicht auf ein Zellterminal, bei welchem eine Öffnung zumindest näherungsweise rechteckförmig ist und eine Haupterstreckungsrichtung aufweist, welche zumindest näherungsweise parallel zu einer Schmalseite des Zellterminals angeordnet ist;
- Fig. 74: eine schematische Draufsicht auf ein Zellterminal, bei welchem eine Haupterstreckungsrichtung der Öffnung zumindest näherungsweise parallel zu einer Breitseite des Zellterminals angeordnet ist;
- Fig. 75: eine schematische Draufsicht auf ein Zellterminal, bei welchem eine Öffnung zumindest näherungsweise oval ist und eine Haupterstreckungsrichtung aufweist, welche zumindest näherungsweise parallel zu einer Schmalseite des Zellterminals angeordnet ist;
- Fig. 76: eine schematische Draufsicht auf ein Zellterminal, bei welchem eine Haupterstreckungsrichtung der Öffnung zumindest näherungsweise parallel zu einer Breitseite des Zellterminals angeordnet ist;
- Fig. 77: eine schematische perspektivische Darstellung eines Ausschnitts einer weiteren Ausführungsform einer elektrochemischen Zelle, bei welcher das zweite Zellterminal an einem zweiten vertieften Bereich des Abdeckelements angeordnet ist;
- Fig. 78: eine schematische perspektivische Darstellung des Abdeckelements aus Fig. 77, bei welchem der zweite vertiefte Bereich ein Vergussbecken für das zweite Vergusselement bildet;
- Fig. 79: eine schematische perspektivische Darstellung eines Ausschnitts der Ausführungsform einer elektrochemischen Zelle aus den Fig. 77 und 78, bei welcher das erste Kontaktelement eine erste Einfüllöffnung für das erste Harzmaterial aufweist und bei welcher das zweite Kontaktelement eine zweite EinfüllÖffnung für das zweite Harzmaterial aufweist;
- Fig. 80: eine schematische perspektivische Schnittdarstellung eines Ausschnitts der elektrochemischen Zelle aus den Fig. 77 bis 79, in welcher das zweite Zellterminal, das zweite Kontaktelement und ein Teil des zweiten Verbindungsleiters dargestellt sind;
- Fig. 81: eine schematische perspektivische Schnittdarstellung eines Ausschnitts der elektrochemischen Zelle aus den Fig. 77 bis 80, in welcher das erste Zellterminal, das erste Kontaktelement und ein Teil des ersten Verbindungsleiters dargestellt sind;
- Fig. 82: eine schematische perspektivische Darstellung des zweiten Kontaktelements der Ausführungsform einer elektrochemischen Zelle aus den Fig. 77 bis 81, wobei das zweite Kontaktelement mit dem zweiten Verbindungsleiter verbunden ist, wobei das zweite Kontaktelement und der zweite Verbindungsleiter in einem senkrecht zur Haupterstreckungsebene des Abdeckelements genommenen Querschnitt zumindest näherungsweise eine L-Form bilden;
- Fig. 83: eine schematische perspektivische Darstellung des ersten Kontaktelements der Ausführungsform einer elektrochemischen Zelle aus den Fig. 77 bis 82, wobei das erste Kontaktelement mit dem ersten Verbindungsleiter verbunden ist, wobei das erste Kontaktelement und der erste Verbindungsleiter in einem senkrecht zur Haupterstreckungsebene des Abdeckelements genommenen Querschnitt zumindest näherungsweise eine L-Form bilden;
- Fig. 84: eine schematische perspektivische Darstellung eines Ausschnitts einer weiteren Ausführungsform einer elektrochemischen Zelle, bei welcher die Verbindungsleiter, die Zellterminals und/oder das Isolierelement reduzierte Dicken aufweisen und/oder bei welcher das erste Zellterminal und/oder das zweite Zellterminal Durchtrittsöffnungen aufweisen, welche eine reduzierte durchschnittliche Breite aufweisen;
- Fig. 85: eine schematische perspektivische Darstellung eines Ausschnitts der elektrochemischen Zelle aus Fig. 84, wobei das erste Kontaktelement und der erste Verbindungsleiter einteilig ausgebildet sind und/oder wobei das zweite Kontaktelement und der zweite Verbindungsleiter einteilig ausgebildet sind;
- Fig. 86: eine schematische perspektivische Darstellung des ersten Kontaktelements und eines Teils des ersten Verbindungsleiters der elektrochemischen Zelle aus den Fig. 84 und 85, wobei das erste Kontaktelement und der erste Verbindungsleiter in einem senkrecht zur Haupterstreckungsebene des Abdeckelements genommenen Querschnitt zumindest näherungsweise stufenförmig ausgebildet sind; und
- Fig. 87: eine schematische perspektivische Darstellung des zweiten Kontaktelements und eines Teils des zweiten Verbindungsleiters der elektrochemischen Zelle aus den Fig. 84 bis 86, wobei das zweite Kontaktelement und der zweite Verbindungsleiter in einem senkrecht zur Haupterstreckungsebene des Abdeckelements genommenen Querschnitt zumindest näherungsweise stufenförmig ausgebildet sind.

Gleiche oder funktional äquivalente Elemente sind in sämtlichen Figuren mit denselben Bezugszeichen versehen.

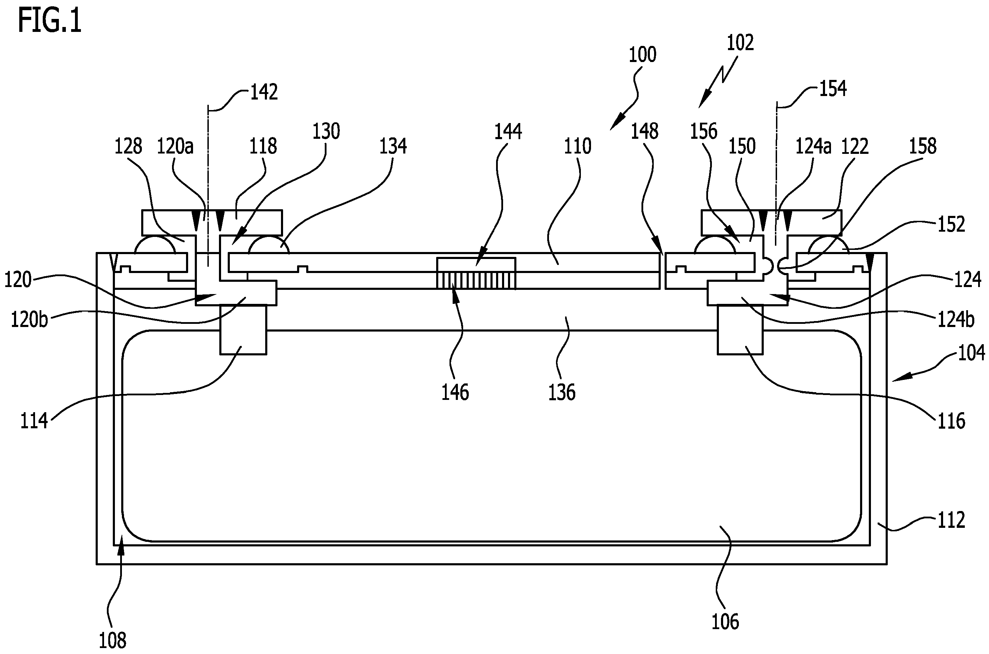

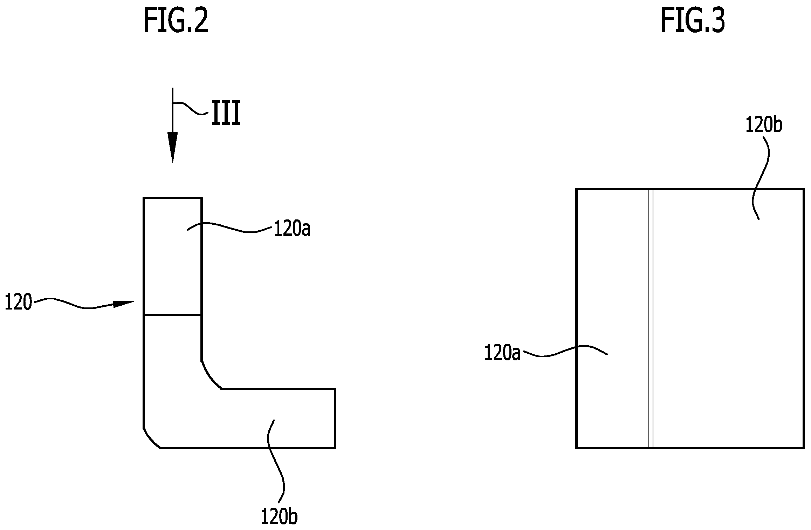

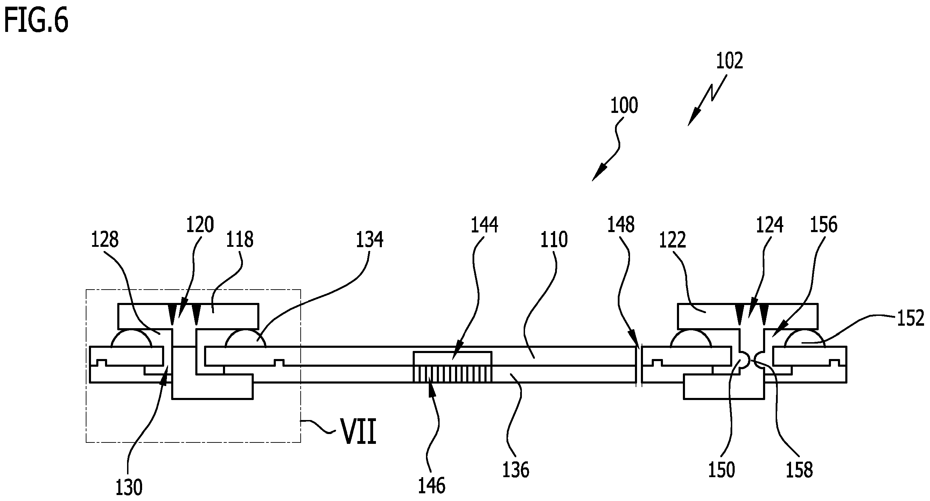

In den Fig. 1 bis 10 ist eine erste Ausführungsform einer als Ganzes mit 100 bezeichneten elektrochemische Zelle sowie einzelne Bestandteile davon gezeigt.

Die elektrochemische Zelle 100 ist beispielsweise eine Batteriezelle und/oder eine Akkumulatorzelle.

Vorzugsweise ist die elektrochemische Zelle 100 eine Lithiumionenzelle.

Die elektrochemische Zelle 100 bildet vorzugsweise einen Bestandteil eines elektrochemischen Systems 102, welches insbesondere mehrere elektrochemische Zellen 100 umfasst.

Das elektrochemische System 102 ist beispielsweise ein Akkumulatormodul und/oder ein Batteriemodul.

Beispielsweise wird die elektrochemische Zelle 100 in einem Fahrzeug verwendet.

Die elektrochemische Zelle 100 umfasst vorzugsweise ein Gehäuse 104 zur Aufnahme eines elektrochemischen Elements 106. Das Gehäuse 104 umgibt einen Innenraum 108 der elektrochemischen Zelle 100 und umfasst als ein erstes Gehäusebauteil ein Abdeckelement 110.

Das Abdeckelement 110 deckt vorzugsweise ein weiteres Gehäusebauteil 112 des Gehäuses 104 ab und/oder ist und/oder wird fluiddicht mit dem weiteren Gehäusebauteil 112 verbunden.

Das weitere Gehäusebauteil 112 ist insbesondere wannenförmig oder becherförmig ausgebildet. Es umgibt den Innenraum 108 der elektrochemischen Zelle 100 vorzugsweise fünfseitig.

Vorzugsweise ist das Gehäuse 104 der elektrochemischen Zelle 100 zumindest näherungsweise quaderförmig ausgebildet.

Vorteilhaft kann es sein, wenn das Abdeckelement 110 plattenförmig ausgebildet ist, beispielsweise aus einem Blech. Insbesondere umfasst das Abdeckelement 110 ein metallisches Material, beispielsweise Aluminium, oder ist aus dem metallischen Material gebildet. Beispielsweise ist das Abdeckelement 110 aus einem Metallblech, beispielsweise aus einem Aluminiumblech, gebildet.

Das Abdeckelement 110 ist und/oder wird vorzugsweise stoffschlüssig mit dem weiteren Gehäusebauteil 112 des Gehäuses 104 verbunden, vorzugsweise mittels Schweißens, beispielsweise mittels Laserschweißens.

Das elektrochemische Element 106 ist insbesondere ein sogenannter Zellwickel.

Vorteilhaft kann es sein, wenn das elektrochemische Element 106 mit einem ersten Verbindungsleiter 114 und einem zweiten Verbindungsleiter 116 verbunden ist oder diese umfasst.

Der erste Verbindungsleiter 114 dient insbesondere einer elektrischen Verbindung des elektrochemischen Elements 106 mit einem ersten Zellterminal 118 der elektrochemischen Zelle 100, insbesondere über ein erstes Kontaktelement 120 der elektrochemischen Zelle 100.

Der zweite Verbindungsleiter 116 dient vorzugsweise einer elektrischen Verbindung des elektrochemischen Elements 106 mit einem zweiten Zellterminal 122 der elektrochemischen Zelle 100, insbesondere über ein zweites Kontaktelement 124 der elektrochemischen Zelle 100.

Das zweite Zellterminal 122 umfasst vorzugsweise ein erstes metallisches Material, beispielsweise Aluminium, oder ist daraus gebildet.

Beispielsweise ist das zweite Zellterminal 122 als Kathode ausgebildet.

Alternativ kann vorgesehen sein, dass das zweite Zellterminal 122 als Anode ausgebildet ist (nicht gezeigt).

Die elektrische Verbindung des elektrochemischen Elements 106 mit dem ersten Zellterminal 118 und/oder dem zweiten Zellterminal 122 ist insbesondere dadurch gegeben, dass der jeweilige Verbindungsleiter 114, 116 einerseits an dem elektrochemischen Element 106 und andererseits an dem jeweiligen Kontaktelement 120, 124 festgelegt ist.

Vorliegend sind der erste Verbindungsleiter 114 und/oder der zweite Verbindungsleiter 116 an einer dem Abdeckelement 110 zugewandten Seite des elektrochemischen Elements 100, insbesondere von oben, an dem elektrochemischen Element 106 festgelegt.

Das erste Zellterminal 118 umfasst vorzugsweise ein erstes metallisches Material, beispielsweise Aluminium, oder ist daraus gebildet.

Beispielsweise ist das erste Zellterminal 118 als Anode ausgebildet.

Alternativ kann vorgesehen sein, dass das erste Zellterminal 118 eine Kathode ist (nicht gezeigt).

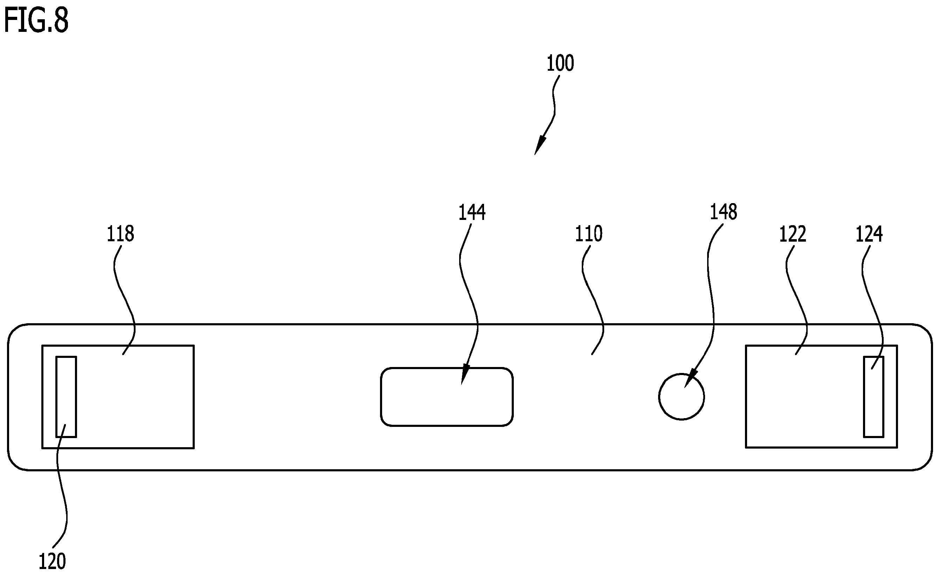

Vorteilhaft kann es sein, wenn das erste Zellterminal 118 eine Durchtrittsöffnung 119 aufweist, durch welche ein erstes Kontaktelementbauteil 120a des ersten Kontaktelements 120 hindurchgeführt ist (vgl. Fig. 8).

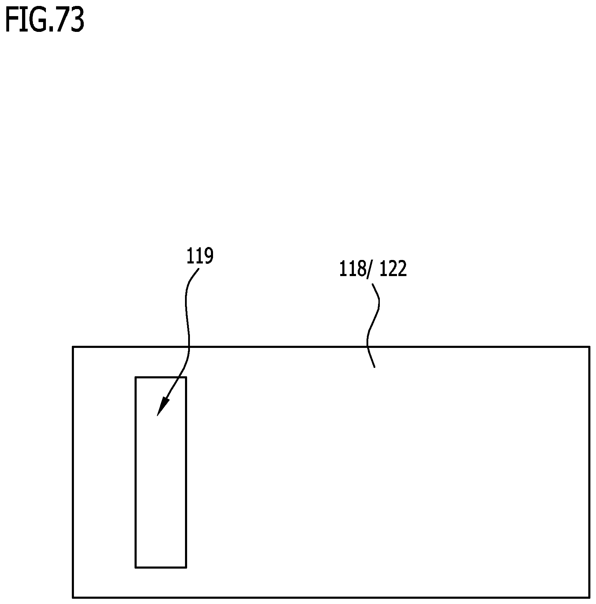

Das erste Zellterminal 118 und das zweite Zellterminal 122 sind vorliegend identisch ausgestaltet. Separat ist das Zellterminal 118 bzw. 122 in Fig. 73 gezeigt.

Die Durchtrittsöffnung 119 des ersten Zellterminals 118 weist insbesondere eine Form auf, welche zumindest näherungsweise komplementär zu einem Querschnitt des ersten Kontaktelements 120 ausgebildet ist.

Beispielsweise weisen das erste Zellterminal 118 und/oder das zweite Zellterminal 122 jeweils eine quaderförmige Ausnehmung auf.

Das erste Zellterminal 118 ist vorzugsweise stoffschlüssig, beispielsweise mittels Schweißens, mit einem ersten Kontaktelementbauteil 120a des ersten Kontaktelements 120 verbunden.

Das erste Kontaktelementbauteil 120a umfasst vorzugsweise dasselbe Material wie das erste Zellterminal 118 oder ist daraus gebildet.

Vorteilhaft kann es sein, wenn das erste Kontaktelementbauteil 120a des ersten Kontaktelements 120 Aluminium umfasst oder daraus gebildet ist.

Das erste Kontaktelement 120 umfasst vorzugsweise ein zweites Kontaktelementbauteil 120b, welches insbesondere ein zweites metallisches Material umfasst oder daraus gebildet ist. Das zweite metallische Material unterscheidet sich insbesondere von dem ersten metallischen Material.

Beispielsweise umfasst das zweite Kontaktelementbauteil 120b des ersten Kontaktelements 120 Kupfer oder ist daraus gebildet.

Günstig kann es sein, wenn das erste Kontaktelementbauteil 120a und das zweite Kontaktelementbauteil 120b des ersten Kontaktelements 120 stoffschlüssig, beispielsweise mittels Laserschweißens und/oder Walzplattierens, miteinander verbunden sind.

Es kann vorgesehen sein, dass das zweite Kontaktelementbauteil 120b in einem senkrecht zu einer Hauptseite der elektrochemischen Zelle 100 genommenen Querschnitt zumindest näherungsweise eine L-Form aufweist. Bei der Herstellung wird das zweite Kontaktelementbauteil vorzugsweise zu der L-Form gebogen.

Dadurch, dass ein Schenkel der L-Form eine Haupterstreckungsebene aufweist, welche zumindest näherungsweise parallel zu einer Haupterstreckungsebene des Abdeckelements 110 angeordnet ist, kann eine flächige Anbindung des ersten Verbindungsleiters 114 an das zweite Kontaktelementbauteil 120b erfolgen.

Günstig kann es sein, wenn der erste Verbindungsleiter 114 an einem dem ersten Zellterminal 118 abgewandten Schenkel des ersten Kontaktelements 120, beispielsweise an einer dem Abdeckelement 110 abgewandten Unterseite desselben, stoffschlüssig, insbesondere mittels Schweißens, festgelegt ist.

Das Abdeckelement 110 umfasst vorzugsweise eine erste Öffnung 126a, durch welche das erste Kontaktelement 120 hindurchgeführt ist.

Die erste Öffnung 126a des Abdeckelements 110 ist beispielsweise zumindest eine Anodenöffnung.

Alternativ kann vorgesehen sein, dass die erste Öffnung 126a des Abdeckelements 110 zumindest eine Kathodenöffnung ist (nicht gezeigt).

Vorteilhaft kann es sein, wenn das erste Kontaktelement 120 und das daran festgelegte erste Zellterminal 118 mittels eines ersten Vergusselements 128 in einem ersten Verbindungsbereich 130 festgelegt ist.

Das erste Vergusselement 128 füllt vorzugsweise den ersten Verbindungsbereich 130 vollständig aus.

Beispielsweise ist ein im Bereich der ersten Öffnung 126a zwischen dem Abdeckelement 110 und dem ersten Kontaktelement 120 gebildeter Bereich vollständig ausgefüllt.

Das erste Vergusselement 128 ist vorzugsweise aus einem ersten Polymermaterial gebildet, welches ein erstes Harzmaterial umfasst oder daraus gebildet ist.

Günstig kann es sein, wenn das erste Harzmaterial eines oder mehrere der folgenden Materialien umfasst oder daraus gebildet ist: Epoxidharzmaterial, Phenolharzmaterial, Aminoplastmaterial, Polyurethanmaterial, Silikonmaterial, Polyesterharzmaterial, ABS-Harzmaterial.

Vorteilhaft kann es sein, wenn das erste Harzmaterial in einem ausgehärteten Zustand zu dem ersten Polymermaterial eine Härte von ca. 40 Shore D oder mehr, insbesondere von ca. 50 Shore D, beispielsweise von ca. 60 Shore D oder mehr, aufweist.

Die Härte des ersten Harzmaterials in einem ausgehärteten Zustand zu dem ersten Polymermaterial beträgt ca. 100 Shore D oder weniger, insbesondere ca. 97 Shore D oder weniger, beispielsweise ca. 95 Shore D oder weniger.

Die Härte ist insbesondere nach DIN EN ISO 868 bestimmt.

Günstig kann es sein, wenn das erste Harzmaterial eine Glasübergangstemperatur von ca. 90 °C oder mehr, insbesondere von ca. 95 °C oder mehr, beispielsweise von ca. 100 °C oder mehr, aufweist. Die Glasübergangstemperatur ist vorzugsweise auf einen gehärteten Zustand des ersten Harzmaterials zu dem ersten Polymermaterial bezogen.

Vorzugsweise ist das erste Harzmaterial ein ein-komponentiges Harzmaterial, beispielsweise ein ein-komponentiges Epoxidharzmaterial.

Ein-komponentige Epoxidharzmaterialien weisen vorzugsweise eine erhöhte Stabilität gegenüber einem Elektrolyten, welcher in dem Innenraum 108 aufgenommen ist, auf.

Günstig kann es sein, wenn das erste Harzmaterial ein oder mehrere Füllstoffe umfasst. Der eine oder die mehreren Füllstoffe sind vorzugsweise ausgewählt aus: anorganischen Füllstoffen, insbesondere Siliziumoxid, Carbonat, Carbid, insbesondere Siliziumcarbid, Nitrid, insbesondere Metallnitrid, Metalloxid.

Bevorzugte Siliziumoxide sind Silikate.

Durch die Verwendung von Füllstoffen kann eine Sauerstoffdiffusion und/oder Wasserdiffusion von einer Umgebung der elektrochemischen Zelle 100 in den Innenraum 108 über das erste Vergusselement 128 vermieden oder reduziert werden.

Günstig kann es sein, wenn der Verbindungsbereich 130 und/oder das erste Vergusselement 128 auf einer dem Innenraum 108 der elektrochemischen Zelle abgewandten Außenseite des Abdeckelements 110 von einer dem Innenraum 108 der elektrochemischen Zelle 100 zugewandten Unterseite des ersten Zellterminals 118 und seitlich von einem ersten Dichtelement 134 begrenzt ist.

Das erste Dichtelement 134 ist vorzugsweise in einem Druckverfahren, beispielsweise in einem Musterdruckverfahren, insbesondere in einem Siebdruckverfahren, einem Schablonendruckverfahren und/oder einem Tampondruckverfahren, auf eine dem Innenraum 108 abgewandte Oberseite des Abdeckelements 110 aufgebracht.

Beispielsweise wird ein drittes Polymermaterial mittels eines Applikationselements auf die Oberseite des Abdeckelements 110 aufgebracht und insbesondere anschließend ausgehärtet und/oder getrocknet.

Beispielsweise ist und/oder wird das erste Dichtelements 134 durch eine Dichtraupe gebildet.

Günstig kann es sein, wenn das dritte Polymermaterial ein thermoplastisches Polymermaterial, ein duroplastisches Polymermaterial und/oder ein elastomeres Polymermaterial umfasst oder daraus gebildet ist.

Vorzugsweise umfasst das dritte Polymermaterial eines oder mehrere der folgenden Materialien oder ist daraus gebildet: Polyolefin, insbesondere Polypropylen und/oder Polyethylen, Polyester, insbesondere Polyethylenterephthalat und/oder Polybutylenterephthalat, Polyamid, Polyimid, Copolyamid, Polyamid-Elastomer, Polyether, insbesondere Epoxidharze, Polyurethan, Polyurethan-Acrylat, Polyvinylchlorid, Polystyrol, Polymethylmethacrylat, Acryl-Butadien-Styrol, Synthesekautschuk, insbesondere Ethylen-Propylen-Dien-Kautschuk, Polycarbonat, Polyethersulfon, Polyoxymethylen, Polyetheretherketon, Polytetrafluorethylen, Silikon, insbesondere Silikonkautschuk und/oder silikonbasiertes Elastomer.

Bevorzugt werden thermoplastische Polymermaterialien für das dritte Polymermaterial verwendet. Beispielsweise werden Hotmelt-Materialien für das dritte Polymermaterial verwendet.

Vorteilhaft kann es sein, wenn das dritte Polymermaterial einen oder mehrere Füllstoffe umfasst, wobei der eine oder die mehreren Füllstoffe beispielsweise ausgewählt sind aus: anorganischen Füllstoffen, beispielsweise Siliziumoxid, Carbonat, Siliziumcarbid, Metalloxid, Nitrid, insbesondere Metallnitrid.

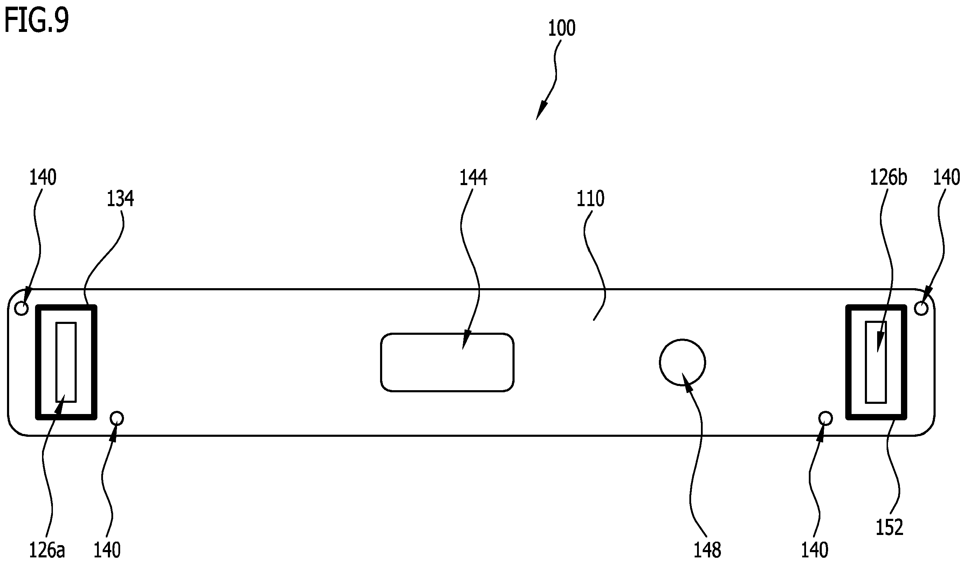

Wie insbesondere in Fig. 9 zu sehen ist, kann vorgesehen sein, dass das erste Dichtelement 134 in einem parallel zu der Haupterstreckungsebene des Abdeckelements 110 genommenen Querschnitt zumindest näherungsweise rechteckförmig ausgebildet ist.

Günstig kann es sein, wenn das erste Dichtelement 134 beabstandet zu der ersten Öffnung 126a des Abdeckelements 110 angeordnet ist, wobei das erste Dichtelement 134 vorzugsweise umlaufend denselben Abstand zu einer die Öffnung umgebenden Kante des Abdeckelements 110 aufweist.

Vorzugsweise umfasst die elektrochemische Zelle 100 ein Isolierelement 136, welches insbesondere einer Isolierung des Innenraums 108 und/oder einer stabileren Festlegung des ersten Kontaktelements 120 und des zweiten Kontaktelements 124 dient.

Das Isolierelement 136 ist vorzugsweise zumindest näherungsweise plattenförmig ausgebildet und/oder auf einer dem Innenraum 108 zugewandten Innenseite 132 des Abdeckelements 110, insbesondere stoffschlüssig und/oder kraftschlüssig und/oder formschlüssig an dem Abdeckelement 110 festgelegt.

Das Isolierelement 136 umfasst vorzugsweise ein fünftes Polymermaterial oder ist aus dem fünften Polymermaterial gebildet.

Das fünfte Polymermaterial ist vorzugsweise ein thermoplastisches Polymermaterial, beispielsweise ein spritzgießbares und/oder elektrolytbeständiges thermoplastisches Polymermaterial.

Vorzugsweise ist das Isolierelement 136 ein Spritzgusselement.

Es kann vorgesehen sein, dass das Isolierelement 136 separat hergestellt wird, beispielsweise in einem Spritzgussverfahren, und anschließend mit dem Abdeckelement 110 verbunden wird.

Alternativ kann vorgesehen sein, dass das Isolierelement 136 an das Abdeckelement 110 angespritzt wird.

Vorteilhaft kann es sein, wenn das Isolierelement 136 einen oder mehrere, vorliegend vier (vgl. beispielsweise Fig. 9), Positioniervorsprünge 138 umfasst. Der eine oder die mehreren Positioniervorsprünge 138 erstrecken sich vorzugsweise längs einer von dem Innenraum 108 in Richtung der Zellterminals 118, 122 weisenden Richtung von einem Grundkörper des Isolierelements 136 weg.

Die Positioniervorsprünge 138 greifen vorzugsweise in komplementär dazu ausgebildete Positionierrücksprünge 140 des Abdeckelements 110 ein.

Beispielsweise hintergreifen die Positioniervorsprünge 138 das Abdeckelement 110 in einer parallel zu einer Haupterstreckungsebene des Abdeckelements 110 angeordneten Richtung.

Vorliegend sind die Positioniervorsprünge 138 stiftförmig, beispielsweise als Positionierpins, ausgebildet.

Vorzugsweise ist eine Verschieblichkeit des Abdeckelements 110 und des Isolierelements 136 mittels der in die Positionierrücksprünge 140 eingreifenden Positioniervorsprünge 138 relativ zueinander parallel zu einer Haupterstreckungsebene des Abdeckelements 110 blockiert.

Es kann vorgesehen sein, dass das Isolierelement 136 dem ersten Verbindungsbereich 130 zugewandt eine Wölbung und/oder Vertiefung 165 aufweist, insbesondere derart, dass ein Teil des ersten Vergusselements 128 zwischen dem Abdeckelement 110 und dem Isolierelement 136 aufgenommen ist.

Beispielsweise hintergreift das erste Vergusselement 128 das Abdeckelement 110 in einer parallel zu einer Mittelachse 142 des ersten Kontaktelements 120 verlaufenden Richtung.

Günstig kann es sein, wenn die elektrochemische Zelle 100 mindestens eine Sollbruchstelle 144 aufweist, welche bei einem Übersteigen einer kritischen Innenraumtemperatur und/oder einem kritischen Innenraumdruck reißt und/oder bricht.

Es kann vorgesehen sein, dass die mindestens eine Sollbruchstelle 144 als Materialschwachstelle in dem Abdeckelement 110 ausgebildet ist.

Günstig kann es sein, wenn eine Sollbruchstelle 144 mittig zwischen dem ersten Zellterminal 118 und dem zweiten Zellterminal 122 angeordnet ist.

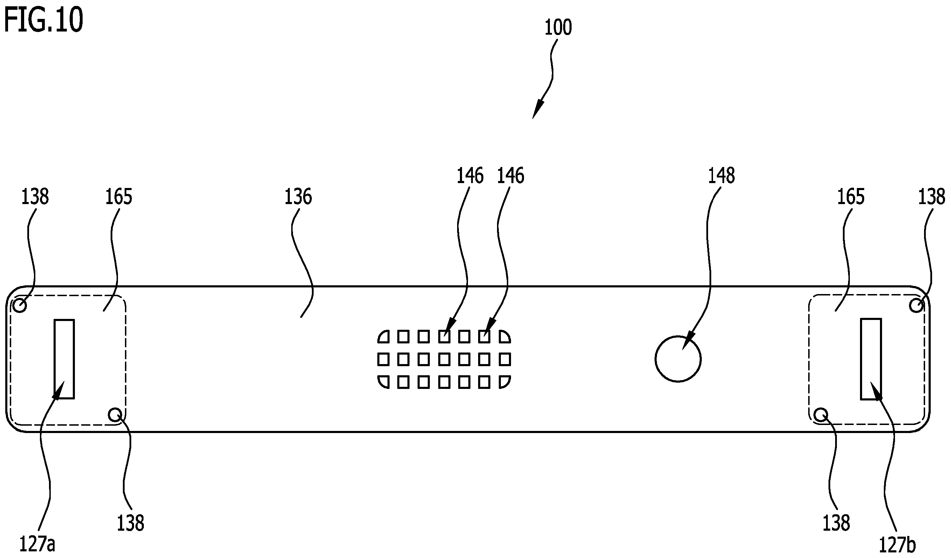

Wie insbesondere in Fig. 10 zu sehen ist, weist das Isolierelement 136 vorzugsweise im Bereich der mindestens einen Sollbruchstelle 144, insbesondere regelmäßig angeordnete, Ausnehmungen 146 auf (exemplarisch bezeichnet).

Die Ausnehmungen 146 sind vorzugsweise durch, insbesondere kreuzförmig angeordnete, Stege begrenzt. Durch die Stegstruktur kann ein Spritzschutz gebildet sein.

Vorteilhaft kann es sein, wenn das Isolierelement 136 mehrere, vorliegend zwei, Vertiefungen 165 aufweist (in Fig. 10 gestrichelt angedeutet), im Bereich welcher das Isolierelement 136 eine verminderte Dicke aufweist. Die Vertiefungen 165 dienen vorzugsweise einer Aufnahme von Harzmaterial und/oder begrenzen ein von dem jeweiligen Verbindungsbereich 130, 156 gebildetes Volumen zu dem Innenraum 108 der elektrochemischen Zelle 100 hin.

Vorzugsweise weist die elektrochemische Zelle 100 eine Elektrolyteinfüllöffnung 148 auf, welche sich durch das Abdeckelement 110 und das Isolierelement 136 erstreckt und/oder einer Befüllung des Innenraums 108 mit Elektrolyt dient.

Das zweite Kontaktelement 124 ist mittels eines zweiten Vergusselements 150 an dem Abdeckelement 110 festgelegt. Das zweite Vergusselement 150 füllt vorzugsweise einen zweiten Verbindungsbereich 156 vollständig aus.

Bezüglich der Anordnung und/oder Ausgestaltung des zweiten Vergusselements 150 und des zweiten Verbindungsbereichs 156 wird auf die Ausführungen im Zusammenhang mit dem ersten Vergusselement 128 und dem ersten Verbindungsbereich 130 Bezug genommen.

Das zweite Vergusselement 150 ist vorzugsweise aus einem zweiten Polymermaterial gebildet. Vorzugsweise umfasst das zweite Polymermaterial ein zweites Harzmaterial oder ist daraus gebildet.

Das zweite Harzmaterial weist in einem ausgehärteten Zustand zu dem zweiten Polymermaterial vorzugsweise eine Glasübergangstemperatur von ca. 90 °C oder mehr, insbesondere von ca. 95 °C oder mehr, beispielsweise von ca. 100 °C oder mehr, auf.

Vorteilhaft kann es sein, wenn das zweite Polymermaterial eines oder mehrere der folgenden Materialien umfasst oder daraus gebildet ist: Epoxidharzmaterial, Phenolharzmaterial, Aminoplastmaterial, Polyurethanmaterial, Silikonmaterial, Polyesterharzmaterial, ABS-Harzmaterial.

Vorzugsweise weist das zweite Harzmaterial in einem ausgehärteten Zustand zu dem zweiten Polymermaterial eine Härte von ca. 40 Shore D oder mehr, insbesondere von ca. 50 Shore D oder mehr, beispielsweise von ca. 60 Shore D oder mehr auf.

Vorzugsweise beträgt die Härte des zu dem zweiten Polymermaterial ausgehärteten zweiten Harzmaterials ca. 100 Shore D oder weniger, insbesondere ca. 97 Shore D oder weniger, beispielsweise 95 Shore D oder weniger.

Die Härte ist vorzugsweise gemäß DIN ISO 868 bestimmt.

Vorteilhaft kann es sein, wenn das zweite Harzmaterial einen oder mehrere Füllstoffe umfasst. Die Füllstoffe sind beispielsweise ausgewählt aus einem oder mehreren der folgenden: anorganische Füllstoffe, insbesondere Siliziumoxid, Carbonat, Carbid, insbesondere Siliziumcarbid, Nitrid, insbesondere Metallnitrid, Metalloxid.

Günstig kann es sein, wenn das zweite Harzmaterial ein Epoxidharzmaterial umfasst oder daraus gebildet ist.

Vorzugsweise umfasst das zweite Harzmaterial ein ein-komponentiges Harzmaterial, beispielsweise ein ein-komponentiges Epoxidharzmaterial, oder ist daraus gebildet.

Gemäß der ersten Ausführungsform einer elektrochemischen Zelle 100 ist vorgesehen, dass das erste Harzmaterial und das zweite Harzmaterial identisch sind.

Gemäß alternativer Ausführungsformen sind das erste Harzmaterial und das zweite Harzmaterial chemisch und/oder physikalisch voneinander verschiedene Harzmaterialien.

Günstig kann es sein, wenn das erste Harzmaterial bei der Herstellung des ersten Vergusselements 128 und/oder das zweite Harzmaterial bei der Herstellung des zweiten Vergusselements 150 eine Viskosität von ca. 10² mPa·s oder mehr, insbesondere von ca. 10³ mPa·s oder mehr, aufweisen.

Die Viskosität des ersten Harzmaterials und/oder des zweiten Harzmaterials bei einer Herstellung der elektrochemischen Zelle 100 beträgt vorzugsweise ca. 10⁶ mPa·s oder weniger, insbesondere 10⁵ mPa·s oder weniger.

Eine Befüllung des ersten Verbindungsbereichs 130 mit dem ersten Harzmaterial und/oder des zweiten Verbindungsbereichs 156 mit dem zweiten Harzmaterial findet vorzugsweise bei Umgebungsdruck statt.

Vorzugsweise weist die elektrochemische Zelle 100 ein zweites Dichtelement 152 auf, welches insbesondere das zweite Vergusselement 150 bezüglich einer Mittelachse 154 des zweiten Kontaktelements 124 auf einer dem Innenraum 108 abgewandten Außenseite des Abdeckelements 110 radial umgibt und/oder begrenzt.

Der zweite Verbindungsbereich 156, in welchem vorzugsweise das zweite Vergusselement 150 angeordnet ist, ist auf einer dem Innenraum 108 abgewandten Seite des Abdeckelements 110 vorzugsweise von einer dem Innenraum 108 zugewandten Unterseite des zweiten Zellterminals 122, einem dem zweiten Kontaktelement 124 zugewandten Seite des zweiten Dichtelements 152 begrenzt und/oder definiert.

Auf einer dem Innenraum 108 zugewandten Seite des Abdeckelements 110 ist der zweite Verbindungsbereich 156 vorzugsweise von einer auf einer dem Innenraum 108 abgewandten Seite des Isolierelements 136 ausgebildeten Vertiefung 165, einer dem Innenraum 108 zugewandten Innenseite 132 des Abdeckelements 110 und einer äußeren Oberfläche des zweiten Kontaktelements 124 begrenzt und/oder definiert.

Das zweite Dichtelement 152 umfasst vorzugsweise ein viertes Polymermaterial oder ist daraus gebildet.

Beispielsweise wird das vierte Polymermaterial mittels eines Applikationselements auf die Außenseite des Abdeckelements 110 aufgebracht und insbesondere anschließend ausgehärtet und/oder getrocknet.

Beispielsweise ist und/oder wird das zweite Dichtelement 152 durch eine Dichtraupe gebildet.

Günstig kann es sein, wenn das vierte Polymermaterial ein thermoplastisches Polymermaterial, ein duroplastisches Polymermaterial und/oder ein elastomeres Polymermaterial umfasst oder daraus gebildet ist.

Vorteilhaft kann es sein, wenn das vierte Polymermaterial des zweiten Dichtelements 152 und das dritte Polymermaterial des ersten Dichtelements 134 chemisch und/oder physikalisch identisch sind.

Eine Materialauswahl und/oder Ausbildung und/oder Anordnung des zweiten Dichtelements 152 entspricht vorliegend der Materialauswahl und/oder Ausbildung und/oder Anordnung des ersten Dichtelements 134, sodass auf die diesbezüglichen Ausführungen Bezug genommen wird.

Die Dichtelemente 134, 152 bilden vorzugsweise Auflageflächen für die Zellterminals 118, 122.

Alternativ zu einer Bildung des ersten Dichtelements 134 während dessen Herstellung kann vorgesehen sein, dass das erste Dichtelement 134 ein separates Bauteil, insbesondere ein separat handhabbares Bauteil, ist.

Beispielsweise ist das erste Dichtelement 134 ein Einlegeteil, beispielsweise ein Kunststoffrahmen.

Ergänzend oder alternativ kann vorgesehen sein, dass das zweite Dichtelement 152 ein separates Bauteil, insbesondere ein separat handhabbares Bauteil, ist.

Beispielsweise ist das zweite Dichtelement 152 ein Einlegeteil, beispielsweise ein Metallrahmen.

Bei einem separat hergestellten ersten Dichtelement 134 und/oder einem separat hergestellten zweiten Dichtelement 152 kann vorgesehen sein, dass diese in einen dafür vorgesehenen Aufnahmeraum in dem Abdeckelement 110 und/oder in einen Aufnahmeraum in dem jeweiligen Zellterminal 118, 122 eingelegt werden (nicht dargestellt).

Es kann vorgesehen sein, dass das erste Dichtelement 134 und das erste Zellterminal 118 radial bezüglich der Mittelachse 142 des ersten Kontaktelements 120 bündig abschließen.

Insbesondere schließen das zweite Dichtelement 152 und das zweite Zellterminal 122 radial bezüglich der Mittelachse 154 des zweiten Kontaktelements bündig zueinander ab (vgl. beispielsweise Fig. 1).

Alternativ kann vorgesehen sein, dass das erste Zellterminal 118, beispielsweise an einer einem zwischen den Zellterminals 118, 122 angeordneten Mittelbereich des Abdeckelements 110 zugewandten Seite, über das erste Dichtelement 134 hinaussteht.

Insbesondere steht das zweite Zellterminal 122, beispielsweise an einer dem zwischen den Zellterminals 118, 122 angeordneten Mittelbereich des Abdeckelements 110 zugewandten Seite, über das zweite Dichtelement 152 hinaus (vgl. beispielsweise Fig. 8).

Günstig kann es sein, wenn das zweite Kontaktelement 124 in einem parallel zu einer Haupterstreckungsebene des Abdeckelements 110 genommenen Querschnitt zumindest näherungsweise rechteckförmig ausgebildet ist.

Vorteilhaft kann es sein, wenn das zweite Zellterminal 122 eine Durchtrittsöffnung 119 aufweist, welche insbesondere zumindest näherungsweise komplementär zu dem Querschnitt des zweiten Kontaktelements 124 ausgebildet ist (vgl. Fig. 73).

Vorteilhaft kann es sein, wenn das zweite Kontaktelement 124 durch die Durchtrittsöffnung 119 des zweiten Zellterminals 122 hindurchgeführt ist und/oder wird.

Vorzugsweise ist ein von dem Innenraum 108 der elektrochemischen Zelle 100 abgewandter Endbereich des zweiten Kontaktelementbauteils 124b stoffschlüssig, insbesondere mittels Schweißens, mit einem die Durchtrittsöffnung 119 umgebenden Randbereich des zweiten Zellterminals 122 verbunden.

Vorzugsweise ist das zweite Kontaktelement 124 aus einem Flachmaterial, beispielsweise in Blechform.

Es kann vorgesehen sein, dass das zweite Kontaktelement 124 zu einer L-Form gebogen ist und/oder wird, wobei eine Haupterstreckungsebene eines von dem zweiten Zellterminal 122 abgewandten Schenkels der L-Form eine Haupterstreckungsebene aufweist, welche vorzugsweise zumindest näherungsweise parallel zu einer Haupterstreckungsebene des Abdeckelements 110 ausgebildet ist.

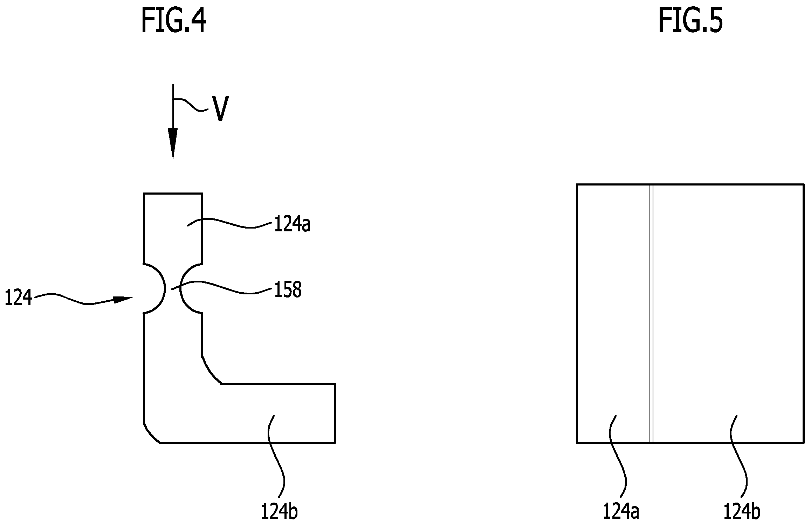

Wie insbesondere in Fig. 4 und 5 dargestellt ist, ist das zweite Kontaktelement 124 vorzugsweise einteilig.

Alternativ kann vorgesehen sein, dass das zweite Kontaktelement 124 ein erstes Kontaktelementbauteil 124a und ein zweites Kontaktelementbauteil 124b aufweist, welche entsprechend dem ersten Kontaktelementbauteil 120a und dem zweiten Kontaktelementbauteil 120b miteinander verbunden sind.

Es wird hier auf die entsprechende Beschreibung Bezug genommen. Im Unterschied zu dem ersten Kontaktelement 120 sind die Kontaktleiterbauteile 124a, 124b des zweiten Kontaktelements 124 vorzugsweise aus demselben metallischen Material oder umfassen dasselbe metallische Material, beispielsweise Aluminium.

Beispielsweise ist der zweite Verbindungsleiter 116 an einer dem Innenraum 108 zugewandten Unterseite mit einem dem Innenraum 108 zugewandten Schenkel des zweiten Kontaktelements 124 stoffschlüssig, insbesondere mittels Schweißens, verbunden.

Vorteilhaft kann es sein, wenn das zweite Kontaktelement 124, beispielsweise im zweiten Verbindungsbereich 156 mindestens ein Sicherungselement 158 aufweist. Das mindestens eine Sicherungselement 158 ist vorzugsweise ein Bereich des zweiten Kontaktelements 124, in welchem dieses eine lokal verringerte Querschnittsfläche aufweist. Die Querschnittsfläche ist vorzugsweise zumindest näherungsweise parallel zu einer Haupterstreckungsebene des Abdeckelements 110 definiert.

Vorzugsweise ist die Querschnittsfläche des zweiten Kontaktelements 124 im Bereich des mindestens einen Sicherungselements 158 um ca. 20 % oder mehr, insbesondere um ca. 30 % oder mehr, insbesondere um ca. 50 % oder mehr, geringer als eine durchschnittliche Querschnittsfläche des zweiten Kontaktelements 124 in dazu benachbarten Bereichen.

Das mindestens eine Sicherungselement 158 ist vorzugsweise in einem dem Innenraum 108 abgewandten Schenkel des zweiten Kontaktelements 124 angeordnet. Beispielsweise ist das mindestens eine Sicherungselement 158 eine Schmelzsicherung.

Das mindestens eine Sicherungselement 158 dient vorzugsweise als Überstromschutz, welcher insbesondere bei einem Übersteigen eines kritischen Stroms schmilzt. Durch das Schmelzen des mindestens einen Sicherungselements 158 ist vorzugsweise das zweite Zellterminal 122 elektrisch von dem elektrochemischen Element 106 getrennt.

Vorzugsweise umfasst das zweite Kontaktelement 124 das erste metallische Material, beispielsweise Aluminium, oder ist daraus gebildet.

Zur Herstellung der elektrochemischen Zelle 100 wird das Abdeckelement 110 vorzugsweise auf dem Isolierelement 136 positioniert, insbesondere derart, dass die Positioniervorsprünge 138 und die Positionierrücksprünge 140 ineinandergreifen.

Anschließend werden vorzugsweise das erste Kontaktelement 120 durch die erste Öffnung 126a des Abdeckelements 110 und eine erste Öffnung 127a des Isolierelements 136 hindurchgeführt.

Die erste Öffnung 127a des Isolierelements 136 ist beispielsweise zumindest eine Anodenöffnung.

Alternativ kann vorgesehen sein, dass die erste Öffnung 127a des Isolierelements 136 zumindest eine Kathodenöffnung ist (nicht gezeigt).

Das zweite Kontaktelement 124 wird vorzugsweise durch eine zweite Öffnung 126b des Abdeckelements 110 und eine zweite Öffnung 127b des Isolierelements 136 hindurchgeführt.

Die zweite Öffnung 126b des Abdeckelements 110 ist beispielsweise zumindest eine Kathodenöffnung.

Alternativ kann vorgesehen sein, dass die zweite Öffnung 126b des Abdeckelements 110 zumindest eine Anodenöffnung ist (nicht gezeigt).

Die zweite Öffnung 127b des Isolierelements 136 ist beispielsweise zumindest eine Kathodenöffnung.

Alternativ kann vorgesehen sein, dass die zweite Öffnung 127b des Isolierelements 136 zumindest eine Anodenöffnung ist (nicht gezeigt).

Vorteilhaft kann es sein, wenn das erste Kontaktelement 120 und/oder das zweite Kontaktelement 124 mittels eines Halteelements relativ zu dem Abdeckelement 110 und/oder dem Isolierelement 136 fixiert werden, beispielsweise mittels eines Niederhalters.

Anschließend wird vorzugsweise das erste Harzmaterial von oben in den ersten Verbindungsbereich 130 eingefüllt und/oder der erste Verbindungsbereich 130 mit dem ersten Harzmaterial, insbesondere vollständig, gefüllt.

Insbesondere wird das zweite Harzmaterial in den zweiten Verbindungsbereich 156 von oben eingefüllt und/oder der zweite Verbindungsbereich 156 wird mit dem zweiten Harzmaterial, insbesondere vollständig, gefüllt.

Nach einer Einfüllung und/oder Befüllung wird vorzugsweise das erste Zellterminal 118 stoffschlüssig, insbesondere mittels Laserschweißens mit einem von dem Innenraum 108 abgewandten Randbereich des ersten Kontaktelements 120 verbunden.

Vorzugsweise wird nach einer Befüllung und/oder Einfüllung das zweite Zellterminal 122 stoffschlüssig, insbesondere mittels Laserschweißens, mit einem dem Innenraum 108 abgewandten Randbereich des zweiten Kontaktelements 124 verbunden.

Zum Festlegen der Zellterminals 118, 122 werden vorzugsweise Halteelemente in Form von Niederhaltern eingesetzt.

Anschließend wird die Baugruppe, insbesondere ohne Halteelement, gehärtet. Eine Härtung erfolgt beispielsweise in einer Härtestraße.

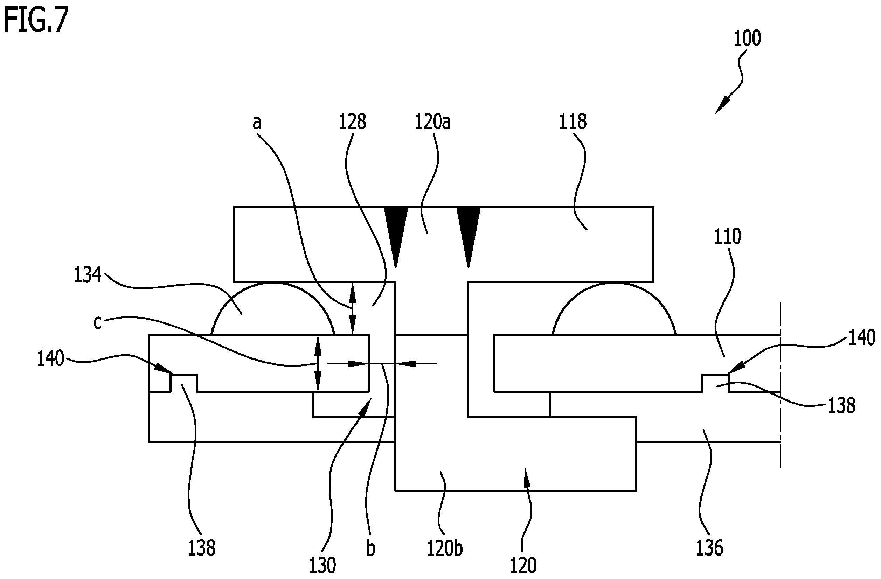

Optimierte Eigenschaften werden vorzugsweise ausgebildet, wenn der erste Verbindungsbereich 130 und/oder der zweite Verbindungsbereich 156 folgende Merkmale aufweist (vgl. Fig. 7):
- ein Abstand a zwischen dem Abdeckelement 110 und dem ersten Zellterminal 118 in einer parallel zu der Mittelachse 142 angeordneten Richtung und/oder ein Abstand a zwischen dem Abdeckelement 110 und dem zweiten Zellterminal 122 in einer parallel zu der Mittelachse 154 angeordneten Richtung bei 0,05 mm oder mehr liegt; und/oder
- ein Abstand b zwischen dem ersten Kontaktelement 120 und dem Abdeckelement 110 im Bereich der ersten Öffnung 126a des Abdeckelements 110 und/oder ein Abstand b zwischen dem zweiten Kontaktelement 124 und dem Abdeckelement 110 im Bereich der zweiten Öffnung 126b des Abdeckelements 110 bei 0,05 mm oder mehr liegt; und/oder
- ein Verhältnis zwischen dem Abstand a und einer Dicke des Abdeckelements 110 in einem Bereich von ca. 0,005 und 1 liegt.

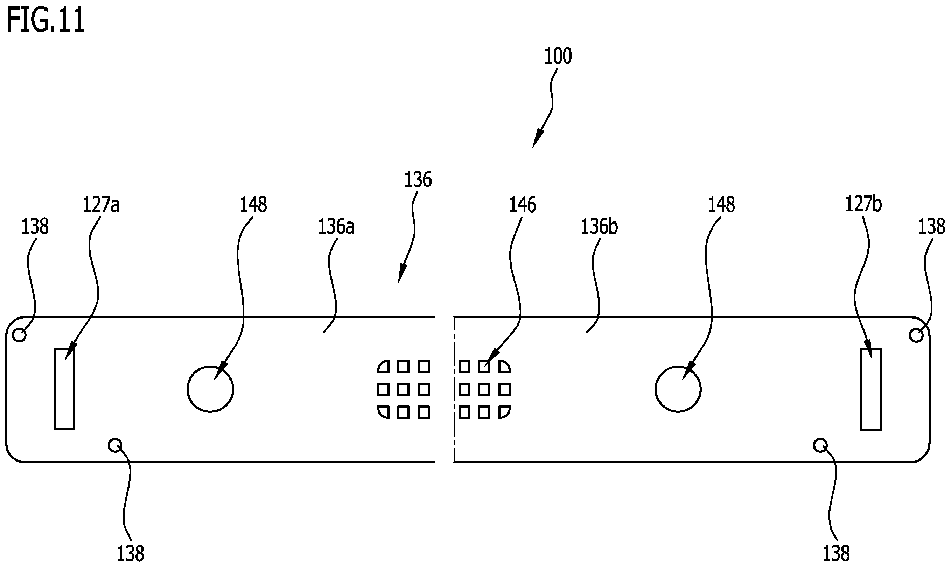

In Fig. 11 ist ein Isolierelement 136 einer zeichnerisch nicht als Ganzes dargestellten weiteren Ausführungsform einer elektrochemischen Zelle 100 gezeigt. Das Isolierelement 136 ist vorliegend zweiteilig ausgebildet und weist ein erstes Isolierelementbauteil 136a und ein zweites Isolierelementbauteil 136b auf.

Vorteilhaft kann es sein, wenn das erste Isolierelementbauteil 136a und das zweite Isolierelementbauteil 136b spiegelsymmetrisch bezüglich einer Symmetrieebene ausgebildet sind, welche zumindest näherungsweise senkrecht zu einer Haupterstreckungsebene des Isolierelements 136 angeordnet ist.

Günstig kann es sein, wenn das Isolierelement 136 mehrere ElektrolyteinfüllÖffnungen 148 aufweist. Beispielsweise sind zwei Elektrolyteinfüllöffnungen 148 in einem jeweiligen Zentralbereich des jeweiligen Isolierelementbauteils 136a, 136b angeordnet sind.

Die zwei Isolierelementbauteile 136a, 136b sind vorzugsweise stoffschlüssig und/oder formschlüssig und/oder kraftschlüssig miteinander verbunden.

Es kann vorgesehen sein, dass das erste Isolierelementbauteil 136a und das zweite Isolierelementbauteil 136b jeweils stoffschlüssig und/oder kraftschlüssig mit dem Abdeckelement 110 verbunden sind.

Im Übrigen stimmt die weitere Ausführungsform einer elektrochemischen Zelle 100 mit der in den Fig. 1 bis 10 dargestellten ersten Ausführungsform hinsichtlich Aufbau und Funktion überein, sodass auf deren Beschreibung insoweit Bezug genommen wird.

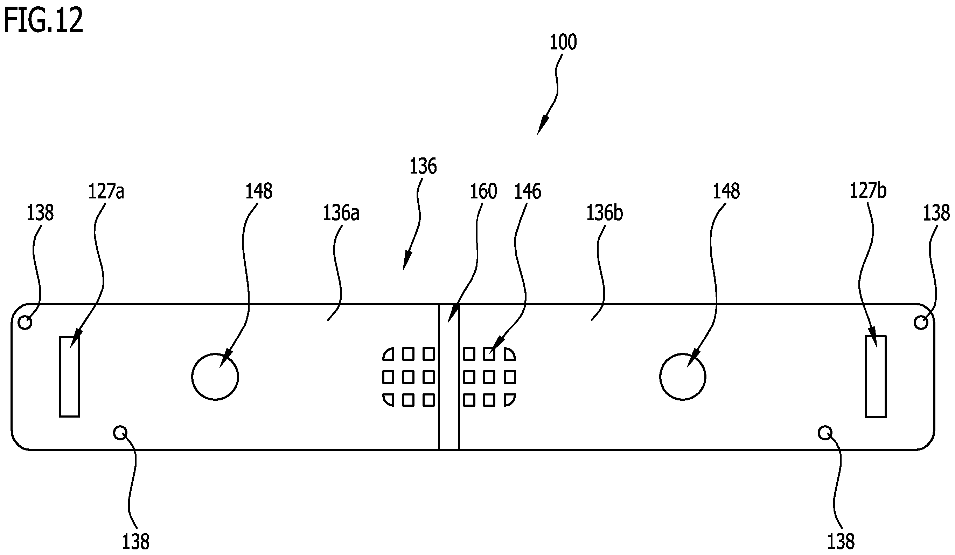

In Fig. 12 ist ein Isolierelement 136 einer zeichnerisch nicht als Ganzes dargestellten weiteren Ausführungsform einer elektrochemischen Zelle 100 gezeigt.

Das in Fig. 12 dargestellte Isolierelement 136 weist mittig zwischen der ersten Öffnung 127a und der zweiten Öffnung 127b ein Ausgleichselement 160 auf.

Das Ausgleichselement 160 dient vorzugsweise einem Ausgleich von mechanischen Spannungen, welche insbesondere aufgrund eines Übersteigens eines kritischen Drucks in dem Innenraum 108 der elektrochemischen Zelle 100 und/oder einer kritischen Temperatur in dem Innenraum 108 der elektrochemischen Zelle 100 entsteht.

Vorzugsweise ist das Ausgleichselement 160 stoffschlüssig mit dem seitlich dazu angeordneten ersten Isolierelementbauteil 136a und/oder dem seitlich dazu angeordneten zweiten Isolierelementbauteil 136b verbunden.

Vorteilhaft kann es sein, wenn das Isolierelement 136 mehrere, beispielsweise zwei, Elektrolyteinfüllöffnungen 148 aufweist, welche vorzugsweise gemäß den Elektrolyteinfüllöffnungen 148 in dem in Fig. 11 dargestellten Isolierelement 136 angeordnet sind.

Im Übrigen stimmt die zeichnerisch nicht als Ganzes dargestellte weitere Ausführungsform einer elektrochemischen Zelle 100 hinsichtlich Aufbau und Funktion im Wesentlichen mit der in den Fig. 1 bis 10 dargestellten ersten Ausführungsform überein, sodass auf deren Beschreibung insoweit Bezug genommen wird.

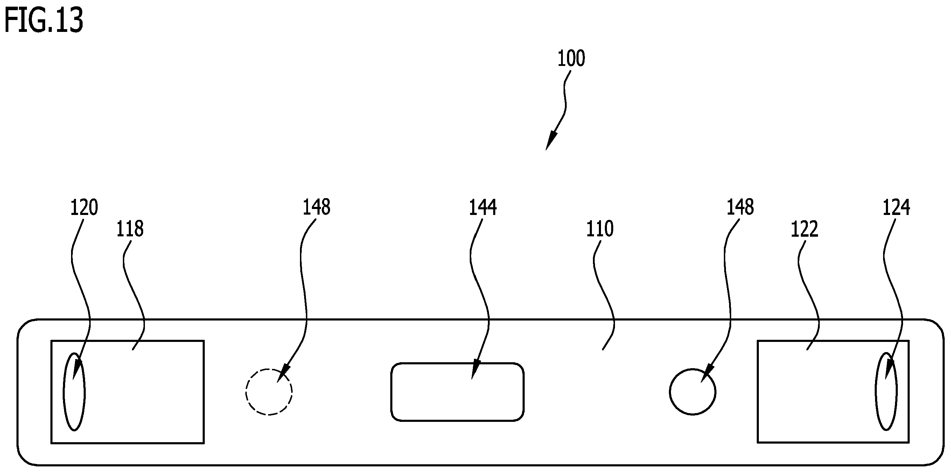

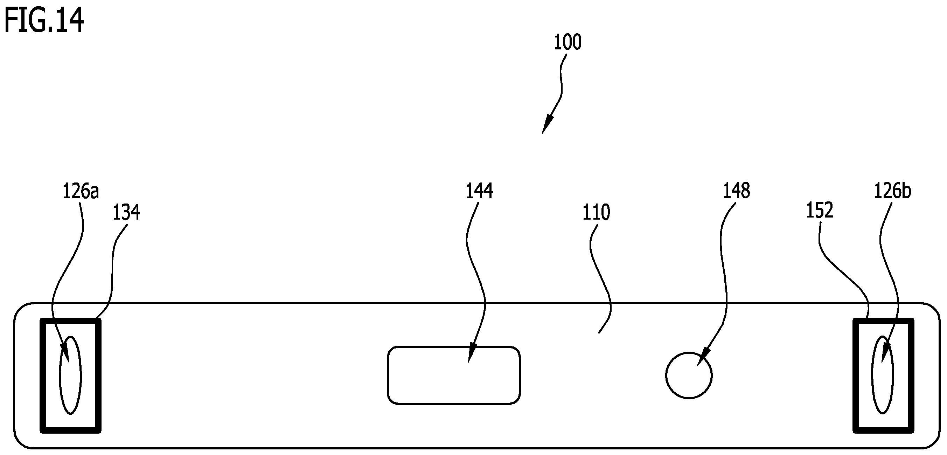

In den Fig. 13 bis 15 ist ein Ausschnitt einer weiteren Ausführungsform einer zeichnerisch nicht als Ganzes dargestellten elektrochemischen Zelle 100 gezeigt.

Gemäß dieser Ausführungsform weisen das erste Kontaktelement 120 und/oder das zweite Kontaktelement 124 vorzugsweise einen zumindest näherungsweise elliptischen und/oder ovalen Querschnitt auf.

Der Querschnitt ist vorzugsweise parallel zu einer Haupterstreckungsebene des Abdeckelements 110 genommen.

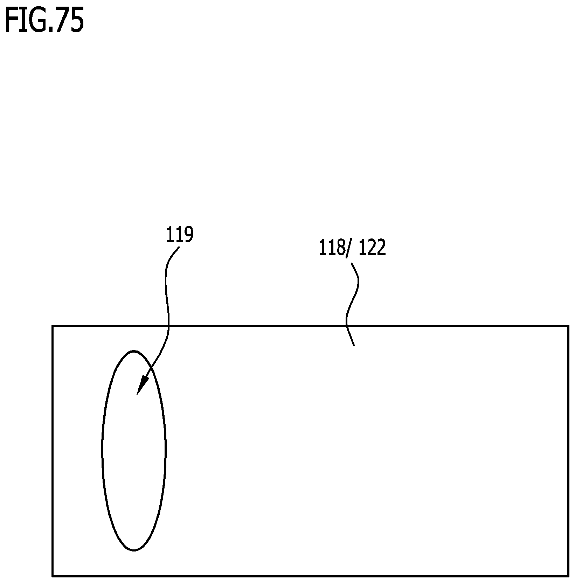

Wie insbesondere in der Fig. 75 dargestellt ist, weisen das erste Zellterminal 118 und/oder das zweite Zellterminal 122 gemäß dieser weiteren Ausführungsform vorzugsweise eine zumindest näherungsweise elliptische und/oder ovale Durchtrittsöffnung 119 auf.

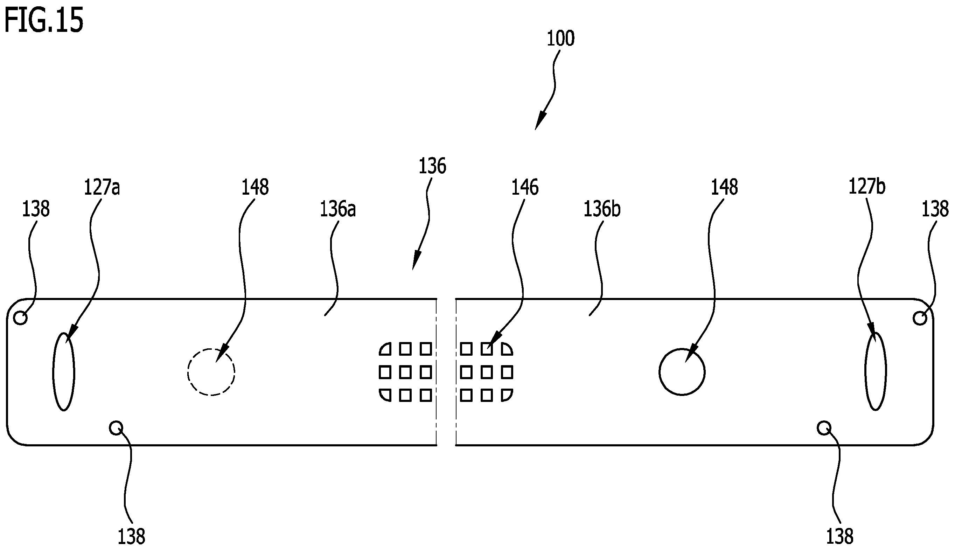

Wie insbesondere in Fig. 15 zu sehen ist, ist das Isolierelement 136 vorzugsweise zweiteilig ausgebildet. Alternativ kann vorgesehen sein, dass das Isolierelement 136 einteilig und/oder ein Ausgleichselement 160 aufweisend ausgebildet ist.

Die zweite Elektrolyteinfüllöffnung 148 ist optional.

Im Übrigen stimmt die zeichnerisch nicht als Ganzes dargestellte weitere Ausführungsform einer elektrochemischen Zelle 100 hinsichtlich Aufbau und Funktion im Wesentlichen mit der in den Fig. 1 bis 10 dargestellten ersten Ausführungsform überein, sodass auf deren Beschreibung insoweit Bezug genommen wird.

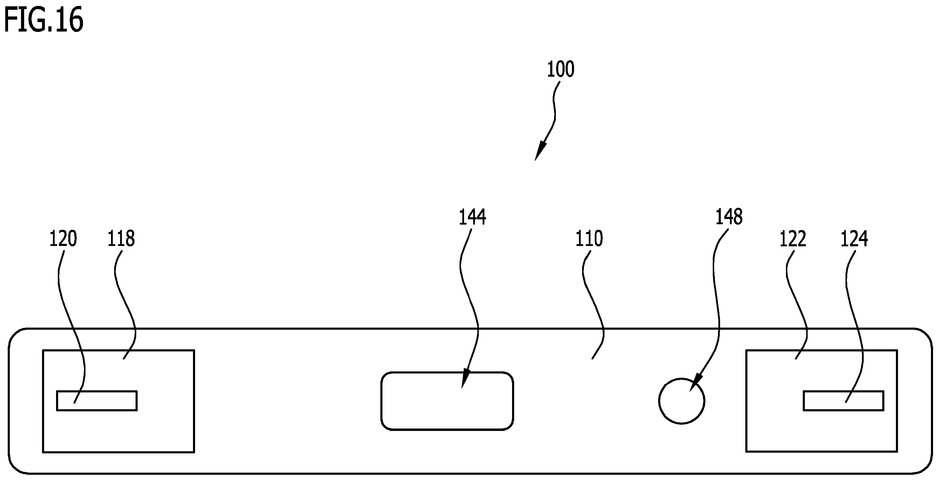

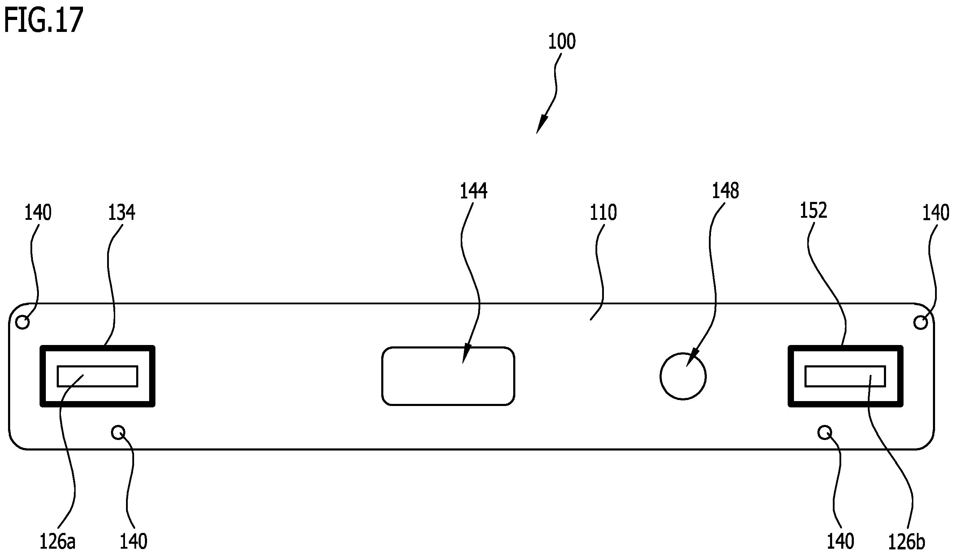

In den Fig. 16 und 17 ist ein Ausschnitt einer weiteren Ausführungsform einer zeichnerisch nicht als Ganzes dargestellten weiteren Ausführungsform einer elektrochemischen Zelle 100 gezeigt.

Diese weitere Ausführungsform unterscheidet sich hinsichtlich Aufbau und Funktion im Wesentlichen dadurch von der in den Fig. 1 bis 10 dargestellten ersten Ausführungsform, dass das erste Kontaktelement 120 und/oder das zweite Kontaktelement 124 in einem senkrecht zu einer Haupterstreckungsebene des Abdeckelements 110 genommenen Querschnitt eine Haupterstreckungsrichtung aufweisen, welche zumindest näherungsweise parallel zu einer Hauptseite der elektrochemischen Zelle 100 angeordnet ist.

Dementsprechend sind Haupterstreckungsrichtungen der ersten Öffnung 126a und/oder der zweiten Öffnung 126b des Abdeckelements 110 insbesondere zumindest näherungsweise parallel zu der Hauptseite der elektrochemischen Zelle 100 angeordnet.

In Fig. 16 ist ein Zustand nach einer Festlegung des ersten Zellterminals 120 und des zweiten Zellterminals 122 dargestellt.

In dem in Fig. 17 dargestellten Zustand sind das erste Kontaktelement 120 und das zweite Kontaktelement 124 noch nicht durch die erste Öffnung 126a bzw. die zweite Öffnung 126b des Abdeckelements 110 durchgeführt. Auch das erste Zellterminal 118 und das zweite Zellterminal 122 sind in dem in Fig. 17 dargestellten Zustand noch nicht montiert.

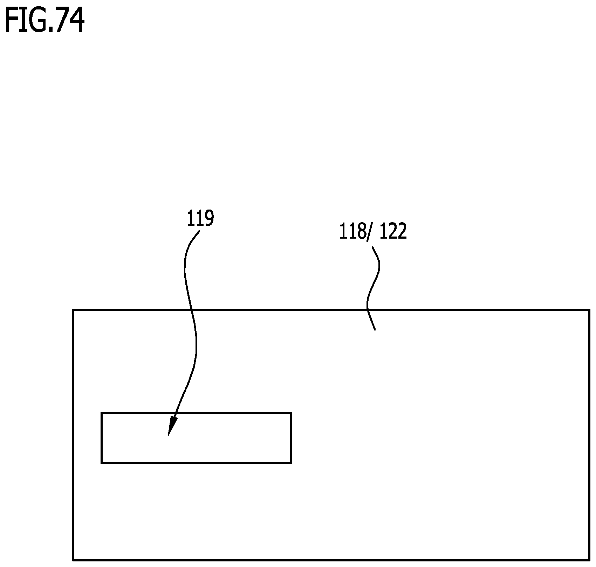

Wie insbesondere in Fig. 74 dargestellt ist, weist vorzugsweise eine in dem ersten Zellterminal 118 und/oder in dem zweiten Zellterminal 122 ausgebildete Durchtrittsöffnung 119 eine Haupterstreckungsrichtung auf, welche zumindest näherungsweise parallel zu einer Hauptseite der elektrochemischen Zelle 100 angeordnet ist.

Im Übrigen stimmt die in den Fig. 16 und 17 zeichnerisch nicht als Ganzes dargestellte weitere Ausführungsform einer elektrochemischen Zelle 100 hinsichtlich Aufbau und Funktion im Wesentlichen mit der in den Fig. 1 bis 10 dargestellten ersten Ausführungsform überein, sodass auf deren Beschreibung insoweit Bezug genommen wird.

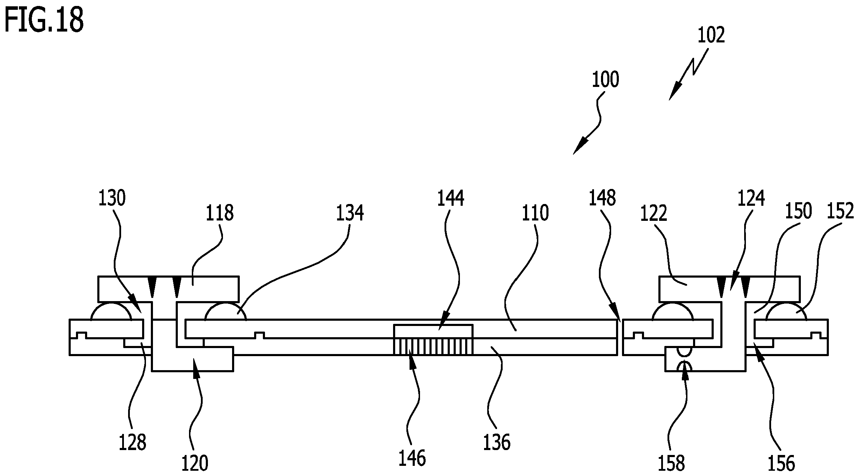

Eine in Fig. 18 zeichnerisch nicht als Ganzes dargestellte weitere Ausführungsform einer elektrochemischen Zelle 100 unterscheidet sich hinsichtlich Aufbau und Funktion im Wesentlichen dadurch von der in den Fig. 1 bis 10 dargestellten ersten Ausführungsform, dass das Sicherungselement 158 außerhalb des zweiten Verbindungsbereichs 156 angeordnet ist.

Dies dient vorzugsweise einer Vermeidung von Leckage bei einem Auslösen des Sicherungselements 158.

Das Sicherungselement 158 ist insbesondere mit einem elektrolytbeständigen thermoplastischen Polymermaterial ummantelt. Als elektrolytbeständige thermoplastische Polymermaterialien sind vorzugsweise Polyethylen, Polyethylenterephthalat, Polypropylen und/oder Polybutylenterephthalat geeignet.

Vorteilhaft kann es sein, wenn das Sicherungselement 158, beispielsweise in Form einer Schmelzsicherung, benachbart zu einem dem zweiten Zellterminal 122 abgewandten Ende des zweiten Kontaktelements 124 angeordnet ist.

Im Übrigen stimmt die in den Fig. 18 zeichnerisch nicht als Ganzes dargestellte weitere Ausführungsform einer elektrochemischen Zelle 100 hinsichtlich Aufbau und Funktion im Wesentlichen mit der in den Fig. 1 bis 10 dargestellten ersten Ausführungsform überein, sodass auf deren Beschreibung insoweit Bezug genommen wird.

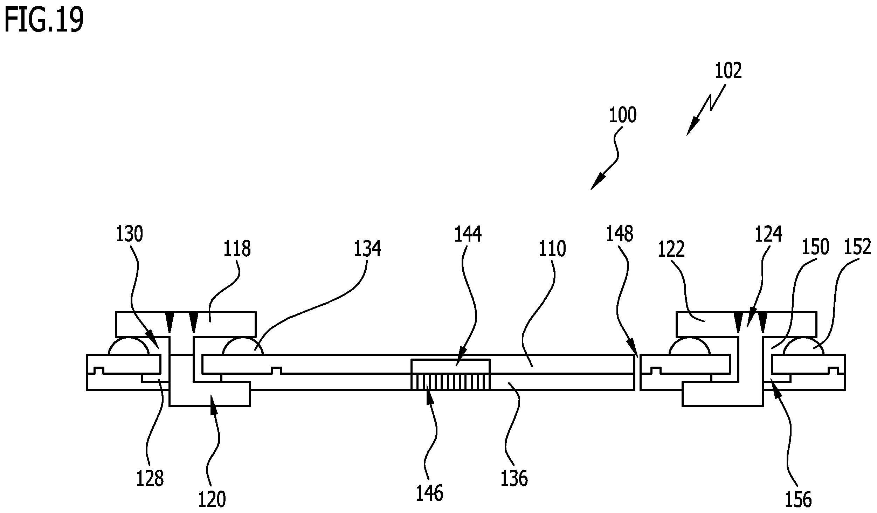

Eine in Fig. 19 zeichnerisch nicht als Ganzes dargestellte weitere Ausführungsform einer elektrochemischen Zelle 100 unterscheidet sich hinsichtlich Aufbau und Funktion im Wesentlichen dadurch von der in den Fig. 1 bis 10 dargestellten ersten Ausführungsform, dass das zweite Kontaktelement 124 kein Sicherungselement 158 aufweist.

Vorteilhaft kann es sein, wenn das Sicherungselement 158 einen Bestandteil des zweiten Verbindungsleiters 116 bildet (nicht gezeigt).

Im Übrigen stimmt die in Fig. 19 zeichnerisch nicht als Ganzes dargestellte weitere Ausführungsform einer elektrochemischen Zelle 100 hinsichtlich Aufbau und Funktion im Wesentlichen mit der in den Fig. 1 bis 10 dargestellten ersten Ausführungsform überein, sodass auf deren Beschreibung insoweit Bezug genommen wird.

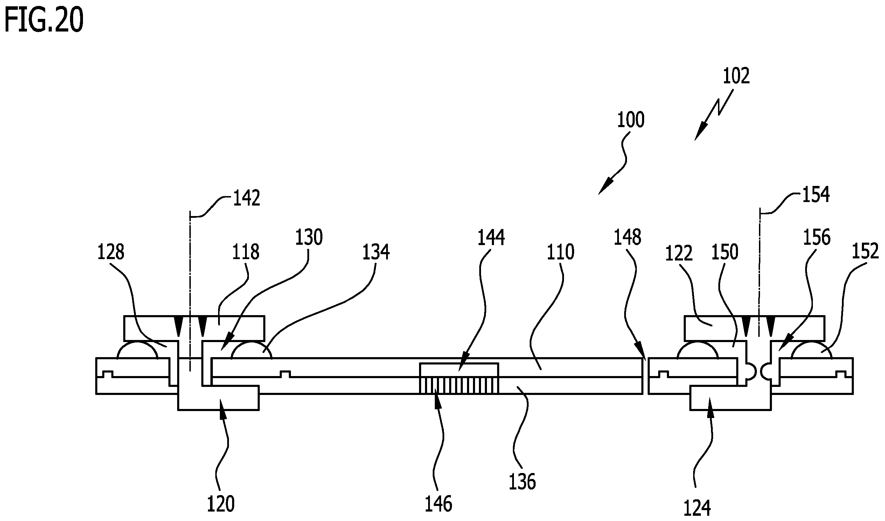

Eine in Fig. 20 nicht zeichnerisch nicht als Ganzes dargestellte weitere Ausführungsform einer elektrochemischen Zelle 100 unterscheidet sich hinsichtlich Aufbau und Funktion im Wesentlichen dadurch von der in den Fig. 1 bis 10 dargestellten ersten Ausführungsform einer elektrochemischen Zelle 100, dass
- das erste Vergusselement 128 das Abdeckelements 110 nicht bezüglich der Mittelachse 142 des ersten Kontaktelements 120 radial an einer dem Innenraum 108 zugewandten Innenseite 132 des Abdeckelements 110 hintergreift; und/oder
- das zweite Vergusselement 150 das Abdeckelements 110 nicht bezüglich der Mittelachse 154 des zweiten Kontaktelements 124 radial an einer dem Innenraum 108 zugewandten Innenseite 132 des Abdeckelements 110 hintergreift.

Günstig kann es sein, wenn das erste Vergusselement 128 und das zweite Vergusselement 150 zumindest näherungsweise dieselbe Form aufweisen.

Vorteilhaft kann es sein, wenn Abmessungen einer ersten Vertiefung 165 des Isolierelements 136 zumindest näherungsweise den Abmessungen der ersten Öffnung 126a des Abdeckelements 110 entsprechen.

Vorzugsweise entsprechen Abmessungen einer zweiten Vertiefung 165 des Isolierelements 136 zumindest näherungsweise den Abmessungen der zweiten Öffnung 126b des Abdeckelements 110.

Es ist vorzugsweise mit Ausnahme der ersten Öffnung 126a und/oder der zweiten Öffnung 126b ein durchgängiger unmittelbarer stofflicher Kontakt zwischen dem Isolierelement 136 und dem Abdeckelements 110 ausgebildet.

Im Übrigen stimmt die in Fig. 20 zeichnerisch nicht als Ganzes dargestellte weitere Ausführungsform einer elektrochemischen Zelle 100 hinsichtlich Aufbau und Funktion im Wesentlichen mit der in den Fig. 1 bis 10 dargestellten ersten Ausführungsform überein, sodass auf deren Beschreibung insoweit Bezug genommen wird.

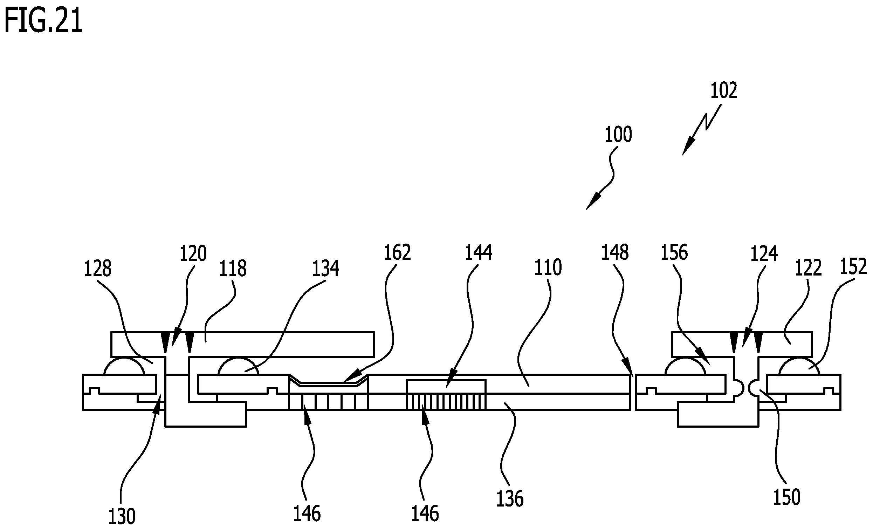

Eine in Fig. 21 bis 23 nicht als Ganzes zeichnerisch dargestellte weitere Ausführungsform einer elektrochemischen Zelle 100 unterscheidet sich hinsichtlich Aufbau und Funktion im Wesentlichen dadurch von der in den Fig. 1 bis 10 dargestellten ersten Ausführungsform, dass die elektrochemische Zelle 100 ein Umschnappelement 162 umfasst, welches sich in einem in Fig. 21 dargestellten Normalbetriebszustand der elektrochemischen Zelle 100 in einem Ruhezustand befindet.

In Fig. 21 ist das erste Zellterminal 118 zur Verdeutlichung größer dargestellt als das zweite Zellterminal 122. Vorzugsweise weisen das erste Zellterminal 118 und das zweite Zellterminal 122 im Wesentlichen dieselben Abmessungen auf.

Im Ruhezustand erstreckt sich das Umschnappelement 162 vorzugsweise in Richtung des Isolierelements 136.

Vorteilhaft kann es sein, wenn das Umschnappelement 162 in einen Arbeitszustand übergeht, in welchem das Umschnappelement 162 in einen Außenraum des Gehäuses 104 vorsteht, wenn der Druck im Innenraum 108 der elektrochemischen Zelle 100 einen Schwellendruckwert (kritischen Druck) übersteigt und/oder wenn die Temperatur im Innenraum 108 des Gehäuses 104 einen Schwellentemperaturwert (kritischen Temperatur) übersteigt.

Das Umschnappelement 162 ist vorzugsweise in einem Bereich des Abdeckelements 110 angeordnet, welcher in einer senkrecht zu der Haupterstreckungsebene des Abdeckelements 110 angeordneten Richtung unterhalb des ersten Zellterminals 118 angeordnet ist.

In dem in Fig. 21 dargestellten Normalbetriebszustand der elektrochemischen Zelle 100 ist das Umschnappelement 162 vorzugsweise von dem ersten Zellterminal 118 beabstandet angeordnet.

In einem nicht zeichnerisch dargestellten Überladungszustand der elektrochemischen Zelle 100 wird der Kurzschluss zwischen dem ersten Zellterminal 118 einerseits und dem Gehäuse 104 sowie dem zweiten Kontaktelement 124 andererseits dadurch erzeugt, dass eine Erhöhung des Drucks im Innenraum 108 der elektrochemischen Zelle 100 beim Überladen der elektrochemischen Zelle 100 einen Übergang des Umschnappelements 162 von dem in Fig. 21 dargestellten Ruhezustand in den nicht zeichnerisch dargestellten Arbeitszustand bewirkt.

Im Arbeitszustand des Umschnappelements 162 drückt das Umschnappelement 162 gegen das erste Zellterminal 118, sodass das erste Zellterminal 118 in elektrisch leitenden Kontakt mit dem Abdeckelement 110 gelangt, was einen Kurzschluss zwischen dem ersten Zellterminal 118 und dem Gehäuse 104 auslöst.

In Ausführungsformen, in welchen ein Umschnappelement 162 vorgesehen ist, kann es günstig sein, wenn das vierte Polymermaterial des zweiten Dichtelements 152 ein oder mehrere Leitadditive umfasst.

Geeignete Leitadditive sind vorzugsweise eines oder mehrere der folgenden: Kohlenstoffmaterialien, insbesondere Leitruß, Graphit, Graphen, Kohlenstoffnanoröhren, Kohlenstofffasern und/oder Kohlenstoffnanozwiebeln, partikuläre metallische Materialien, insbesondere Metall-Pulver, elektrisch leitfähige keramische Materialien, insbesondere Nitride und/oder Carbide, elektrisch leitfähige Polymere, insbesondere trans-Polyacetylen, Polypyrrol, Polyanilin, Poly(-phenylen), Polythiophen und/oder Polystyrol dotiertes Poly-(3,4-ethylen-dioxythiophen) (PEDOT:PSS).

Bevorzugte partikuläre metallische Materialien umfassen vorzugsweise Aluminium, Kupfer, Titan, Eisen, Silber und/oder Legierungen aus den genannten Materialien oder sind daraus gebildet.

Aufgrund des einen oder der mehreren Leitadditive weist das zweite Dichtelement 152 vorzugsweise eine ausreichende elektrische Leitfähigkeit auf, um das zweite Kontaktelement 124 elektrisch leitend mit dem Abdeckelement 110 zu verbinden.

Wenn das Umschnappelement 162 vom Ruhezustand in den Arbeitszustand übergeht und so das erste Zellterminal 118 mit dem Abdeckelements 110 elektrisch leitend kontaktiert sind, wird insbesondere das Sicherungselement 158 aktiviert.

Vorzugsweise schmilzt das Sicherungselement 158, wodurch insbesondere das zweite Zellterminal 122 von dem elektrochemischen Element 106 elektrisch isoliert wird. So kann eine weitere Überladung der elektrochemischen Zelle 100 vermieden werden.

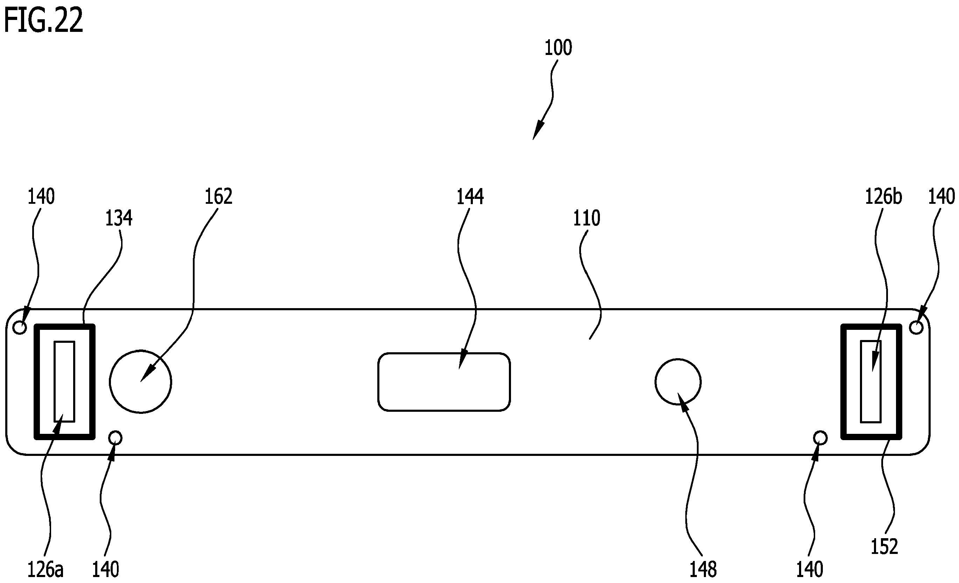

Wie in Fig. 22 zu sehen ist, weist das Abdeckelement 110 vorzugsweise eine, beispielsweise zumindest näherungsweise runde, Öffnung auf, in welcher das Umschnappelement 162 eingebracht wird, beispielsweise mittels Schweißens oder Klebens.

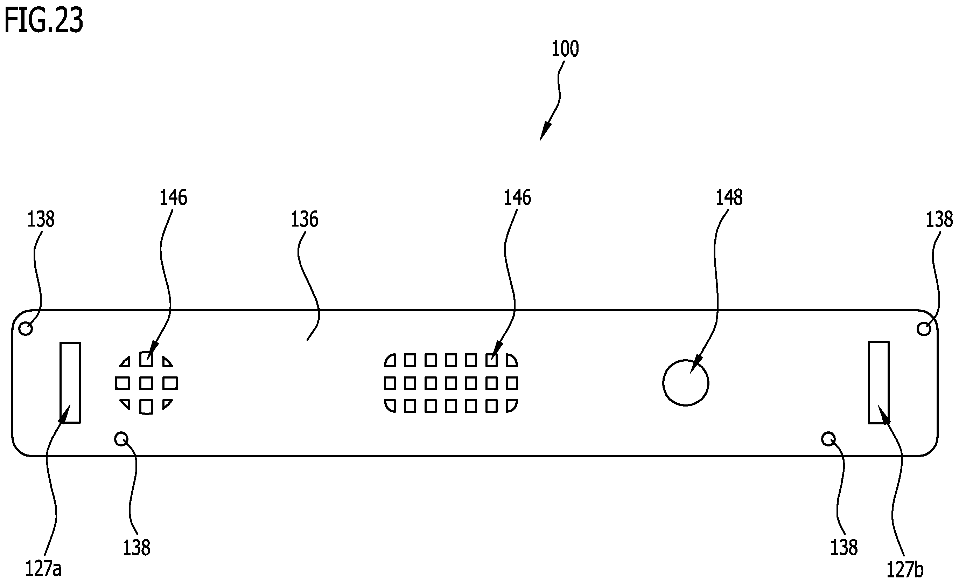

Das Isolierelement 136 weist im Bereich des Umschnappelements 162 vorzugsweise mehrere Ausnehmungen auf, welche insbesondere regelmäßig angeordnet sind. Beispielsweise sind die mehreren Ausnehmungen durch gitterförmig angeordnete Stege voneinander getrennt und/oder begrenzt (vgl. Fig. 23).

Durch die Stege und/oder die Ausnehmungen ist vorzugsweise ein Spritzschutz gebildet, welcher ein übermäßiges Austreten von Elektrolyt aus dem Innenraum 108 der elektrochemischen Zelle 100 reduzieren oder vermeiden kann.

Im Übrigen stimmt die in den Fig. 21 bis 23 dargestellte weitere Ausführungsform einer elektrochemischen Zelle 100 hinsichtlich Aufbau und Funktion im Wesentlichen mit der in den Fig. 1 bis 10 dargestellten ersten Ausführungsform überein, sodass auf deren Beschreibung insoweit Bezug genommen wird.

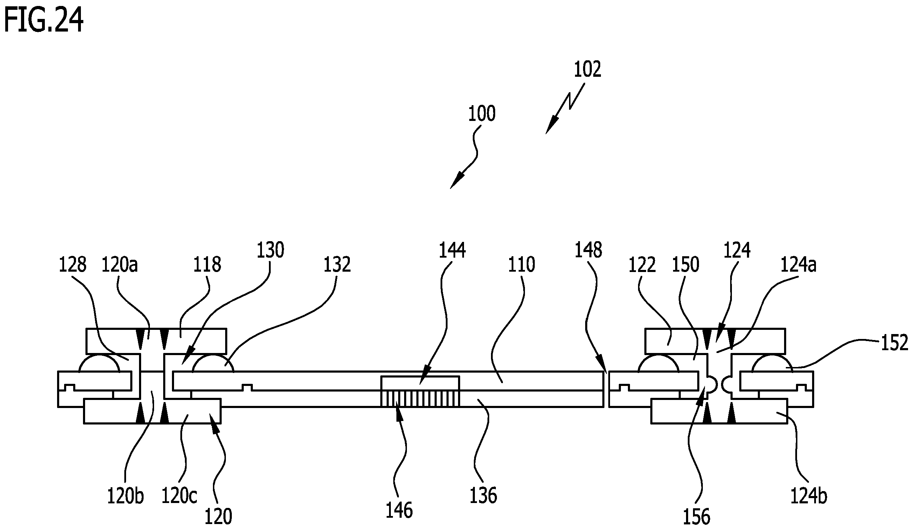

Eine in den Fig. 24 bis 28 nicht als Ganzes zeichnerisch dargestellte weitere Ausführungsform einer elektrochemischen Zelle 100 unterscheidet sich hinsichtlich Aufbau und Funktion im Wesentlichen dadurch von der in den Fig. 1 bis 10 dargestellten ersten Ausführungsform, dass das erste Kontaktelement 120 einen zumindest näherungsweise T-förmigen Querschnitt aufweist und/oder dass das zweite Kontaktelement 124 einen zumindest näherungsweise T-förmigen Querschnitt aufweist. Der Querschnitt ist vorzugsweise parallel zu einer Hauptseite der elektrochemischen Zelle 100 genommen.

Vorteilhaft kann es sein, wenn das erste Kontaktelement 120 ein erstes Kontaktelementbauteil 120a aufweist, welches ein erstes metallisches Material, beispielsweise Aluminium, umfasst oder daraus gebildet ist.

Das erste Kontaktelementbauteil 120a ist, wie im Zusammenhang mit der ersten Ausführungsform einer elektrochemischen Zelle 100 beschrieben, stoffschlüssig mit dem ersten Zellterminal 118 einerseits und einem zweiten Kontaktelementbauteil 120b andererseits verbunden.

Vorliegend sind sowohl das erste Kontaktelementbauteil 120a als auch das zweite Kontaktelementbauteil 120b zumindest näherungsweise quaderförmig ausgebildet.

Günstig kann es sein, wenn das erste Kontaktelement 120 ein drittes Kontaktelementbauteil 120c aufweist, welches insbesondere an einer von dem ersten Kontaktelementbauteil 120a abgewandten Seite des zweiten Kontaktelementbauteils 120b an dem zweiten Kontaktelementbauteil 120b festgelegt ist.

Beispielsweise ist das zweite Kontaktelementbauteil 120b mittig in einer Öffnung des dritten Kontaktelementbauteils 120c aufgenommen. Vorzugsweise sind das zweite Kontaktelementbauteil 120b und das dritte Kontaktelementbauteil 120c des ersten Kontaktelements 120 stoffschlüssig, beispielsweise mittels Laserschweißens und/oder Walzplattierens, miteinander verbunden.

Alternativ zu der dargestellten Variante kann vorgesehen sein, dass in einem Querschnitt ovalförmige Pins aus einem Kontaktelementbauteil herausgestanzt werden, und anschließend in ein metallisches Blech verschweißt werden.

Das zweite Kontaktelementbauteil 120b und/oder das dritte Kontaktelementbauteil 120c des ersten Kontaktelements 120 umfassen vorzugsweise ein zweites metallisches Material, beispielsweise Kupfer, oder sind daraus gebildet.

Das zweite metallische Material ist vorzugsweise ein von dem ersten metallischen Material verschiedenes metallisches Material.

Es kann vorgesehen sein, dass das dritte Kontaktelementbauteil 120c zumindest näherungsweise quaderförmig und/oder als Blech ausgebildet ist.

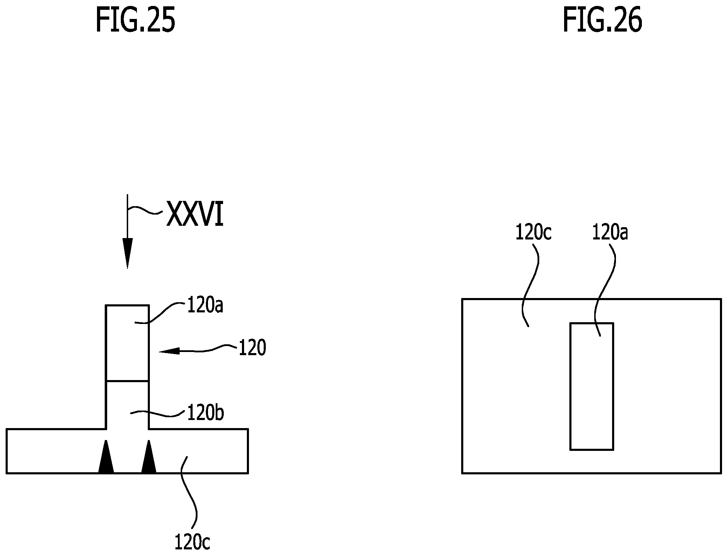

Vorzugsweise weist das dritte Kontaktelementbauteil 120c eine zumindest näherungsweise rechteckförmige Ausnehmung auf, durch welche das zweite Kontaktelementbauteil 120b hindurchgeführt ist und/oder wird (vgl. Fig. 25 und 26).

Insbesondere sind Ränder der Ausnehmungen des dritten Kontaktelementbauteils 120c und ein von dem ersten Kontaktelementbauteil 120a abgewandter Randbereich des zweiten Kontaktelementbauteils 120b stoffschlüssig, beispielsweise mittels Schweißens, miteinander verbunden.

Vorteilhaft kann es sein, wenn das zweite Kontaktelement 124 aus mehreren Teilen hergestellt ist.

Vorzugsweise umfasst das zweite Kontaktelement 124 ein erstes Kontaktelementbauteil 124a, welches einerseits an dem zweiten Zellterminal 122 und andererseits an einem zweiten Kontaktelementbauteil 124b des zweiten Kontaktelements 124 festgelegt ist, beispielsweise mittels Schweißens.

Vorteilhaft kann es sein, wenn eine Haupterstreckungsebene des ersten Kontaktelementbauteils 124a senkrecht zu einer Haupterstreckungsebene des zweiten Kontaktelementbauteils 124b angeordnet ist.

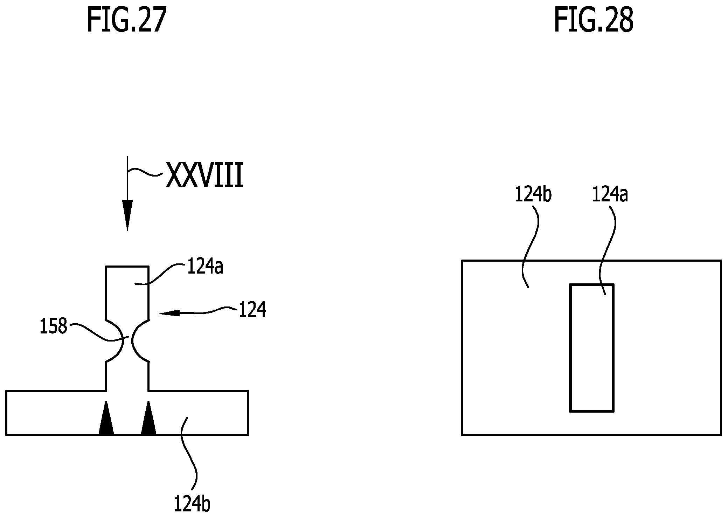

Vorzugsweise weist das zweite Kontaktelementbauteil 124b eine zumindest näherungsweise rechteckförmige Ausnehmung auf, durch welche das erste Kontaktelementbauteil 124a an einer von dem ersten Zellterminal 122 abgewandten Seite des ersten Kontaktelementbauteils 124a festgelegt ist (vgl. Fig. 27 und 28).

Ergänzend kann vorgesehen sein, dass das zweite Kontaktelement 124 ein zeichnerisch nicht dargestelltes drittes Kontaktelementbauteil aufweist, welches beispielsweise an dem zweiten Kontaktelementbauteil 124b festgelegt ist (wie im Zusammenhang mit dem ersten Kontaktelement 120 beschrieben).

Vorzugsweise umfassen das erste Kontaktelementbauteil 124a, das zweite Kontaktelementbauteil 124b und das dritte Kontaktelementbauteil dasselbe metallische Material, beispielsweise Aluminium, oder sind daraus gebildet.

Ein Querschnitt des zweiten Kontaktelements 124 ist vorzugsweise rechteckförmig ausgebildet. Der Querschnitt ist vorzugsweise zumindest näherungsweise parallel zu einer Haupterstreckungsebene des Abdeckelements 110 genommen.

Im Übrigen stimmt die in den Fig. 24 bis 28 dargestellte weitere Ausführungsform einer elektrochemischen Zelle 100 hinsichtlich Aufbau und Funktion mit der in den Fig. 1 bis 10 dargestellten Ausführungsform überein, sodass auf deren Beschreibung insoweit Bezug genommen wird.

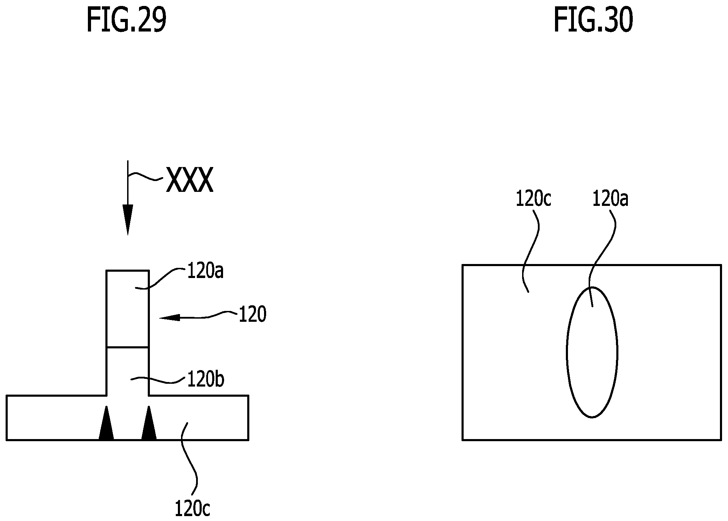

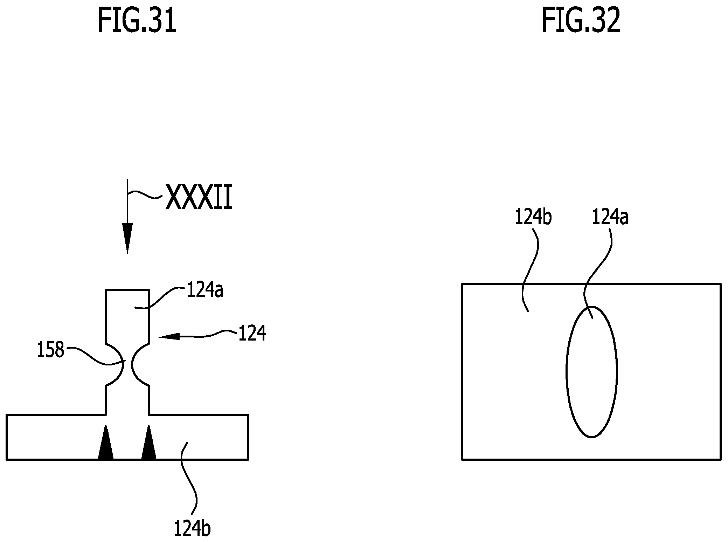

Eine in den Fig. 29 bis 32 zeichnerisch nicht als Ganzes dargestellte weitere Ausführungsform einer elektrochemischen Zelle 100 unterscheidet sich hinsichtlich Aufbau und Funktion im Wesentlichen dadurch von der in den Fig. 24 bis 28 dargestellten Ausführungsform, dass ein Querschnitt des ersten Kontaktelementbauteils 120a des ersten Kontaktelements 120 und/oder ein Querschnitt des ersten Kontaktelementbauteils 124a des zweiten Kontaktelements 124 zumindest näherungsweise elliptisch und/oder oval ausgebildet ist.

Der Querschnitt ist vorzugsweise parallel zu einer Haupterstreckungsebene des Abdeckelements 110 genommen.

Im Übrigen stimmt die in den Fig. 29 bis 32 dargestellte weitere Ausführungsform einer elektrochemischen Zelle 100 hinsichtlich Aufbau und Funktion im Wesentlichen mit der in den Fig. 29 bis 32 dargestellten Ausführungsform überein, sodass auf deren Beschreibung insoweit Bezug genommen wird.

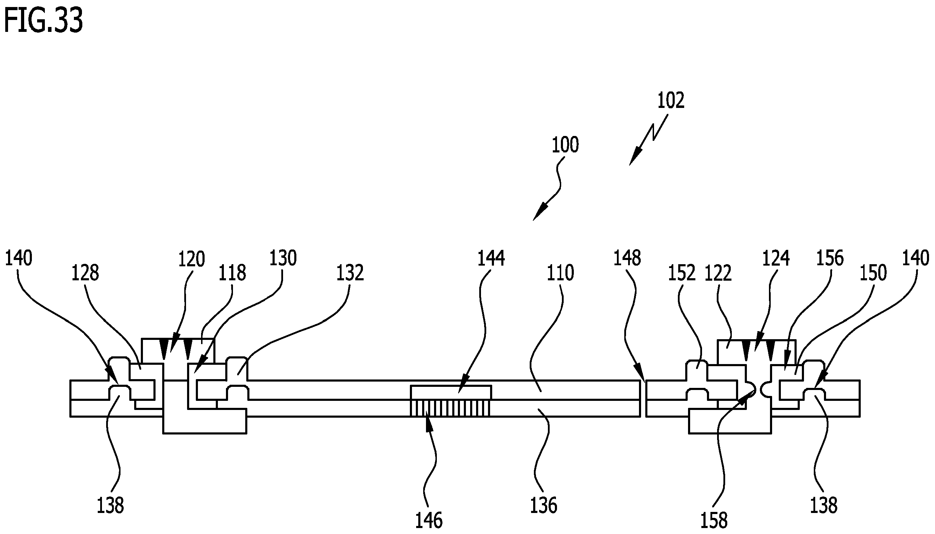

Eine den Fig. 33 bis 35 nicht als Ganzes zeichnerisch dargestellte weitere Ausführungsform einer elektrochemischen Zelle 100 unterscheidet sich hinsichtlich Aufbau und Funktion im Wesentlichen dadurch von der in den Fig. 1 bis 10 dargestellten ersten Ausführungsform, dass das erste Dichtelement 134 und/oder das zweite Dichtelement 152 einen Bestandteil des Abdeckelements 110 bilden.

Vorzugsweise erstreckt sich eine erste, insbesondere zu einer Ringform geschlossene, Erhebung längs einer von dem Innenraum 108 zu dem ersten Zellterminal 118 weisenden Richtung von einem Grundkörper des Abdeckelements 110 weg. Die Erhebung bildet vorzugsweise das erste Dichtelement 134 und umgibt das erste Vergusselement 128 bezüglich einer Mittelachse 142 des ersten Kontaktelements 120 radial.

Insbesondere erstreckt sich eine zweite, insbesondere zu einer Ringform geschlossene, Erhebung längs einer von dem Innenraum 108 zu dem zweiten Zellterminal 122 weisenden Richtung von einem Grundkörper des Abdeckelements 110 weg.

Alternativ zu einer geschlossenen Ringform kann vorgesehen sein, dass das erste Dichtelement 134 und/oder das zweite Dichtelement 152 mindestens eine Unterbrechung aufweist (nicht gezeigt).

Die Erhebung bildet das zweite Dichtelement 152 und umgibt das zweite Vergusselement 150 bezüglich einer Mittelachse 154 des zweiten Kontaktelements 124 radial.

Es kann vorgesehen sein, dass das erste Dichtelement 134 und/oder das zweite Dichtelement 152 in das Abdeckelements 110 eingeprägt sind und/oder werden.

Beispielsweise sind das erste Dichtelement 134 und/oder das zweite Dichtelement 152 in Form von Prägungen ausgebildet.

Es kann vorgesehen sein, dass das zweite Dichtelement 152 teilweise in Form einer Dichtraupe aus dem vierten Polymermaterial und teilweise in Form einer Prägung und/oder Sicke ausgebildet sind (nicht gezeigt).

So kann ein Sicken-Dichtraupen-Hybrid-Dichtelement ausgebildet sein und/oder werden. Gemäß dieser Ausführungsform ist das vierte Polymermaterial vorzugsweise elektrisch isolierend. Eine elektrisch leitende Kontaktfläche besteht so nur in Bereichen der Sicke und die elektrisch leitende Kontaktfläche zwischen dem Gehäuse 104 und dem zweiten Zellterminal 122 insgesamt ist minimiert. Ein Strom kann in einem Fehlerfall stärker limitiert werden.

Ergänzend oder alternativ kann auch das erste Dichtelement 134 bereichsweise eine oder mehrere Sicken und bereichsweise eine oder mehrere Dichtraupen umfassen oder daraus gebildet sein.

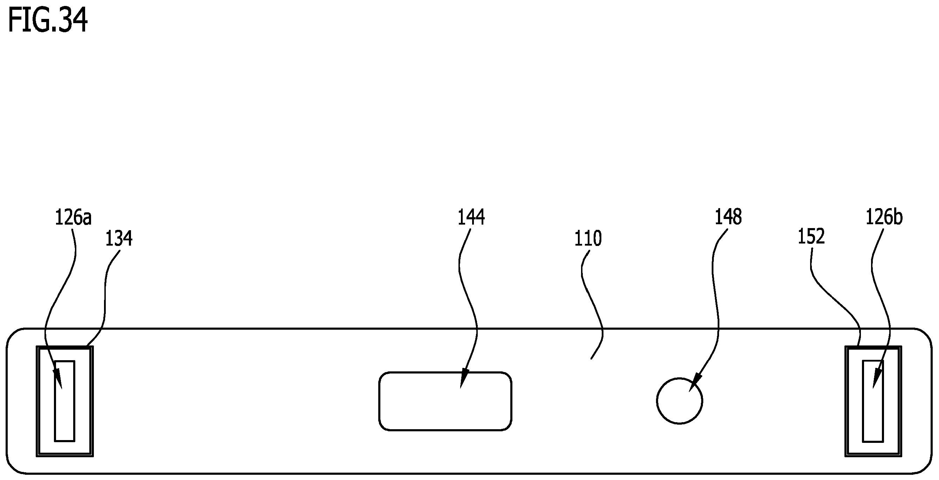

Fig. 34 zeigt dabei das Abdeckelement 110 vor einer Montage in der elektrochemischen Zelle 100.

Es kann vorgesehen sein, dass das erste Dichtelement 134 aus demselben Material wie das Abdeckelement 110 gebildet ist. Insbesondere ist das erste Dichtelement 134 einstückig mit dem Grundkörper des Abdeckelements 110 ausgebildet.

Günstig kann es sein, wenn das zweite Dichtelement 152 aus demselben Material des Abdeckelements 110 gebildet ist. Insbesondere ist das zweite Dichtelement 152 einstückig mit dem Grundkörper des Abdeckelements 110 ausgebildet.

Günstig kann es sein, wenn durch das Einbringen, beispielsweise Einprägen, des ersten Dichtelements 134 und/oder des zweiten Dichtelements 152 auf einer dem Innenraum 108 des Gehäuses 104 zugewandten Innenseite 132 des Abdeckelements 110 jeweils ein Rücksprung und/oder Einbuchtung ausgebildet ist, welcher insbesondere komplementär zu der das jeweilige Dichtelement 134,152 bildenden Erhebung ausgebildet ist.

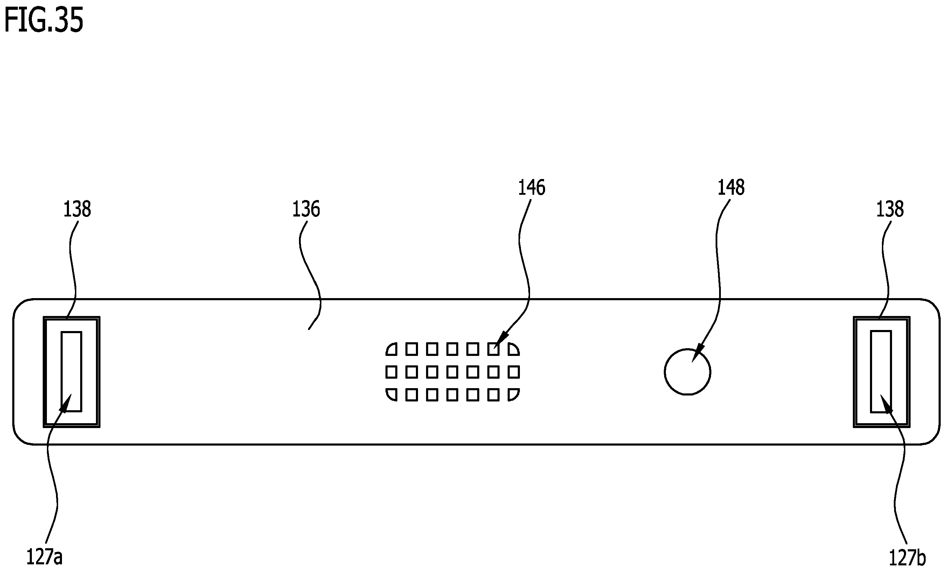

Diese Rücksprünge und/oder Einbuchtungen bilden vorzugsweise Positionierrücksprünge 140. Wie insbesondere in Fig. 35 dargestellt ist, weist das Isolierelement 136 vorzugsweise komplementär dazu ausgebildete Positioniervorsprünge 138 auf.

Insbesondere ist ein erster Positioniervorsprung 138 zu einer Ringform geschlossen um die erste Öffnung 127a angeordnet, beispielsweise durch eine Sicke.

Vorzugsweise ist ein zweiter Positioniervorsprung 138 zu einer Ringform geschlossen um die zweite Öffnung 127b des Isolierelements herum angeordnet, beispielsweise in durch eine Sicke.

Der erste Positioniervorsprung 138 und/oder der zweite Positioniervorsprung 138 weisen beispielsweise einen zumindest näherungsweise rechteckförmigen Querschnitt auf. Der Querschnitt ist vorzugsweise parallel zu einer Haupterstreckungsebene des Isolierelements 136 genommen.

Weitere Positioniervorsprünge 138 und komplementär dazu ausgebildete Positionierrücksprünge 140 sind vorzugsweise entbehrlich.

Eine Positionierung des Abdeckelements 110 relativ zu dem Isolierelement 136 kann über die ringförmig geschlossenen Positioniervorsprünge 138 des Isolierelements 136 und die komplementär dazu ausgebildete Positionierrücksprünge 140 des Abdeckelements 110 erfolgen.

Zur Einfüllung und/oder Härtung des ersten Harzmaterials und des zweiten Harzmaterials werden das Abdeckelements 110 und das Isolierelement 136 beispielsweise mittels eines Halteelements relativ zueinander fixiert. So kann ein Verlaufen des ersten Harzmaterials und/oder zweiten Harzmaterials vor einer vollständigen Aushärtung vermieden werden.

Als Halteelement wird vorzugsweise ein Niederhalter verwendet.

Im Übrigen stimmt die den Fig. 33 bis 35 dargestellte weitere Ausführungsform einer elektrochemischen Zelle 100 hinsichtlich Aufbau und Funktion mit der in den Fig. 1 bis 10 dargestellten ersten Ausführungsform überein, sodass auf deren Beschreibung insoweit Bezug genommen wird.

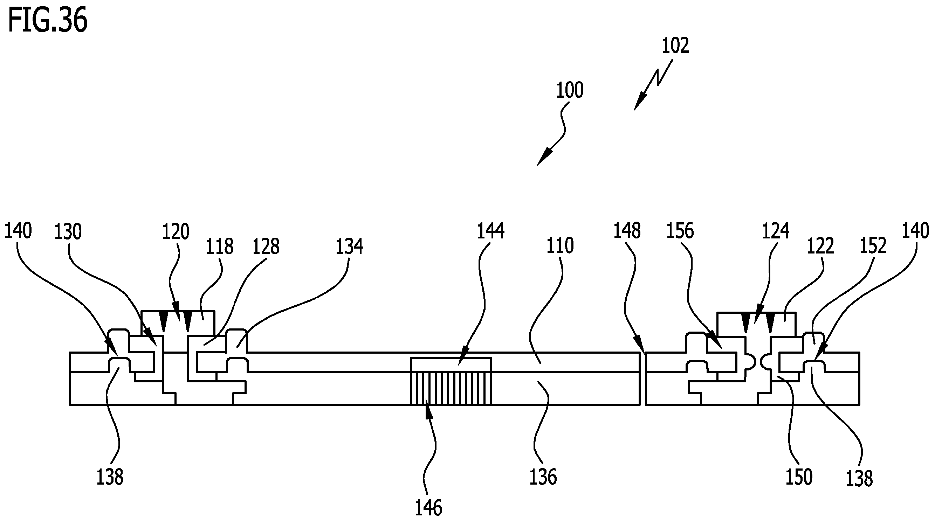

Eine in Fig. 36 zeichnerisch nicht als Ganzes dargestellte weitere Ausführungsform einer elektrochemischen Zelle 100 unterscheidet sich hinsichtlich Aufbau und Funktion im Wesentlichen dadurch von der in den Fig. 33 bis 35 dargestellten Ausführungsform, dass das erste Kontaktelement 120 und/oder das zweite Kontaktelement 124 in das Isolierelement 136 eingelegt sind und/oder werden.

Beispielsweise bildet das erste Kontaktelement 120 eine Einlegeteil.

Insbesondere bildet das zweite Kontaktelement 124 ein Einlegeteil.

Beispielsweise ist ein Formschluss zwischen dem Isolierelement 136 und dem ersten Kontaktelement 120, insbesondere in einer parallel zu der Mittelachse 142 des ersten Kontaktelements 120 angeordneten Richtung, ausgebildet.

Vorzugsweise ist ein Formschluss zwischen dem Isolierelement 136 und dem zweiten Kontaktelement 124, insbesondere in einer parallel zu der Mittelachse 154 des zweiten Kontaktelements 124 angeordneten Richtung, ausgebildet.

Eine Abdichtung zwischen dem ersten Kontaktelement 124 und dem Isolierelement 136 und/oder dem zweiten Kontaktelement 124 und dem Isolierelement 136 ist insbesondere durch das Eigengewicht der jeweiligen Bauteile ausgebildet.

Das Isolierelement 136 wird insbesondere an das erste Kontaktelement 120 und/oder das zweite Kontaktelement 124 angespritzt.

Im Übrigen stimmt die in Fig. 36 dargestellte weitere Ausführungsform einer elektrochemischen Zelle hinsichtlich Aufbau und Funktion im Wesentlichen mit der in den Fig. 33 bis 35 dargestellten Ausführungsform überein, sodass auf deren Beschreibung insoweit Bezug genommen wird.

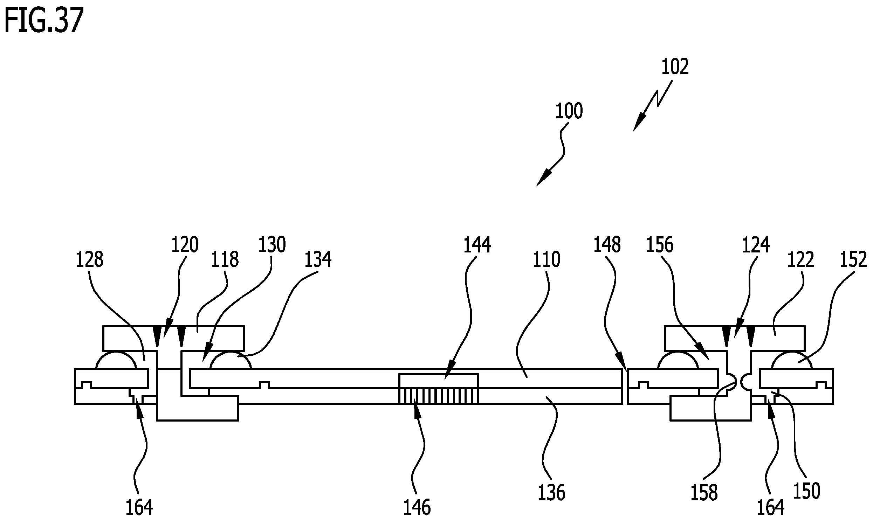

Eine in Fig. 37 zeichnerisch nicht als Ganzes dargestellte weitere Ausführungsform einer elektrochemischen Zelle 100 unterscheidet sich hinsichtlich Aufbau und Funktion im Wesentlichen dadurch von der in den Fig. 1 bis 10 dargestellten ersten Ausführungsform, dass das erste Harzmaterial und/oder das zweite Harzmaterial nach einem Verbinden des ersten Zellterminals 118 mit dem ersten Verbindungselement 120 und/oder nach einem Verbinden des zweiten Zellterminals 122 mit dem zweiten Kontaktelement 124 eingefüllt werden.

Insbesondere weist das Isolierelement 136 im Bereich des ersten Verbindungsbereichs 130 eine erste Einfüllöffnung 164 auf, durch welche das erste Harzmaterial in fließfähigem Zustand in den ersten Verbindungsbereich 130 eingefüllt wird.

Vorteilhaft kann es sein, wenn das Isolierelement 136 im Bereich des zweiten Verbindungsbereichs 156 eine zweite Einfüllöffnung 164 aufweist, durch welche das zweite Harzmaterial in fließfähigem Zustand in den zweiten Verbindungsbereich 156 eingefüllt wird.

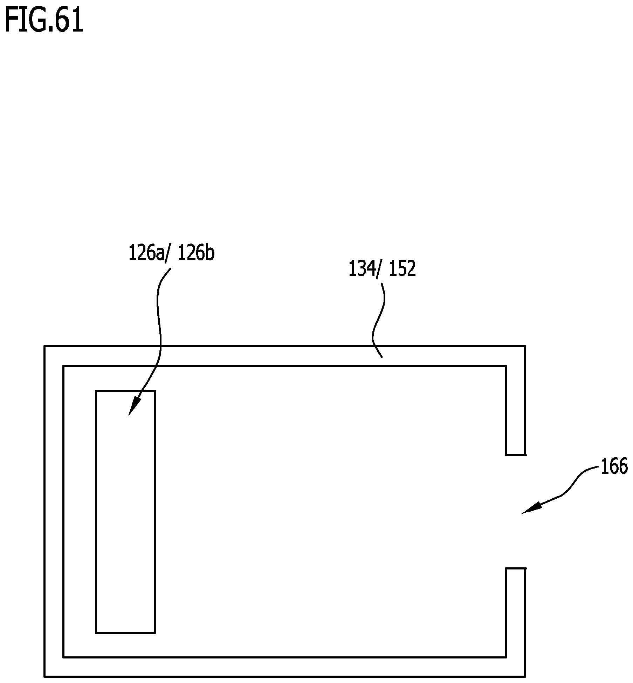

Insbesondere um eine Befüllung zu optimieren, kann vorgesehen sein, dass das erste Dichtelement 134 und/oder das zweite Dichtelement 152 nicht eine geschlossene Ringform bilden, sondern insbesondere eine oder mehrere Unterbrechungen 166 aufweisen (vgl. Fig. 61).

Die eine oder die mehreren Unterbrechungen 166 bilden beispielsweise Entlüftungsöffnungen.

Zur Herstellung der elektrochemischen Zelle 100 wird vorzugsweise das Abdeckelement 110 mittels der Positioniervorsprünge 138 und Positionierrücksprünge 140 auf dem Isolierelement 136 positioniert.

Die erste Öffnung 126a des Abdeckelements 110 und die erste Öffnung 127a des Isolierelements 136 werden vorzugsweise derart angeordnet, dass die deckungsgleich sind.

Vorzugsweise werden die zweite Öffnung 126b des Abdeckelements 110 und die zweite Öffnung 127b des Isolierelements 136 derart angeordnet, dass die deckungsgleich sind.

Anschließend wird vorzugsweise das erste Kontaktelement 120 durch die ersten Öffnungen 126a, 127a hindurchgeführt und/oder das zweite Kontaktelement 124 durch die zweiten Öffnungen 126b, 127b hindurchgeführt.

Währenddessen oder anschließend wird beispielsweise das erste Zellterminal 118 auf dem ersten Kontaktelement 120 positioniert. Insbesondere wird das zweite Zellterminal 122 auf dem zweiten Kontaktelement 124 positioniert.

Beispielsweise werden die Zellterminals 118, 122 und jeweiligen Kontaktelemente 120, 124 kraftschlüssig mittels eines oder mehrerer Halteelemente, beispielsweise Niederhalter, zusammengehalten, während sie stoffschlüssig, beispielsweise mittels Laserschweißens, miteinander verbunden werden.

Anschließend können das eine oder die mehreren Halteelemente entfernt werden.

Günstig kann es sein, wenn vor einer Befüllung der Verbindungsbereiche 130, 156 das bisherige Bauteil gehärtet wird, beispielsweise in einer Härtestraße.

Anschließend wird vorzugsweise das erste Harzmaterial, beispielsweise durch die erste Einfüllöffnung 164, in den ersten Verbindungsbereich 130 eingefüllt.

Insbesondere wird anschließend oder währenddessen das zweite Harzmaterial, beispielsweise durch die zweite Einfüllöffnung 164 in den zweiten Verbindungsbereich 156 eingefüllt.

Anschließend wird das erste Harzmaterial und/oder das zweite Harzmaterial vorzugsweise durch Trocknen zu dem ersten Polymermaterial bzw. dem zweiten Polymermaterial umgesetzt.

Hierbei entstehen das erste Vergusselement 128 und das zweite Vergusselement 150.

Im Übrigen stimmt die in Fig. 37 dargestellte weitere Ausführungsform einer elektrochemischen Zelle 100 hinsichtlich Aufbau und Funktion im Wesentlichen mit der in den Fig. 1 bis 10 dargestellten ersten Ausführungsform überein, sodass auf deren Beschreibung insoweit Bezug genommen wird.

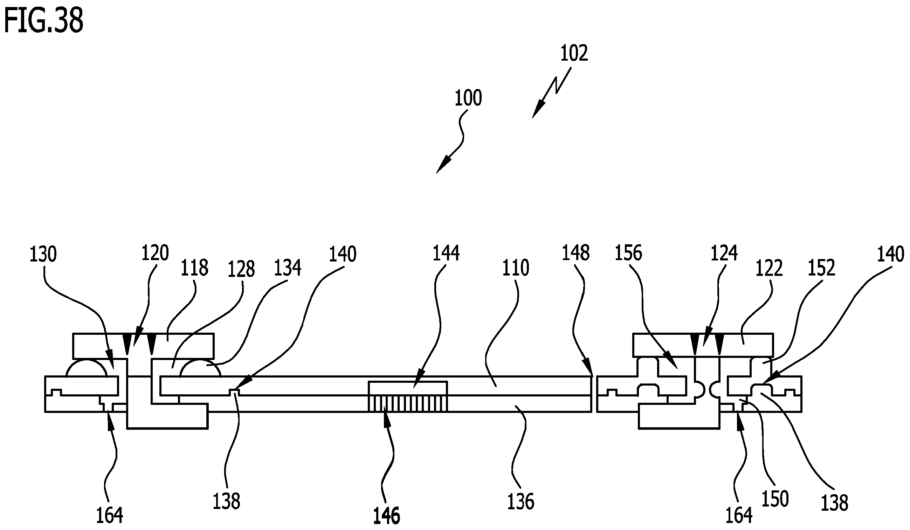

Eine Fig. 38 zeichnerisch nicht als Ganzes dargestellte weitere Ausführungsform einer elektrochemischen Zelle 100 unterscheidet sich hinsichtlich Aufbau und Funktion im Wesentlichen dadurch von der in Fig. 37 dargestellten Ausführungsform, dass das zweite Dichtelement 152 wie im Zusammenhang mit der in den Fig. 33 bis 35 dargestellten Ausführungsform beschrieben als Bestandteil des Abdeckelements 110 ausgebildet ist.

Beispielsweise liegt das Abdeckelement 110 im Bereich des zweiten Verbindungsbereichs 156 auf einem, beispielsweise durch eine Sicke ausgebildeten, Positioniervorsprung 138 des Isolierelements 136 auf.

Es kann vorgesehen sein, dass das zweite Zellterminal 122 in direktem stofflichen Kontakt mit dem als Erhebung des Abdeckelements 110 ausgebildeten zweiten Dichtelement 152 steht. Hierdurch kann eine Korrosion minimiert werden.

Vorteilhaft kann es sein, wenn zwischen dem zweiten Zellterminal 122 und dem zweiten Dichtelement 152 eine elektrisch isolierende Beschichtung, insbesondere eine Oxidschicht, ausgebildet wird, beispielsweise eine Aluminiumoxidschicht. So kann ein elektrischer Widerstand zwischen dem Gehäuse 104 und dem zweiten Zellterminal 122 ausgebildet sein. Dieser begrenzt insbesondere den Stromfluss und erhöht eine Sicherheit der elektrochemischen Zelle 100.

Es kann vorgesehen sein, dass Kontaktflächen des zweiten Zellterminals 122 und/oder des zweiten Dichtelements 152 einer Oberflächenbehandlung unterzogen werden. Beispielsweise werden die Kontaktflächen eloxiert und/oder eine Oberflächenrauigkeit erhöht, beispielsweise mittels Sandstrahlens.

So kann zum einen der elektrische Widerstand der Kontaktflächen erhöht und zum anderen ein direkter stofflicher Kontakt zwischen den Kontaktflächen zumindest punktuell unterbrochen werden.

Im Übrigen stimmt die in Fig. 38 dargestellte weitere Ausführungsform einer elektrochemischen Zelle 100 hinsichtlich Aufbau und Funktion im Wesentlichen mit der in Fig. 37 dargestellten Ausführungsform überein, sodass auf deren Beschreibung insoweit Bezug genommen wird.

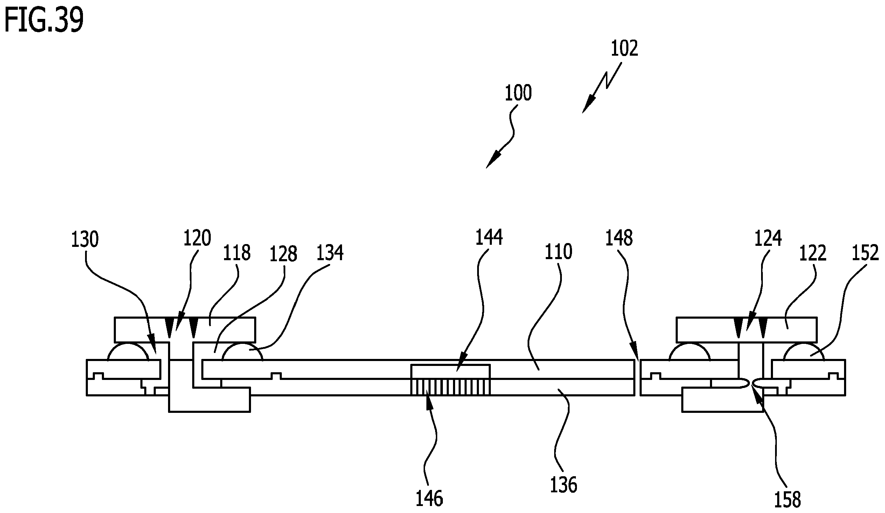

Eine in Fig. 39 zeichnerisch nicht als Ganzes dargestellte weitere Ausführungsform einer elektrochemischen Zelle 100 unterscheidet sich hinsichtlich Aufbau und Funktion im Wesentlichen dadurch von der in Fig. 37 dargestellten Ausführungsform, dass das zweite Kontaktelement 124 elektrisch leitend und/oder stofflich mit dem Abdeckelement 108 verbunden ist.

Das Sicherungselement 158 ist vorzugsweise auf einer dem Innenraum 108 des Gehäuses 104 zugewandten Seite des Abdeckelements 108 angeordnet.

So ist das Gehäuse 104 beispielsweise auf das Potential des zweiten Zellterminals 122 gebracht.

Die Einfüllung des ersten Harzmaterials und/oder des zweiten Harzmaterials erfolgt vorzugsweise im verschweißten Zustand der Zellterminals 118, 122 mit den Kontaktelementen 120, 124.

Im Übrigen stimmt die in Fig. 39 dargestellte Ausführungsform einer elektrochemischen Zelle 100 hinsichtlich Aufbau und Funktion im Wesentlichen mit der in Fig. 37 dargestellten Ausführungsform überein, sodass auf deren Beschreibung insoweit Bezug genommen wird.

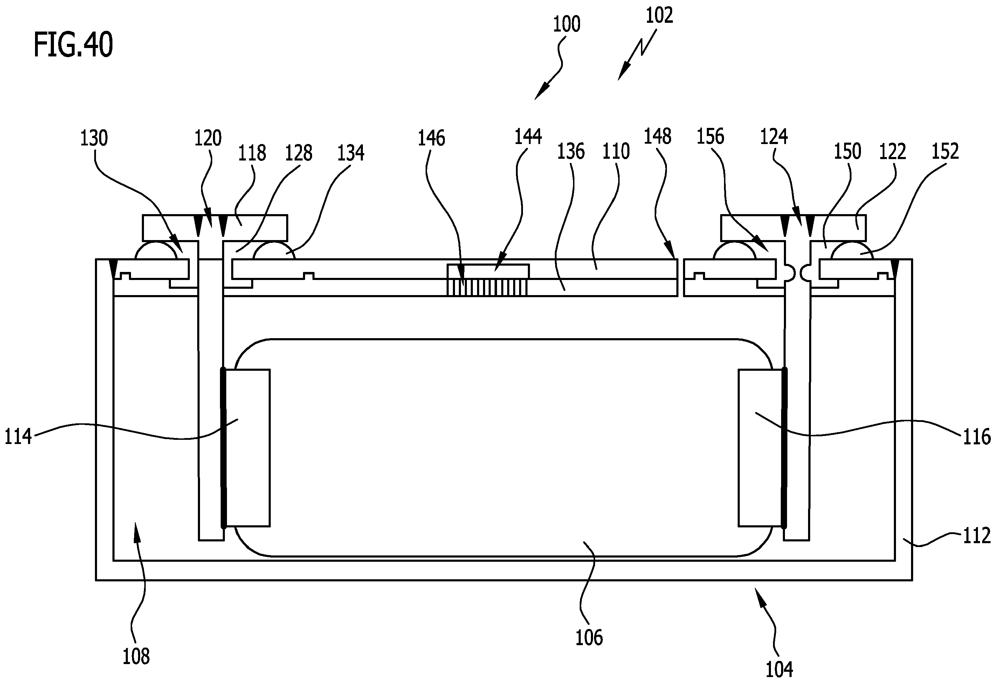

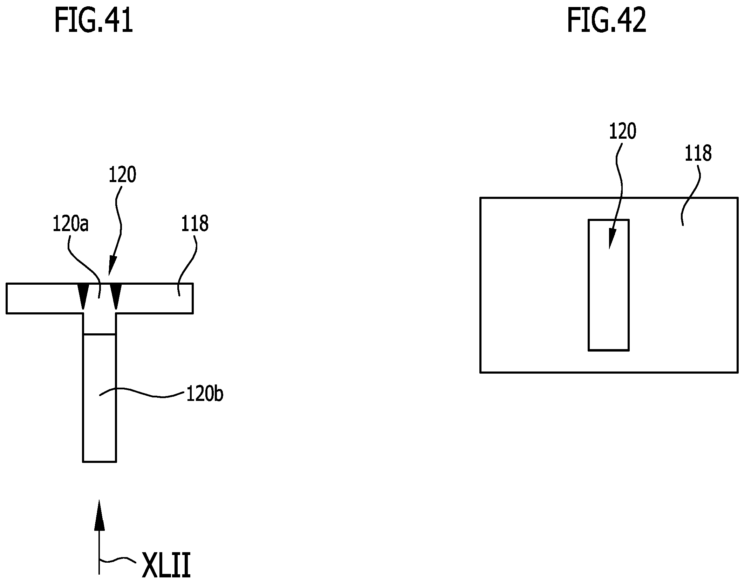

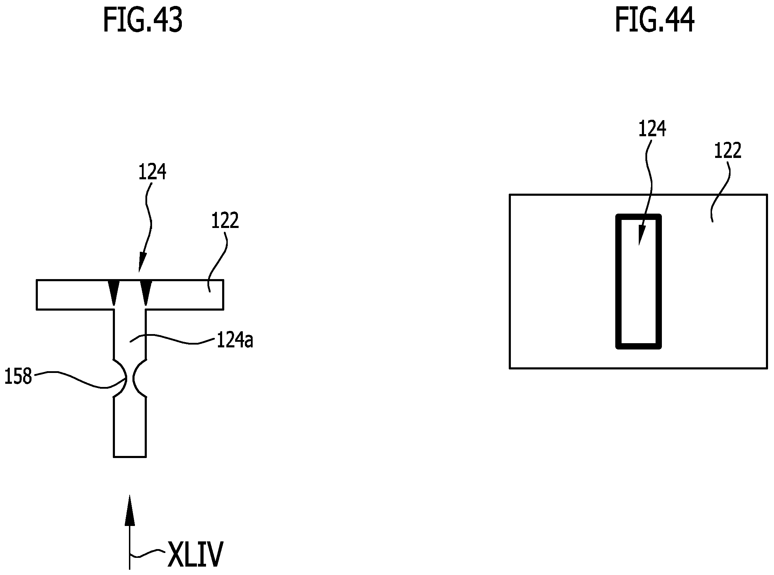

Eine in den Fig. 40 bis 44 dargestellte weitere Ausführungsform einer elektrochemischen Zelle 100 unterscheidet sich hinsichtlich Aufbau und Funktion im Wesentlichen dadurch von der in den Fig. 1 bis 10 dargestellten ersten Ausführungsform, dass das erste Kontaktelement 120 und/oder das zweite Kontaktelement 124 seitlich mit dem ersten Verbindungsleiter 114 bzw. dem zweiten Verbindungsleiter 116 verbunden sind.

Auch eine Anbindung der Verbindungsleiter 114, 116 an das elektrochemische Element 106 ist seitlich ausgebildet.

Im Übrigen stimmt die in den Fig. 40 bis 44 dargestellte Ausführungsform hinsichtlich Aufbau und Funktion im Wesentlichen mit der in den Fig. 1 bis 10 dargestellten ersten Ausführungsform überein, sodass auf deren Beschreibung insoweit Bezug genommen wird.

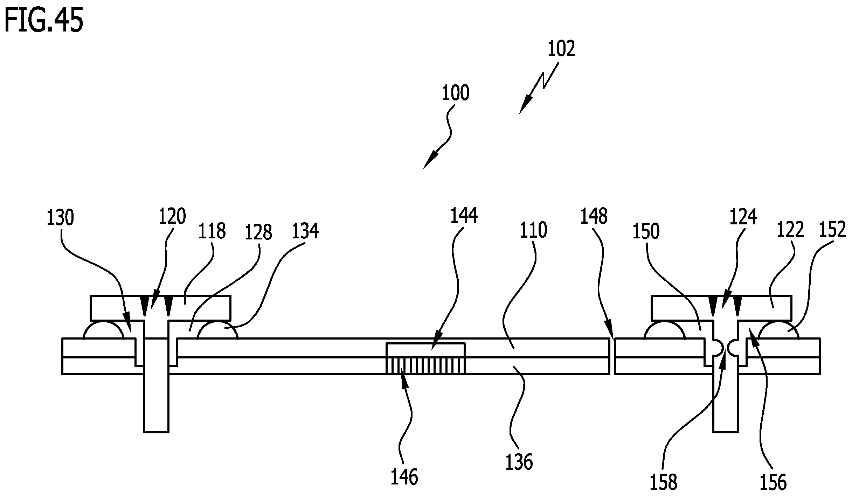

Eine in Fig. 45 nicht als Ganzes zeichnerisch dargestellte weitere Ausführungsform einer elektrochemischen Zelle 100 unterscheidet sich hinsichtlich Aufbau und Funktion im Wesentlichen dadurch von der in den Fig. 40 bis 44 dargestellten Ausführungsform, dass die elektrochemische Zelle 100 kein Isolierelement 136 umfasst.

Insbesondere hinterschneiden das erste Vergusselement 128 und/oder das zweite Vergusselement 150 das Abdeckelement 110 auf einer dem Innenraum 108 des Gehäuses 104 zugewandten Seite nicht.

Eine Befüllung des ersten Verbindungsbereichs 130 mit dem ersten Harzmaterial und/oder eine Befüllung des zweiten Verbindungsbereichs 156 mit dem zweiten Harzmaterial erfolgt vorzugsweise von einer im montierten Zustand dem Innenraum 108 zugewandten Seite.

Im Übrigen stimmt die in Fig. 45 dargestellte weitere Ausführungsform einer elektrochemischen Zelle hinsichtlich Aufbau und Funktion im Wesentlichen mit der in den Fig. 40 bis 44 dargestellten Ausführungsform überein, sodass auf deren Beschreibung insoweit Bezug genommen wird.

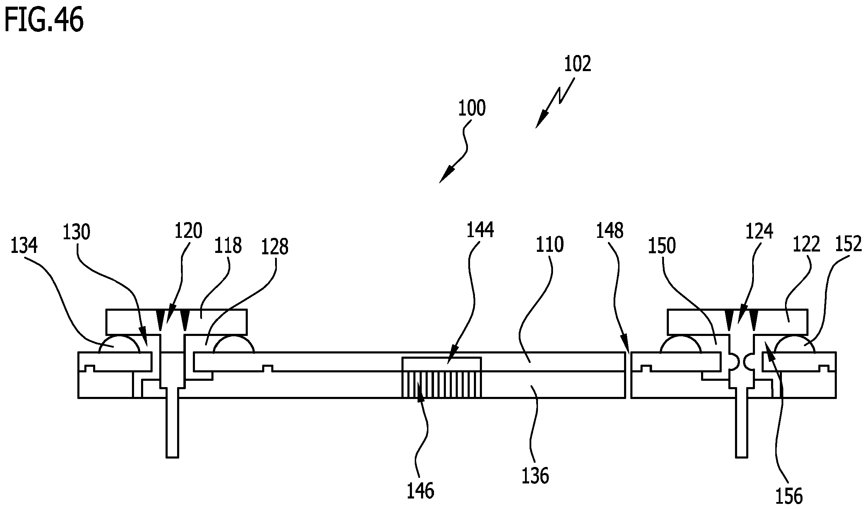

Eine in Fig. 46 zeichnerisch nicht als Ganzes dargestellte weitere Ausführungsform einer elektrochemischen Zelle 100 unterscheidet sich hinsichtlich Aufbau und Funktion im Wesentlichen dadurch von der in den Fig. 40 bis 44 dargestellten Ausführungsform, dass das Isolierelement 136 eine erste Einfüllöffnung 164 im Bereich des ersten Verbindungsbereichs 130 und/oder eine zweite Einfüllöffnung 164 im Bereich des zweiten Verbindungsbereichs 156 aufweist.

Die Einfüllöffnungen 164 dienen vorzugsweise einer Einfüllung des ersten Harzmaterials in den ersten Verbindungsbereich 130 und/oder einer Einfüllung des zweiten Harzmaterials in den zweiten Verbindungsbereich 156.

Vorteilhaft kann es sein, wenn das erste Kontaktelement 120 in einem dem Innenraum 108 zugewandten Bereich unterhalb des Abdeckelements 110 eine um ca. 10 % oder mehr, beispielsweise um ca. 30 % oder mehr, verringerte Querschnittsfläche aufweist, verglichen mit dem übrigen ersten Kontaktelement 120.

Es kann vorgesehen sein, dass das zweite Kontaktelement 124 in einem den dem Innenraum 108 zugewandten Bereich unterhalb des Abdeckelements 110 eine um ca. 10 % oder mehr, beispielsweise um ca. 30 % oder mehr, verringerte Querschnittsfläche aufweist, verglichen mit dem übrigen zweiten Kontaktelement 124.

Im Übrigen stimmt die in Fig. 46 dargestellte weitere Ausführungsform einer elektrochemischen Zelle 100 hinsichtlich Aufbau und Funktion im Wesentlichen mit der in den Fig. 40 bis 44 dargestellten Ausführungsform überein, sodass auf deren Beschreibung insoweit Bezug genommen wird.

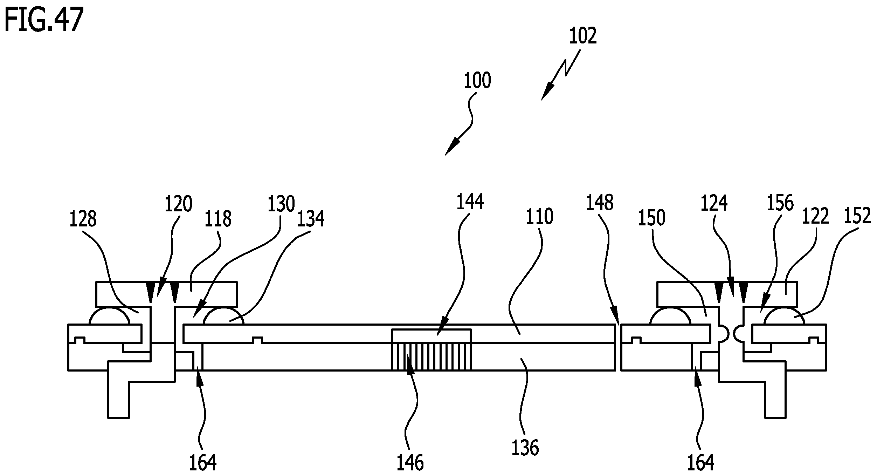

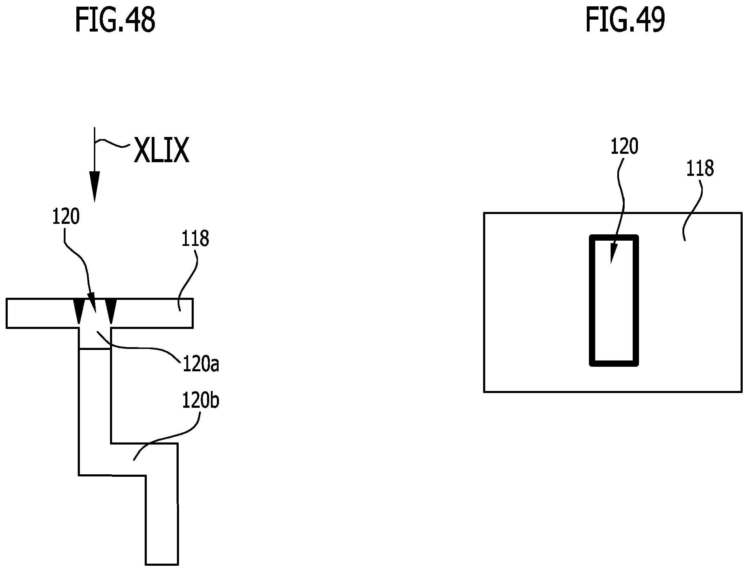

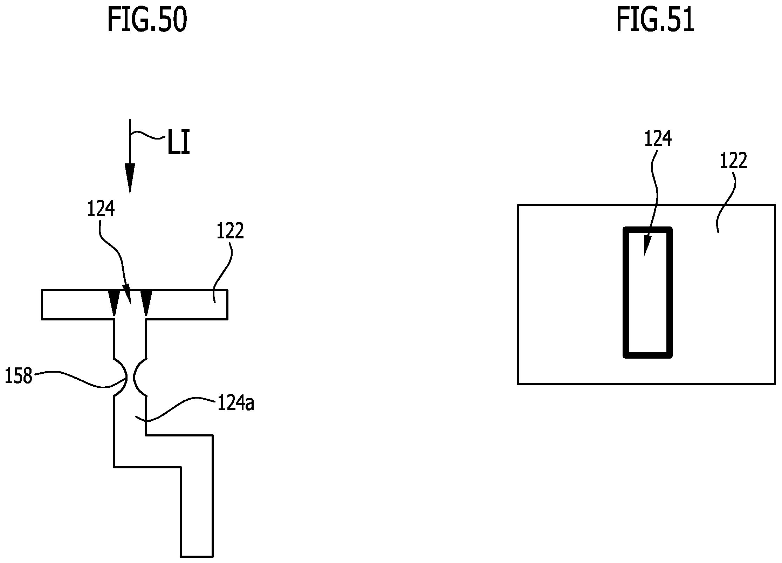

Eine in den Fig. 47 bis 51 zeichnerisch nicht als Ganzes dargestellte weitere Ausführungsform einer elektrochemischen Zelle unterscheidet sich hinsichtlich Aufbau und Funktion im Wesentlichen dadurch von der in Fig. 46 dargestellten Ausführungsform, dass das erste Kontaktelement 120 und/oder das zweite Kontaktelement 124 im Wesentlichen einen stufenförmigen Querschnitt aufweisen. Der Querschnitt ist vorzugsweise parallel zu einer Hauptseite der elektrochemischen Zelle 100 genommen.

Vorteilhaft kann es sein, wenn das erste Kontaktelement 120 derart gebogen ist und/oder wird, dass es einen Bereich aufweist, welcher zumindest näherungsweise parallel zu einer Haupterstreckungsebene des Abdeckelements 110 angeordnet ist.

Insbesondere weist das erste Kontaktelement 120 einen von dem ersten Zellterminal 118 abgewandten weiteren Bereich auf, dessen Haupterstreckungsebene zumindest näherungsweise senkrecht zu der Haupterstreckungsebene des Abdeckelements 110 angeordnet ist.

Vorzugsweise ist und/oder wird das zweite Kontaktelement 124 derart gebogen, dass es einen Bereich aufweist, welcher zumindest näherungsweise parallel zu einer Haupterstreckungsebene des Abdeckelements 110 angeordnet ist.

Günstig kann es sein, wenn das zweite Kontaktelement 124 einen von dem zweiten Zellterminal 122 abgewandten weiteren Bereich auf, dessen Haupterstreckungsebene zumindest näherungsweise senkrecht zu der Haupterstreckungsebene des Abdeckelements 110 angeordnet ist.

Vorteilhaft kann es sein, wenn das erste Kontaktelement 120 und das Isolierelement 136 einen Kraftschluss und/oder Formschluss bilden.

Insbesondere bilden das zweite Kontaktelement 124 und das Isolierelement 136 einen Kraftschluss und/oder Formschluss.

Ein Halteelement bei der Herstellung der elektrochemischen Zelle 100 ist vorzugsweise entbehrlich.

Eine Querschnittsfläche des ersten Kontaktelements 120 und/oder eine Querschnittsfläche des zweiten Kontaktelements 124 ist vorzugsweise über deren gesamte Erstreckung konstant.

Im Übrigen stimmt die in den Fig. 47 bis 51 dargestellte weitere Ausführungsform einer elektrochemischen Zelle hinsichtlich Aufbau und Funktion im Wesentlichen mit der in Fig. 46 dargestellten Ausführungsform überein, sodass auf deren Beschreibung insoweit Bezug genommen wird.

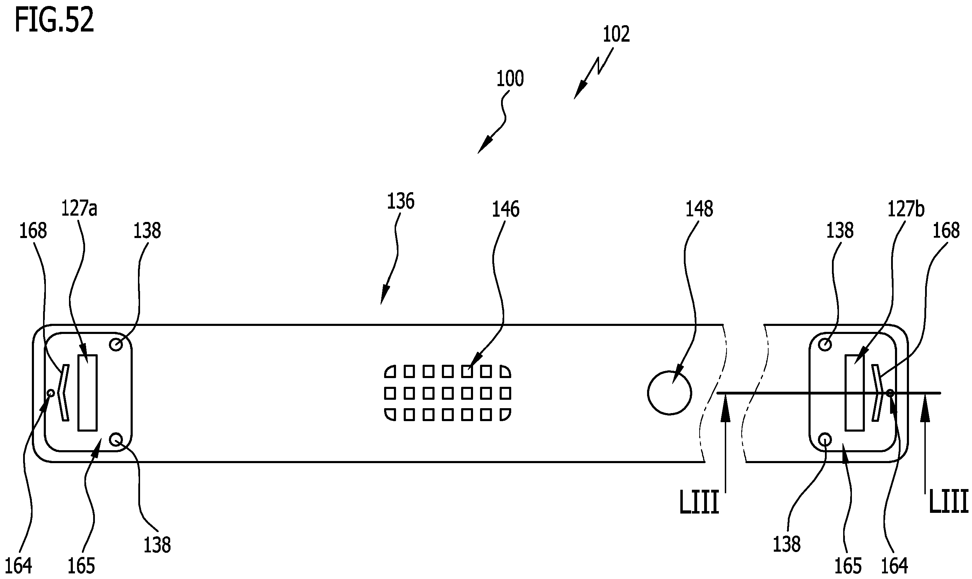

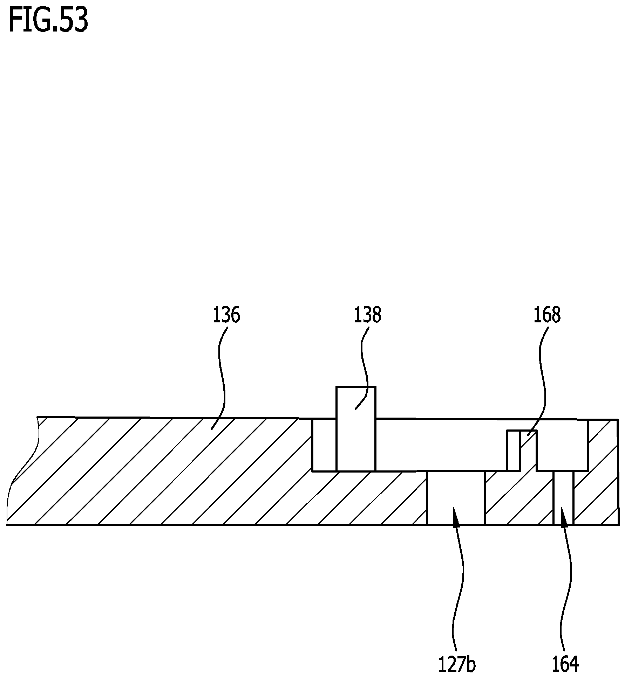

In Fig. 52 und 53 ist ein Isolierelement 136 einer zeichnerisch nicht als Ganzes dargestellten weiteren Ausführungsform einer elektrochemischen Zelle 100 dargestellt.

Die weitere Ausführungsform einer elektrochemischen Zelle 100 unterscheidet sich hinsichtlich Aufbau und Funktion im Wesentlichen dadurch von der in den Fig. 1 bis 10 dargestellten ersten Ausführungsform, dass das Isolierelement 136 mehrere Strömungsleitelemente 168 aufweist.

Vorteilhaft kann es sein, wenn ein Strömungsleitelement 168 in einer im Bereich des ersten Verbindungsbereichs 130 angeordneten Vertiefung 165 des Isolierelements 136 angeordnet ist.

Ein weiteres Strömungsleitelement 168 ist vorzugsweise in einer im Bereich des zweiten Verbindungsbereichs 156 angeordneten Vertiefung 165 des Isolierelements 136 angeordnet.

Günstig kann es sein, wenn die Strömungsleitelemente 168 einen zumindest näherungsweise V-förmigen Querschnitt aufweisen. Der Querschnitt ist vorzugsweise parallel zu einer Haupterstreckungsebene des Isolierelements 136 genommen.

Die Strömungsleitelemente 168 dienen vorzugsweise einer kontrollierten Verteilung des ersten Harzmaterials und/oder des zweiten Harzmaterials.

Vorzugsweise sind die Strömungsleitelements 168 jeweils zwischen der jeweiligen Öffnung 127a, 127b und einer Nebenseite der elektrochemischen Zelle 100 angeordnet.

Spitzen der V-formen weisen insbesondere jeweils nach außen von der jeweiligen Öffnung 127a, 127b weg.

Vorteilhaft kann es sein, wenn die Vertiefungen 165 des Isolierelements 136 als Aufnahme und/oder Taschen für das erste Harzmaterial bzw. das zweite Harzmaterial dienen.

Positioniervorsprünge 138 sind vorzugsweise an einander zugewandten Seiten der Vertiefungen 165 angeordnet.

An einer Nebenseite der elektrochemischen Zelle 100 zugewandten Seite der jeweiligen Vertiefung 165 ist vorzugsweise jeweils eine Einfüllöffnung 164 zur Einfüllung des ersten Harzmaterials bzw. des zweiten Harzmaterials angeordnet.

Das in Fig. 52 und 53 dargestellte Isolierelement 136 kann alternativ in jeder der beschriebenen Ausführungsformen einer elektrochemischen Zelle 100 verwendet werden.

Im Übrigen stimmt die in Fig. 52 und 53 dargestellte weitere Ausführungsform einer elektrochemischen Zelle 100 hinsichtlich Aufbau und Funktion mit der in den Fig. 1 bis 10 dargestellten ersten Ausführungsform überein, sodass auf deren Beschreibung insoweit Bezug genommen wird.

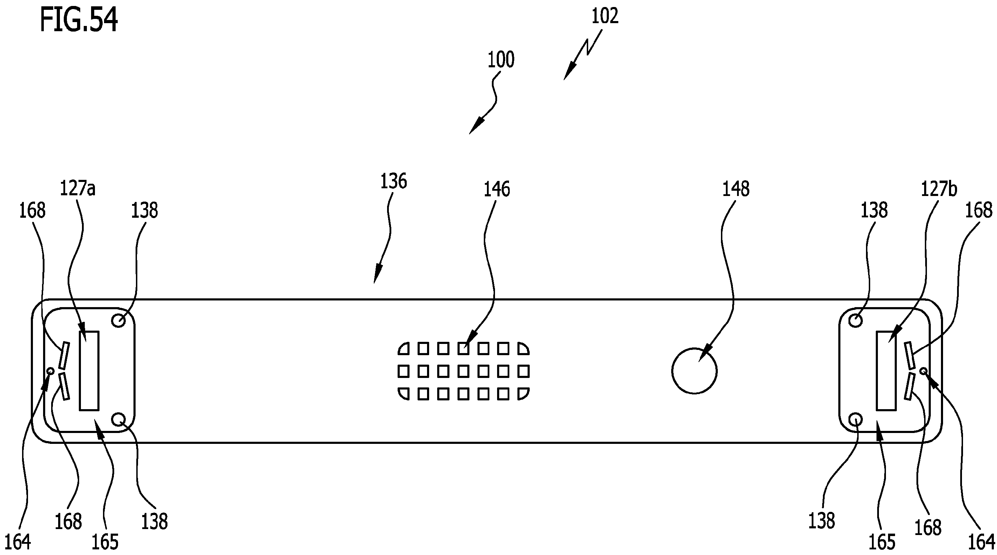

In Fig. 54 ist ein Isolierelement 136 einer zeichnerisch nicht als Ganzes dargestellten weiteren Ausführungsform einer elektrochemischen Zelle 100 gezeigt.

Die weitere Ausführungsform einer elektrochemischen Zelle 100 unterscheidet sich hinsichtlich Aufbau und Funktion im Wesentlichen dadurch von der in Fig. 52 und 53 dargestellten Ausführungsform, dass in jeder Vertiefung des Isolierelements 136 zwei Strömungsleitelemente 168 angeordnet sind, welche gewinkelt zueinander und/oder voneinander beabstandet angeordnet sind.

Die beiden Strömungsleitelemente 168 schließen vorzugsweise einen stumpfen Winkel miteinander ein.

Das Isolierelement 136 gemäß Fig. 54 kann in jeder der beschriebenen Ausführungsformen einer elektrochemischen Zelle 100 verwendet werden.

Im Übrigen stimmt die in Fig. 54 dargestellte weitere Ausführungsform einer elektrochemischen Zelle 100 hinsichtlich Aufbau und Funktion im Wesentlichen mit der in den Fig. 52 und 53 dargestellten Ausführungsform überein, sodass auf deren Beschreibung insoweit Bezug genommen wird.

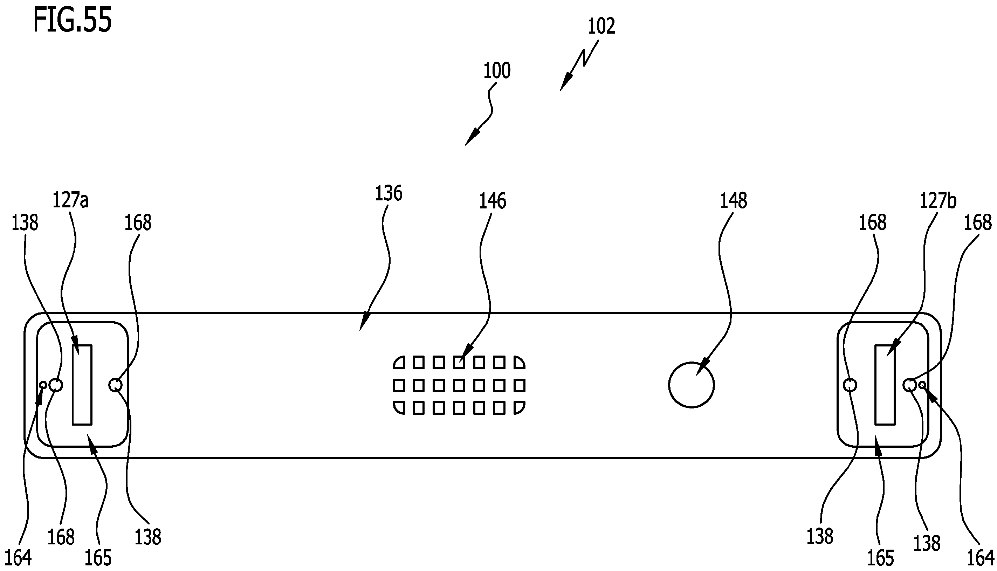

In Fig. 55 ist ein Isolierelement 136 einer zeichnerisch nicht als Ganzes dargestellten weiteren Ausführungsform einer elektrochemischen Zelle 100 gezeigt.

Die weitere Ausführungsform einer elektrochemischen Zelle 100 unterscheidet sich hinsichtlich Aufbau und Funktion im Wesentlichen dadurch von der in den Fig. 52 und 53 dargestellten Ausführungsform, dass keine separaten Strömungsleitelemente 168 vorgesehen sind, sondern die Positioniervorsprünge 138 Strömungsleitelemente 168 bilden.

Jeweils zwei Strömungsleitelemente sind vorzugsweise beidseitig von der ersten Öffnung 127a und der zweiten Öffnung 127b des Isolierelements 136 angeordnet.

Das Isolierelement 136 gemäß Fig. 55 kann in jeder der beschriebenen Ausführungsformen einer elektrochemischen Zelle 100 verwendet werden.

Im Übrigen stimmt die in Fig. 55 dargestellte weitere Ausführungsform einer elektrochemischen Zelle hinsichtlich Aufbau und Funktion im Wesentlichen mit der in den Fig. 52 und 53 dargestellten Ausführungsform überein, sodass auf deren Beschreibung insoweit Bezug genommen wird.

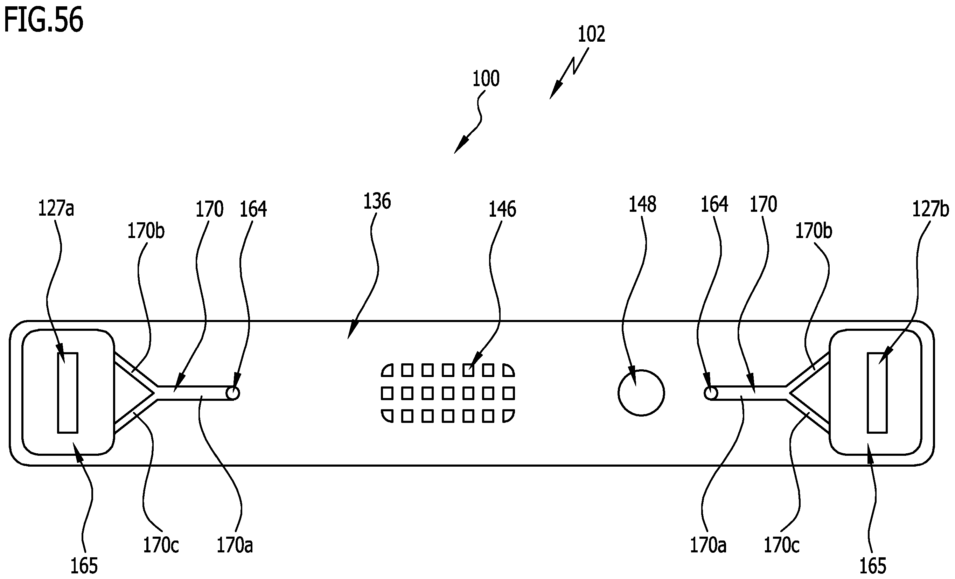

In Fig. 56 ist ein Isolierelement 136 einer zeichnerisch nicht als Ganzes dargestellten weiteren Ausführungsform einer elektrochemischen Zelle 100 gezeigt.

Die weitere Ausführungsform einer elektrochemischen Zelle 100 unterscheidet sich hinsichtlich Aufbau und Funktion im Wesentlichen dadurch von der in Fig. 55 dargestellten Ausführungsform, dass das Isolierelement 136 mehrere, vorliegend zwei, Einfüllkanäle 170 aufweist, welche jeweils eine Einfüllöffnung 164 des Isolierelement 136 mit einer, beispielsweise taschenförmigen, Vertiefung 165 des Isolierelement 136 verbinden.

Günstig kann es sein, wenn eine Einfüllöffnung 164 zwischen der ersten Öffnung 127a und einem mittig zwischen den Öffnungen 127a, 127b angeordneten Mittelbereich des Isolierelements 136 angeordnet ist.

Eine weitere Einfüllöffnung 164 ist vorzugsweise zwischen der zweiten Öffnung 127b und dem mittig zwischen den Öffnungen 127a, 127b angeordneten Mittelbereich des Isolierelements 136 angeordnet.

Vorteilhaft kann es sein, wenn die Einfüllkanäle 170 als offene Kanäle ausgebildet sind.

Beispielsweise sind die Einfüllkanäle 170 als längliche Bereiche ausgebildet, in welchen das Isolierelement 136 eine, beispielsweise um ca. 20 % oder mehr lokal reduzierte Dicke, im Vergleich zu einer durchschnittlichen Dicke des übrigen Isolierelements 136, aufweist.

Es kann vorgesehen sein, dass jeder Einfüllkanal 170 einen an eine Einfüllöffnung 164 angeschlossenen Einfüllkanalabschnitt 170a aufweist, dessen Haupterstreckungsrichtung zumindest näherungsweise parallel zu einer Hauptseite der elektrochemischen Zelle 100 angeordnet ist.

Vorzugsweise sind mit dem Einfüllkanalabschnitt 170a weitere Einfüllkanalabschnitte 170b, 170c direkt verbunden.

Die weiteren Einfüllkanalabschnitte 170b, 170c bilden beispielsweise zumindest näherungsweise eine V-Form und/oder verbinden den Einfüllkanalabschnitt 170a mit einer, beispielsweise taschenartigen, Vertiefung 165 des Isolierelement 136.

Bei einer Einfüllung des ersten Harzmaterials in die benachbart zu der ersten Öffnung 127a angeordnete Einfüllöffnung 164, fließt das erste Harzmaterial vorzugsweise durch den Einfüllkanalabschnitt 170a und durch die weiteren Einfüllkanalabschnitte 170b, 170c. Anschließend wird das erste Harzmaterial insbesondere in der ersten Vertiefung 165 des Isolierelements 136 aufgefangen und/oder sammelt sich in der ersten Vertiefung 165 des Isolierelements 136.

Bei einer Einfüllung des zweiten Harzmaterials in die benachbart zu der zweiten Öffnung 127b angeordnete Einfüllöffnung 164, fließt das zweite Harzmaterial vorzugsweise durch den Einfüllkanalabschnitt 170a und durch die weiteren Einfüllkanalabschnitte 170b, 170c. Anschließend wird das zweite Harzmaterial insbesondere in der zweiten Vertiefung 165 des Isolierelements 136 aufgefangen und/oder sammelt sich in der zweiten Vertiefung 165 des Isolierelements 136.

Das Isolierelement 136 gemäß Fig. 56 kann in jeder der beschriebenen Ausführungsformen einer elektrochemischen Zelle 100 verwendet werden.

Positionierungsvorsprünge 138 sind zwar nicht zeichnerisch dargestellt, können jedoch vorgesehen sein.

Im Übrigen stimmt die in Fig. 56 dargestellte Ausführungsform einer elektrochemischen Zelle 100 hinsichtlich Aufbau und Funktion im Wesentlichen mit der in Fig. 55 dargestellten Ausführungsform überein, sodass auf deren Beschreibung insoweit Bezug genommen wird.

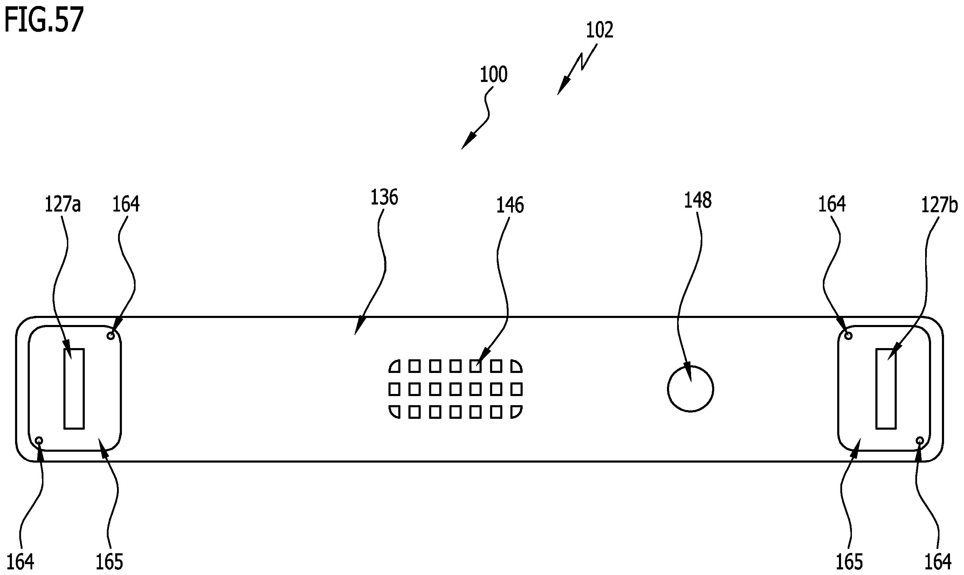

In Fig. 57 ist ein Isolierelement 136 einer zeichnerisch nicht als Ganzes dargestellten weiteren Ausführungsform einer elektrochemischen Zelle 100 gezeigt.

Die weitere Ausführungsform unterscheidet sich hinsichtlich Aufbau und Funktion im Wesentlichen dadurch von der in Fig. 55 dargestellten Ausführungsform, dass jeweils zwei Einfüllöffnungen 164 in den beiden Vertiefungen 165 des Isolierelements 136 angeordnet sind.

Die beiden Einfüllöffnungen 164 liegen vorzugsweise auf einer Diagonale, welche durch die jeweilige Vertiefung 165 verläuft. Beispielsweise sind die beiden Einfüllöffnungen 164 in auf einer Diagonale liegenden Eckbereichen der jeweiligen Vertiefung 165 angeordnet.

Positionierungsvorsprünge 138 sind vorzugsweise entbehrlich.

Das Isolierelement 136 gemäß Fig. 57 kann in jeder der beschriebenen Ausführungsformen einer elektrochemischen Zelle 100 verwendet werden.

Im Übrigen stimmt die in Fig. 57 dargestellte Ausführungsform einer elektrochemischen Zelle 100 hinsichtlich Aufbau und Funktion im Wesentlichen mit der Fig. 55 dargestellten Ausführungsform überein, sodass auf deren Beschreibung insoweit Bezug genommen wird.

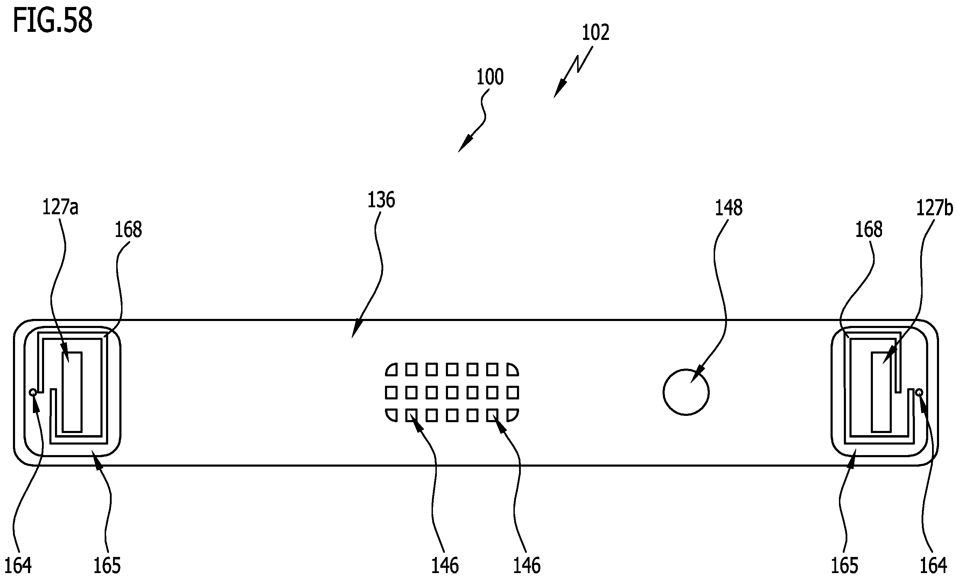

In Fig. 58 ist ein Isolierelement 136 einer zeichnerisch nicht als Ganzes dargestellten weiteren Ausführungsform einer elektrochemischen Zelle 100 gezeigt.

Die weitere Ausführungsform einer elektrochemischen Zelle 100 unterscheidet sich hinsichtlich Aufbau und Funktion im Wesentlichen dadurch von der in Fig. 55 dargestellten Ausführungsform, dass das Isolierelement 136 zwei Strömungsleitelemente 168 umfasst, welche zumindest näherungsweise spiralförmig um die erste Öffnung 127a und/oder die zweite Öffnung 127b herum angeordnet ist.

Die Strömungsleitelemente 168 dienen vorzugsweise einer gleichmäßigen Verteilung des ersten Harzmaterials in dem ersten Verbindungsbereich 130 und/oder des zweiten Harzmaterials in dem zweiten Verbindungsbereich 156.

Es kann vorgesehen sein, dass die Strömungsleitelemente 168 jeweils eine variierende Höhe aufweisen.

Beispielsweise erstrecken sich die Strömungsleitelemente 168 teilweise oder vollständig von einer Vertiefung 165 des Isolierelements 136 bis auf eine Erstreckung des Isolierelements 136 in an die Vertiefung 165 angrenzenden Bereichen des Isolierelements 136.

Beispielsweise schließen die Strömungsleitelemente 168 senkrecht zu einer Haupterstreckungsebene des Isolierelements 136 zumindest näherungsweise bündig mit dem übrigen Isolierelement 136 ab und/oder ragen nicht über einen Grundkörper des Isolierelements 136 hinaus.

Vorteilhaft kann es sein, wenn eine Einfüllöffnung 164 an einem einer Nebenseite der elektrochemischen Zelle 100 zugewandten Rand des Isolierelements 136 innerhalb der jeweiligen Vertiefung 165 angeordnet ist.

Positionierungsvorsprünge 138 sind vorzugsweise entbehrlich.

Das Isolierelement 136 gemäß Fig. 58 kann in jeder der beschriebenen Ausführungsformen einer elektrochemischen Zelle 100 verwendet werden.

Im Übrigen stimmt die in Fig. 58 dargestellte Ausführungsform einer elektrochemischen Zelle 100 hinsichtlich Aufbau und Funktion im Wesentlichen mit deren Fig. 55 dargestellten Ausführungsform überein, sodass auf deren Beschreibung insoweit Bezug genommen wird.

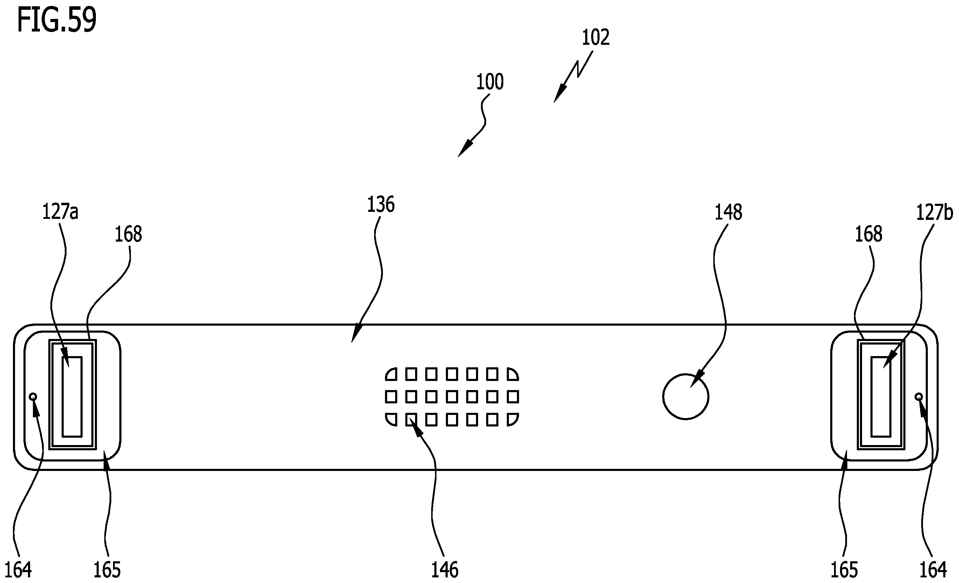

In Fig. 59 ist ein Isolierelement 136 einer zeichnerisch nicht als Ganzes dargestellten weiteren Ausführungsform einer elektrochemischen Zelle 100 gezeigt.

Die weitere Ausführungsform einer elektrochemischen Zelle 100 unterscheidet sich hinsichtlich Aufbau und Funktion im Wesentlichen dadurch von der in Fig. 58 dargestellten Ausführungsform, dass die Strömungsleitelemente 168 eine geschlossene Ringform bilden.

Ein erstes Strömungsleitelement 168 umgibt vorzugsweise zu einer Ringform geschlossen die erste Öffnung 127a des Isolierelements 136. Es ist vorzugsweise von der ersten Öffnung 127a beabstandet angeordnet.

Vorteilhaft kann es sein, wenn ein zweites Strömungsleitelement 168 die zweite Öffnung 127b des Isolierelements 136 zu einer Ringform geschlossen umgibt. Das zweite Strömungsleitelement 168 ist insbesondere von der zweiten Öffnung 127b des Isolierelements 136 beabstandet angeordnet.

Die Strömungsleitelemente 168 weisen vorzugsweise einen zumindest näherungsweise rechteckförmigen Querschnitt auf. Der Querschnitt ist vorzugsweise parallel zu einer Haupterstreckungsebene des Isolierelements 136 genommen.

Es kann vorgesehen sein, dass die Strömungsleitelemente 168 voneinander verschiedene Höhen aufweisen, so dass insbesondere fließwegabhängige Strömungsleitelemente ausgebildet sind.

Das Isolierelement 136 gemäß Fig. 59 kann in jeder der beschriebenen Ausführungsformen einer elektrochemischen Zelle 100 verwendet werden.

Im Übrigen stimmt die in Fig. 59 dargestellte weitere Ausführungsform einer elektrochemischen Zelle 100 hinsichtlich Aufbau und Funktion im Wesentlichen mit der in Fig. 58 dargestellten Ausführungsform überein, sodass auf deren Beschreibung insoweit Bezug genommen wird.

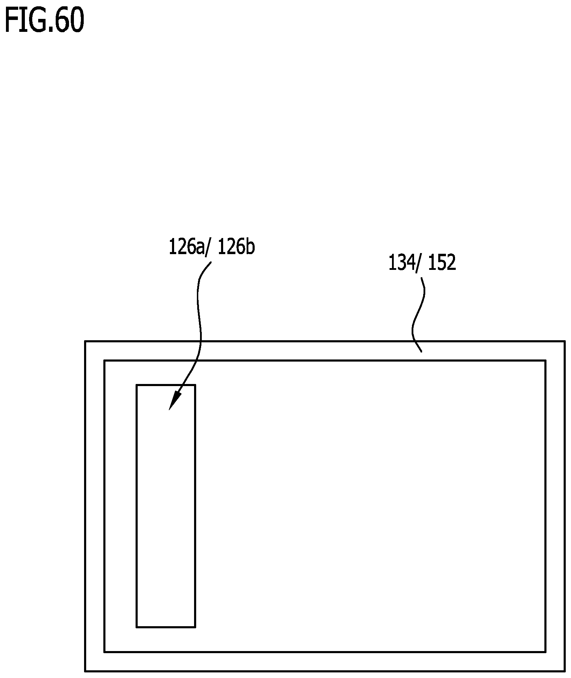

In den Fig. 60 bis 72 ist beispielhaft gezeigt, welche Formen das erste Dichtelement 134 und/oder das zweite Dichtelement 152 aufweisen können.

Die Dichtelemente 134, 152 gemäß der Fig. 60 bis 72 können in sämtlichen der beschriebenen Ausführungsformen einer elektrochemischen Zelle 100 verwendet werden.

Die folgenden Beispiele gelten sowohl für Dichtelemente 134, 152 aus einem Polymermaterial als auch für Dichtelemente 134, 152, welche einen Bestandteil des Abdeckelements 110 bilden und insbesondere aus einem metallischen Material, beispielsweise Aluminium, gebildet sind.

Es kann vorgesehen sein, dass das Dichtelement 134, 152 einen zumindest näherungsweise rechteckförmigen Querschnitt aufweist. Der Querschnitt ist vorzugsweise parallel zu einer Haupterstreckungsebene des Abdeckelements 110 genommen. Dabei bildet das Dichtelement 134, 152 insbesondere eine geschlossene Ringform (Fig. 60).

Es kann vorgesehen sein, dass das zweite Dichtelement 152 zwei parallel zueinander angeordnete metallische Sicken umfasst. Die Sicken sind beispielsweise zumindest näherungsweise parallel zu einer Hauptseite der elektrochemischen Zelle 100 und/oder zu einer Nebenseite der elektrochemischen Zelle 100 angeordnet (nicht gezeigt).

Alternativ zu einer geschlossenen Ringform kann vorgesehen sein, dass das Dichtelement 134, 152 eine oder mehrere Unterbrechungen 166 aufweist (Fig. 61).

Insbesondere sind - unabhängig von der Form des Dichtelements 134, 152 - in einem Querschnitt ca. 350° bis ca. 355° eines Kreises, dessen Mittelpunkt die Mittelachse 142 des ersten Kontaktelements 120 bzw. Mittelachse 154 des zweiten Kontaktelements 124 bildet, von dem Dichtelement 134, 152 umgeben. Der Querschnitt ist in einer Einbausituation des Dichtelements 134, 152 vorzugsweise parallel zu einer Haupterstreckungsebene des Abdeckelements 110 genommen.

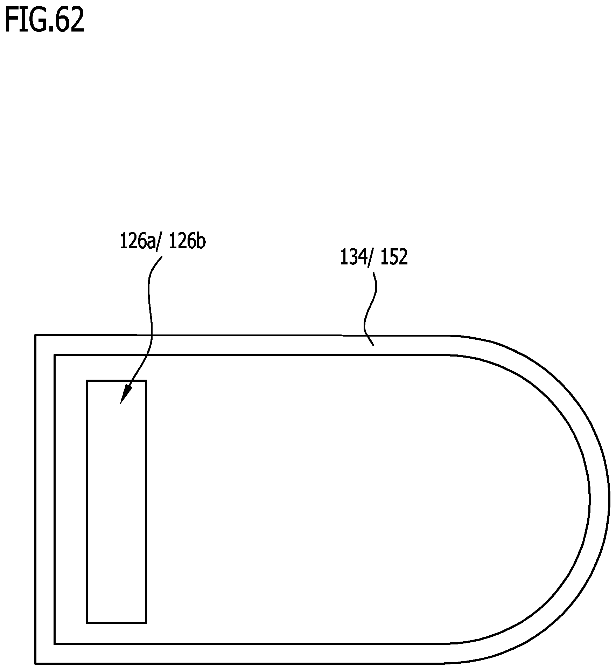

Vorteilhaft kann es sein, wenn das Dichtelement 134, 152 einen zumindest näherungsweise U-förmigen Querschnitt aufweist, wobei freie Enden der U-Form insbesondere durch einen Verbindungsabschnitt miteinander verbunden sind. Der Verbindungsabschnitt ist vorzugsweise zumindest näherungsweise parallel zu einer Haupterstreckungsrichtung der jeweiligen Öffnung 126a, 126b angeordnet (vgl. Fig. 62).

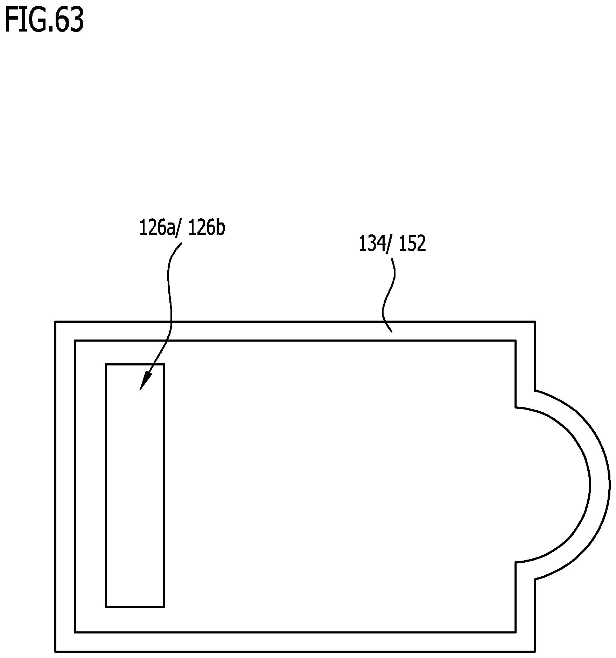

Alternativ kann vorgesehen sein, dass das Dichtelement 134, 152, beispielsweise an einer von der jeweiligen Öffnung 126a, 126b abgewandten Seite eine Wölbung aufweist, welche von einem von dem Dichtelement 134, 152 umgebenen Innenraum weg weist (vgl. Fig. 63).

Gemäß einer weiteren Alternative kann vorgesehen sein, dass das Dichtelement 134, 152 mehrere unmittelbar aneinander angrenzende Wölbungen aufweist, welche beispielsweise eine Seite des Dichtelements 134, 152 bilden.

Beispielsweise weist das Dichtelement 134, 152 zwei von einem von dem Dichtelement 134, 152 umgebenen Innenraum weg weisende Wölbungen auf.

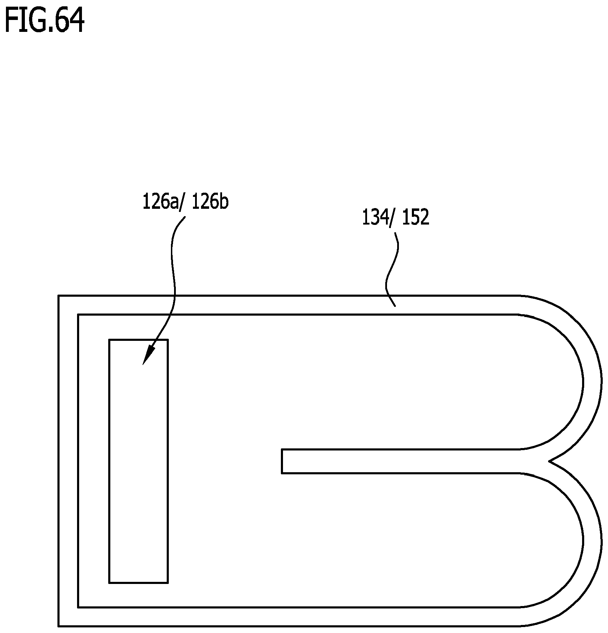

Vorteilhaft kann es sein, wenn sich ein Trennabschnitt zwischen den beiden Wölbungen in einen von dem Dichtelement 134, 152 umgebenen Innenraum hinein erstreckt. Die Wölbungen sind vorzugsweise an einer von der jeweiligen Öffnung 126a, 126b abgewandten Seite des Dichtelement 134, 152 angeordnet (vgl. Fig. 64).

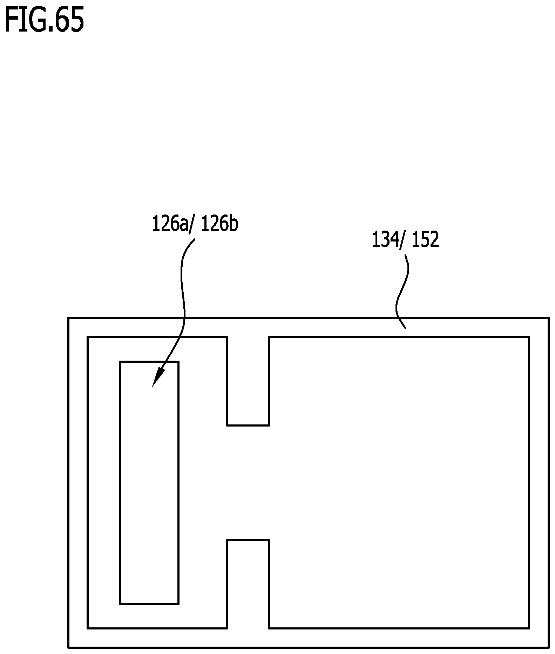

Es kann vorgesehen sein, dass das Dichtelement 134, 152 einen zumindest näherungsweise rechteckförmigen Querschnitt und jeweils zwei Vorsprünge aufweist, welche eine Haupterstreckungsrichtung aufweisen, die zumindest näherungsweise parallel zu einer Haupterstreckungsrichtung der jeweiligen Öffnung 126a, 126b angeordnet ist (vgl. Fig. 65). Die Vorsprünge erstrecken sich vorzugsweise in einen von einem Grundkörper des Dichtelements 134, 152 umgebenen Innenraum hinein.

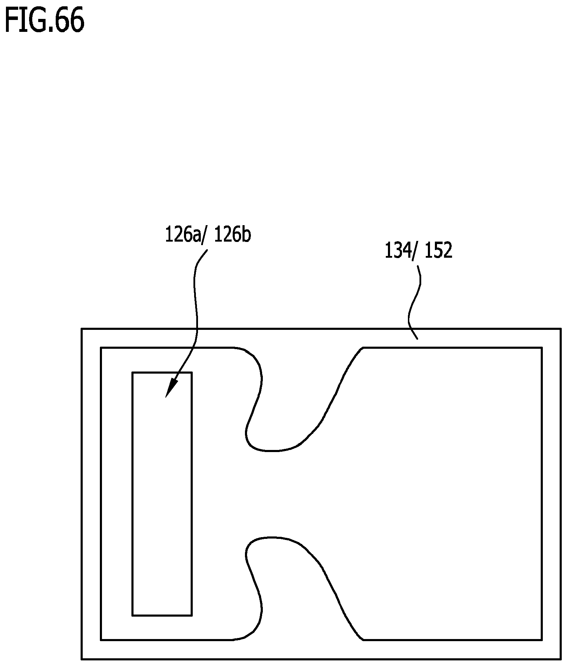

Alternativ kann vorgesehen sein, dass das Dichtelement 134, 152 jeweils zwei zungenförmige Vorsprünge aufweist, welche insbesondere nach innen und/oder zu der jeweiligen Öffnung 126a, 126b hin geneigt angeordnet sind (vgl. Fig. 66).

Insbesondere weist das Dichtelement 134, 152 drei Vorsprünge auf, welche längs einer senkrecht zu einer Haupterstreckungsrichtung der jeweiligen Öffnung 126a, 126b angeordneten Richtung abwechselnd von einander gegenüberliegenden Seiten in einen von dem Dichtelement 134, 152 umgebenden Innenraum hineinragen.

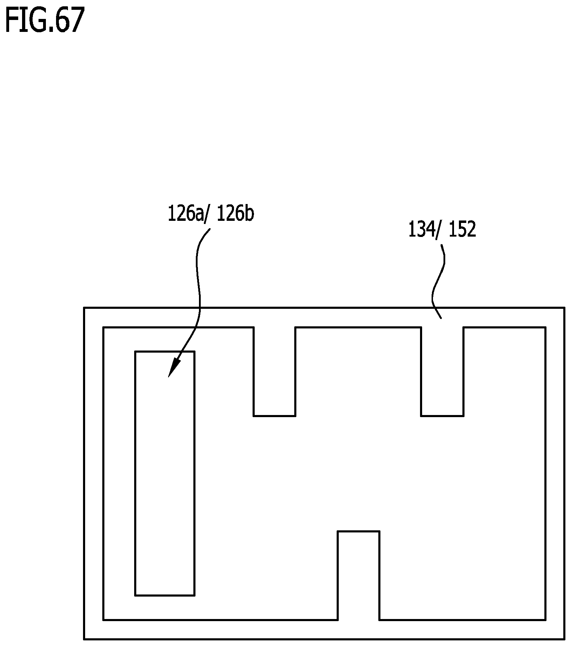

Eine Haupterstreckungsrichtung der Vorsprünge ist vorzugsweise zumindest näherungsweise parallel zu einer Haupterstreckungsrichtung der jeweiligen Öffnung 126a, 126b angeordnet (Fig. 67).

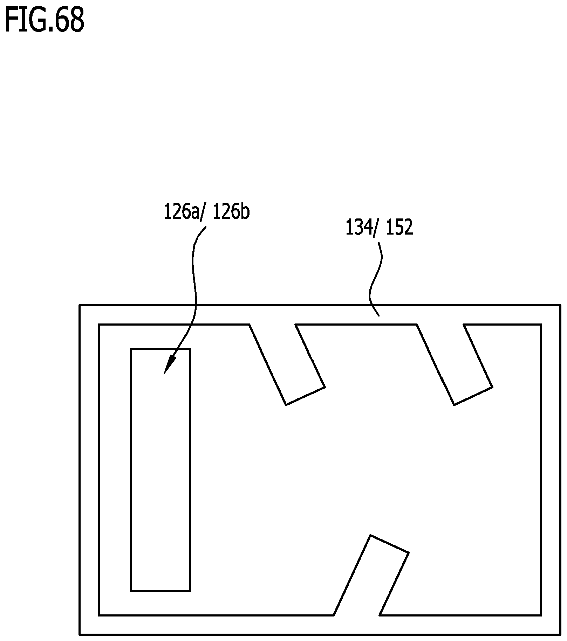

Alternativ kann vorgesehen sein, dass die Vorsprünge schräg von der jeweiligen Öffnung 126a, 126b weg weisen (Fig. 68).

Vorteilhaft kann es sein, wenn das Dichtelement 134, 152 mehrere Vorsprünge aufweist, welche von einem Grundkörper des jeweiligen Dichtelements 134, 152 beabstandet angeordnet sind und/oder in einem von dem Grundkörper des jeweiligen Dichtelements 134, 152 umgebenden Innenraum angeordnet sind.

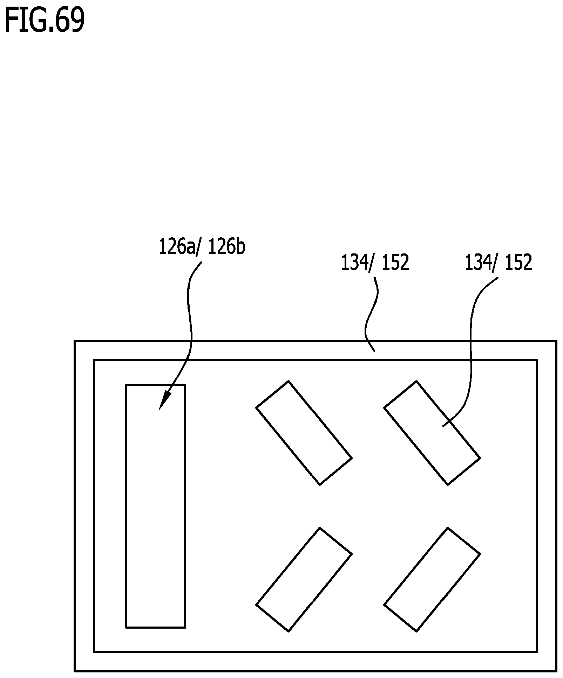

Vorzugsweise schließen Haupterstreckungsrichtungen von jeweils zwei Vorsprüngen einen stumpfen Winkel miteinander ein (vgl. Fig. 69).

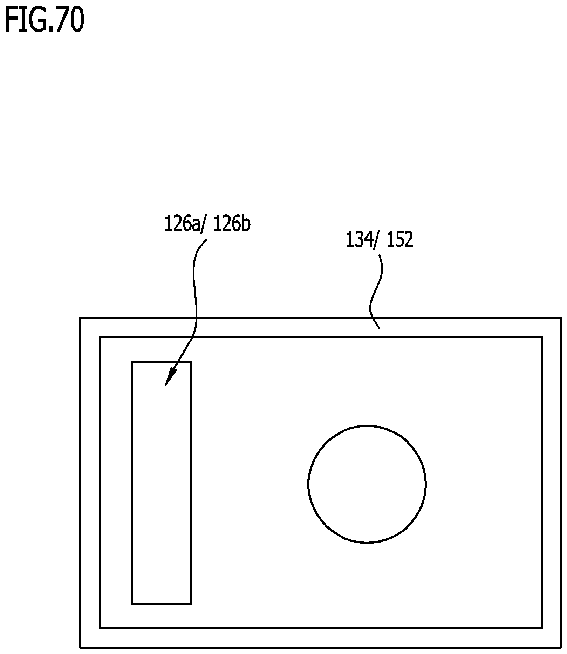

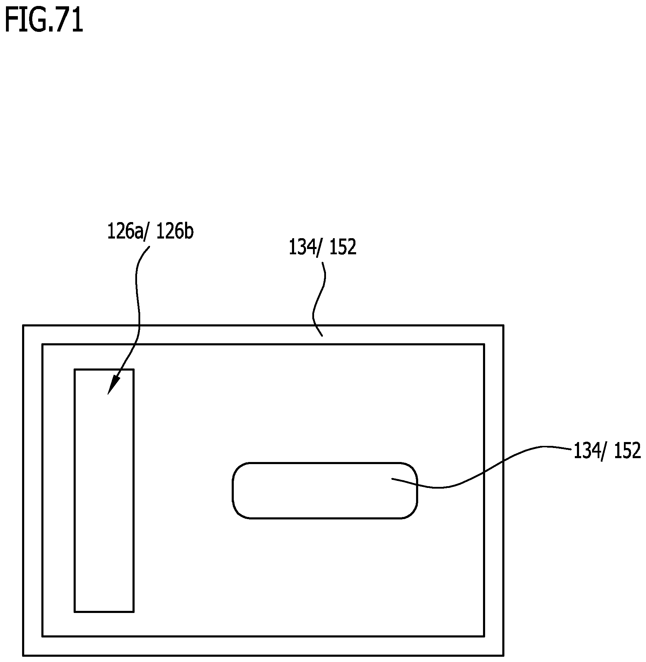

Alternativ kann vorgesehen sein, dass in einem von einem Grundkörper des Dichtelements 134, 152 umgebenen Innenraum ein einzelner Vorsprung angeordnet ist, welcher einen zumindest näherungsweise kreisförmigen Querschnitt (vgl. Fig. 70) oder einen zumindest näherungsweise elliptischen und/oder ovalen Querschnitt (vgl. Fig. 71) aufweist.

Im Falle eines Vorsprungs mit einem näherungsweise elliptischen und/oder ovalen Querschnitt, weist dieser vorzugsweise eine Haupterstreckungsrichtung auf, welche zumindest näherungsweise senkrecht zu einer Haupterstreckungsrichtung der jeweiligen Öffnung 126a, 126b angeordnet ist.

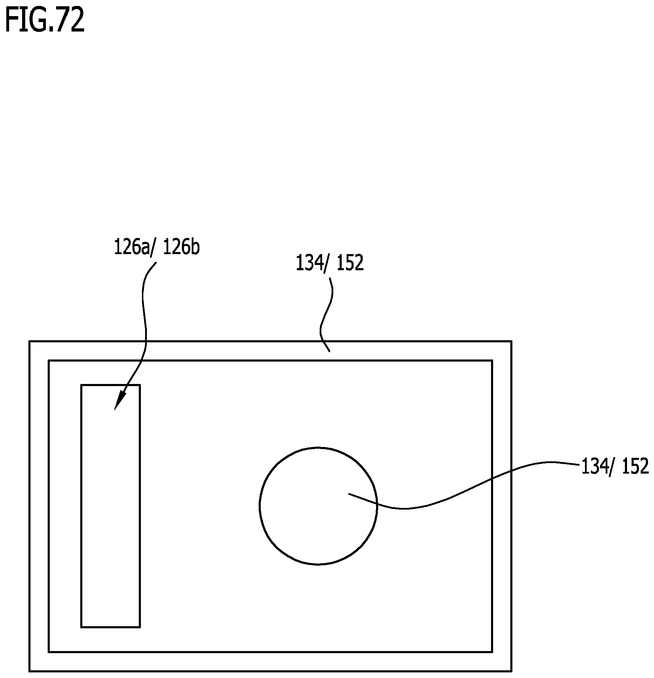

Es kann vorgesehen sein, dass das zweite Dichtelement 152 ein Vorsprung mit einem näherungsweise runden Querschnitt aufweist, welcher ein metallisches Material umfasst oder daraus gebildet ist (Fig. 72).

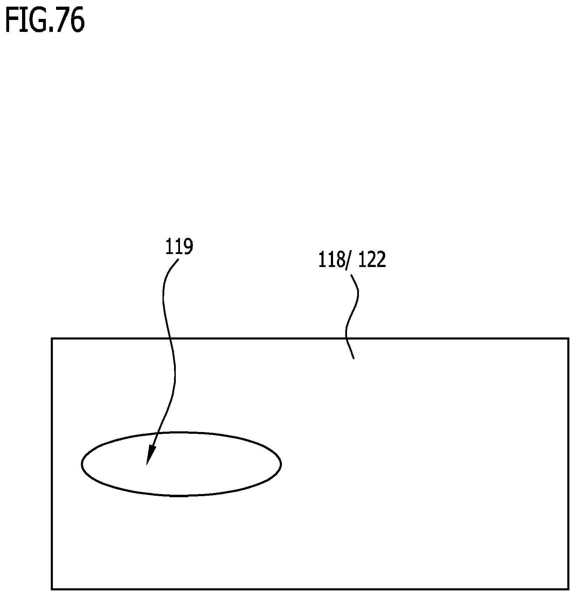

Wie insbesondere in den Fig. 73 bis 76 gezeigt ist, können die Zellterminals 118, 122 abhängig von einer Form des jeweiligen Kontaktelements 120, 124 quaderförmige Durchtrittsöffnungen 119 (vgl. Fig. 73 und 74) oder Durchtrittsöffnungen 119 mit einem ovalen Querschnitt (vgl. Fig. 75 und 76) aufweisen.

Haupterstreckungsrichtungen der Durchtrittsöffnungen 119 können parallel zu einer Hauptseite der elektrochemischen Zelle 100 (vgl. Fig. 74 und 76) oder senkrecht (vgl. Fig. 73 und 75) zu der Hauptseite der elektrochemischen Zelle 100 angeordnet sein.

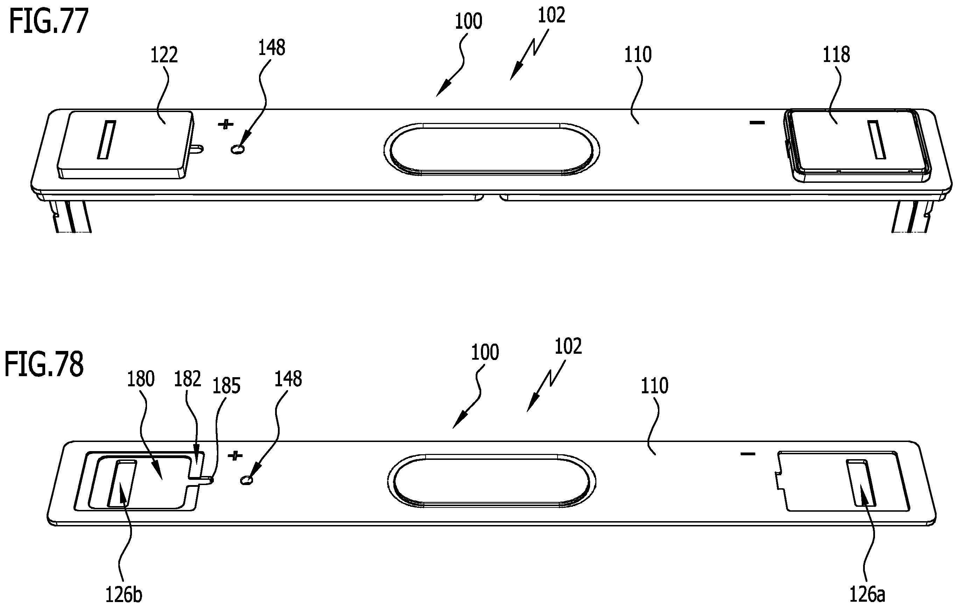

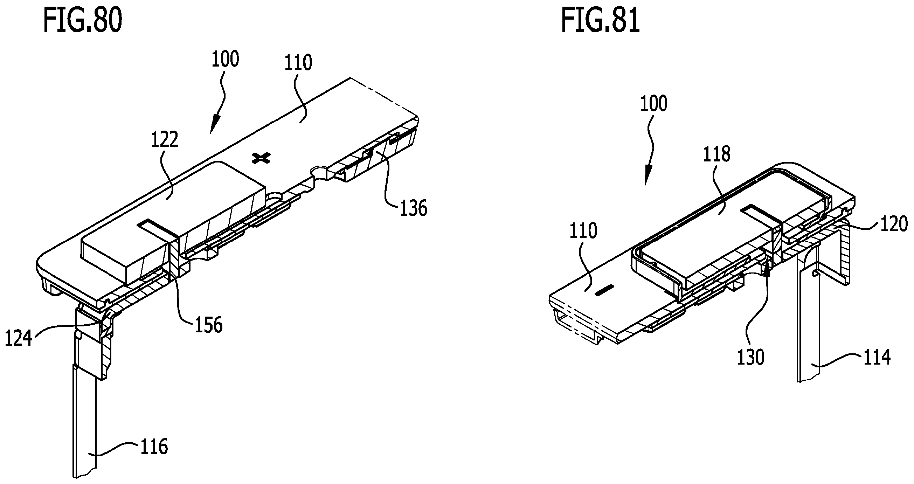

Eine in den Fig. 77 bis 83 dargestellte weitere Ausführungsform einer nicht als Ganzes zeichnerisch dargestellten elektrochemischen Zelle 100 unterscheidet sich hinsichtlich Aufbau und Funktion im Wesentlichen dadurch von der in den Fig. 1 bis 10 dargestellten ersten Ausführungsform einer elektrochemischen Zelle 100, dass das Abdeckelement 110 einen zweiten vertieften Bereich 180, beispielsweise an einer Kathodenseite, aufweist (vgl. Fig. 78).

Die Kathodenseite ist durch ein Pluszeichen in den Zeichnungen angedeutet. Eine Anodenseite ist durch ein Minuszeichen in den Zeichnungen angedeutet.

Die Kathodenseite und die Anodenseite sind in der in den Fig. 77 bis 83 dargestellten Ausführungsform im Vergleich zu den Darstellungen der übrigen Ausführungsformen vertauscht.

Der zweite vertiefte Bereich 180 ist beispielsweise ein niedergeprägter Bereich und/oder durch Niederprägung gebildet. Der zweite vertiefte Bereich 180 umgibt und/oder begrenzt vorzugsweise das zweite Vergusselement 156. Insbesondere dient der zweite vertiefte Bereich 180 als Aufnahme für das zweite Harzmaterial.

Beispielsweise ist der zweite vertiefte Bereich 180 beckenförmig ausgebildet und/oder bildet ein Vergussbecken für das zweite Harzmaterial in fließfähigem Zustand. Bei einem Befüllvorgang des zweiten Verbindungsbereichs 150 mit dem zweiten Harzmaterial fließt vorzugsweise das zweite Harzmaterial in den zweiten vertieften Bereich 180 hinein.

Günstig kann es sein, wenn der zweite vertiefte Bereich 180 die zweite Öffnung 126b im Abdeckelement 110 umgibt. Hierbei kann vorgesehen sein, dass ein größerer Teilbereich des zweiten vertieften Bereichs 180 an einer dem Zentralabschnitt des Abdeckelements 110 zugewandten Seite der zweiten Öffnung 126b angeordnet ist, während ein zweiter kleinerer Teilbereich des zweiten vertieften Bereichs 180 an einer einer Schmalseite der elektrochemischen Zelle 100 zugewandten Seite angeordnet ist.

Vorteilhaft kann es sein, wenn der zweite vertiefte Bereich 180 von einem Zellterminal-Auflagebereich 182, insbesondere ringförmig, umgeben ist. Der Zellterminal-Auflagebereich 182 dient vorzugsweise als Auflagefläche für das zweite Zellterminal 122 und/oder ist in einem montierten Zustand der elektrochemischen Zelle 100 in direktem Kontakt mit dem zweiten Zellterminal 122.

Vorzugsweise weist der zweite vertiefte Bereich 180 an einer dem Zentralbereich des Abdeckelements 110 zugewandten Seite des vertieften Bereichs 180 eine Ausbuchtung 185 auf, welche beispielsweise als Entgasungsöffnung bei einem Einfüllvorgang des zweiten Harzmaterials dient.

Es kann vorgesehen sein, dass das Abdeckelement 110, beispielsweise auf der Anodenseite, einen ersten vertieften Bereich aufweist (nicht zeichnerisch dargestellt).

Der erste vertiefte Bereich kann wie der zweite vertiefte Bereich 180 ausgebildet sein. Auf die entsprechenden Ausführungen zum zweiten vertieften Bereich 180 wird hinsichtlich des ersten vertieften Bereichs Bezug genommen.

Durch die Ausbildung des zweiten vertieften Bereichs 180 und/oder eines ersten vertieften Bereichs sind Dichtelemente 134, 152 vorzugsweise entbehrlich.

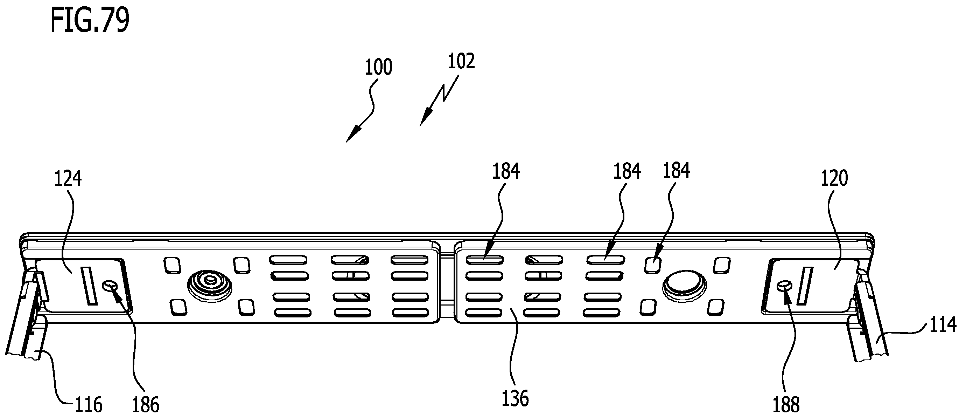

Wie insbesondere in Fig. 79 zu sehen ist, weist das Isolierelement 136 vorzugsweise mehrere, vorliegend regelmäßig angeordnete, Durchtrittsöffnungen 184 auf. Die Durchtrittsöffnungen 184 sind beispielsweise zumindest näherungsweise oval oder zumindest näherungsweise rechteckförmig und/oder sind im Wesentlichen über den gesamten Bereich des Isolierelements 136 angeordnet.

Beispielsweise sind zumindest näherungsweise rechteckförmige DurchtrittsÖffnungen 184 gemäß einem ersten Anordnungsmuster über den Zentralabschnitt des Isolierelements 136 angeordnet.

Insbesondere sind weitere, beispielsweise zumindest näherungsweise quadratische, Durchtrittsöffnungen 184 zu den Schmalseiten des Isolierelements 136 hin gemäß einem zweiten Anordnungsmuster angeordnet.

Vorzugsweise ist das Isolierelement 136 mehrteilig, beispielsweise zweiteilig, ausgebildet. Diesbezüglich wird auf die Ausführungen zu den in den Fig. 11 und 12 dargestellten Ausführungsformen Bezug genommen.

Wie insbesondere in Fig. 79, 82 und 83 zu sehen ist, weist vorzugsweise das erste Kontaktelement 120 eine erste Harzmaterialeinfüllöffnung 188 auf. Die erste Harzmaterialeinfüllöffnung 188 dient vorzugsweise als Öffnung zur Befüllung eines im ausgehärteten Zustand des ersten Harzmaterials das erste Vergusselement 130 bildenden Volumens.

Beispielsweise wird das erste Harzmaterial in einem fließfähigen Zustand durch die erste Harzmaterialeinfüllöffnung 188 eingefüllt.

Günstig kann es sein, wenn das zweite Kontaktelement 124 eine zweite Harzmaterialeinfüllöffnung 186 aufweist, welche insbesondere als Öffnung zur Befüllung eines im ausgehärteten Zustand des zweiten Harzmaterials das zweite Vergusselement 156 bildenden Volumens dient.

Beispielsweise wird das zweite Harzmaterial in einem fließfähigen Zustand durch die zweite Harzmaterialeinfüllöffnung 186 eingefüllt, beispielsweise in den zweiten vertieften Bereich 180.

Durch die erste Harzmaterialeinfüllöffnung 188 und/oder die zweite Harzmaterialeinfüllöffnung 186 sind Einfüllöffnungen im Isolierelement 136 vorzugsweise entbehrlich.

Insbesondere wird ein das erste Verbindungselement 130 bildendes Volumen und/oder ein das zweite Verbindungselement 156 bildendes Volumen durch die Kontaktelemente 120, 124 hindurch befüllt.

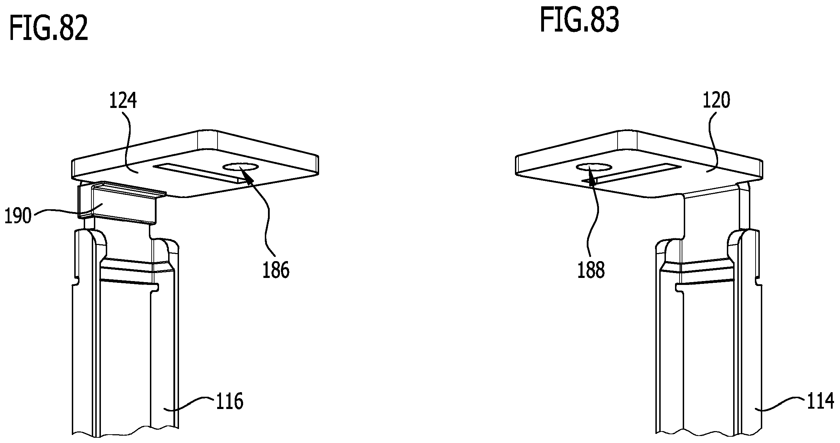

Wie insbesondere in Fig. 82 zu sehen ist, sind das zweite Kontaktelement 124 und der zweite Verbindungsleiter 116 vorzugsweise separate Bauteile, welche beispielsweise durch ein Übergangsteil 190 miteinander verbunden sind.

Günstig kann es sein, wenn das zweite Kontaktelement 124 und der zweite Verbindungsleiter 116 in einem senkrecht zur Haupterstreckungsebene des Abdeckelements 110 genommenen Querschnitt zumindest näherungsweise L-förmig und/oder gewinkelt zueinander angeordnet sind.

Wie insbesondere in Fig. 83 zu sehen ist, sind das erste Kontaktelement 120 und der erste Verbindungsleiter 114 vorzugsweise einteilig ausgebildet.

Das erste Kontaktelement 120 und der erste Verbindungsleiter 114 bilden vorzugsweise in einem senkrecht zur Haupterstreckungsebene des Abdeckelements 110 genommenen Querschnitt zumindest näherungsweise eine L-Form und/oder sind gewinkelt zueinander angeordnet.

Im Übrigen stimmt die in den Fig. 77 bis 83 dargestellte weitere Ausführungsform einer elektrochemischen Zelle 100 hinsichtlich Aufbau und Funktion im Wesentlichen mit der in den Fig. 1 bis 10 dargestellten ersten Ausführungsform überein, sodass auf deren Beschreibung insoweit Bezug genommen wird.

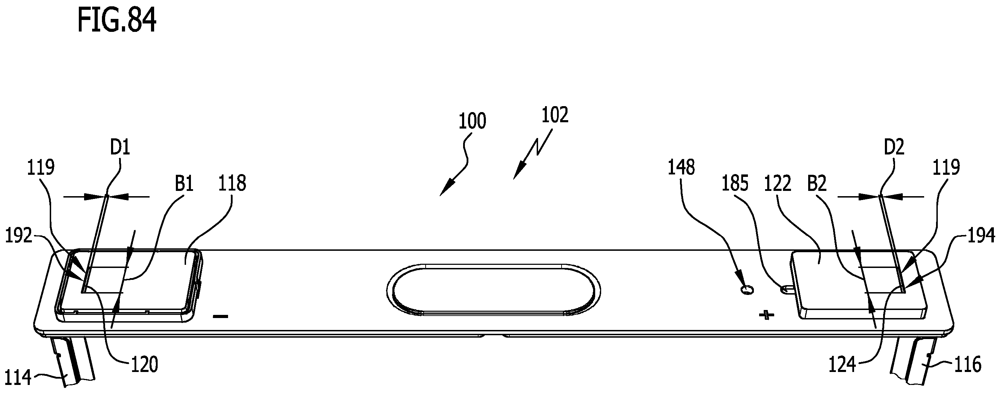

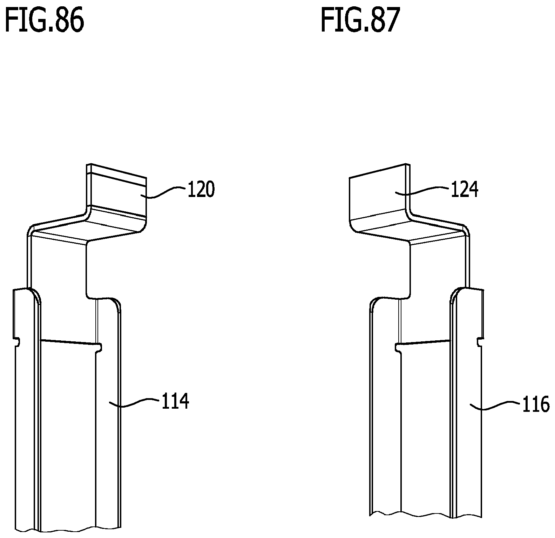

Eine in den Fig. 84 bis 87 dargestellte weitere Ausführungsform einer zeichnerisch nicht als Ganzes dargestellten elektrochemischen Zelle 100 unterscheidet sich hinsichtlich Aufbau und Funktion im Wesentlichen dadurch von der in den Fig. 77 bis 83 dargestellten Ausführungsform, dass einzelne Elemente der elektrochemischen Zelle 100 mit einer im Vergleich zu den bisherigen Ausführungsformen reduzierten durchschnittlichen Dicke ausgebildet sind.

Vorzugsweise beträgt eine durchschnittliche Dicke des ersten Verbindungsleiters 114 ca. 1/10 oder weniger einer senkrecht zur Dicke genommenen durchschnittlichen Breite des ersten Verbindungsleiters 114.

Vorzugsweise beträgt die durchschnittliche Dicke des ersten Verbindungsleiters 114 vorzugsweise ca. 0,8 mm oder weniger, beispielsweise ca. 0,7 mm oder weniger.

Die durchschnittliche Dicke des ersten Verbindungsleiters 114 ist vorzugsweise senkrecht zu dessen Haupterstreckungsebene definiert und/oder entspricht insbesondere einer durchschnittlichen Materialstärke eines Materials, beispielsweise eines Blechmaterials, aus welchem der erste Verbindungsleiter 114 hergestellt ist.

Günstig kann es sein, wenn eine durchschnittliche Dicke des zweiten Verbindungsleiters 116 ca. 1/10 oder weniger einer senkrecht zur Dicke genommenen durchschnittlichen Breite des zweiten Verbindungsleiters 116 beträgt.

Vorzugsweise beträgt die durchschnittliche Dicke des zweiten Verbindungsleiters 116 vorzugsweise ca. 0,8 mm oder weniger, beispielsweise ca. 0,7 mm oder weniger.

Die durchschnittliche Dicke des zweiten Verbindungsleiters 116 ist vorzugsweise senkrecht zu dessen Haupterstreckungsebene definiert und/oder entspricht einer durchschnittlichen Materialstärke eines Materials, beispielsweise eines Blechmaterials, aus welchem der zweite Verbindungsleiter 116 hergestellt ist.

Aufgrund der verringerten durchschnittlichen Dicke des ersten Verbindungsleiters 114 und/oder des zweiten Verbindungsleiters 116 ist vorzugsweise eine Prägung des jeweiligen Verbindungsleiters 114, 116 entbehrlich.

Vorzugsweise weist das Isolierelement 136 eine durchschnittliche Dicke auf, welche geringer ist als die durchschnittlichen Dicken der Isolierelemente 136 der zuvor beschriebenen Ausführungsformen.

Vorteilhaft kann es sein, wenn eine durchschnittliche Dicke des Isolierelements 136 ca. 1/10 oder weniger, beispielsweise ca. 1/15 oder weniger, einer senkrecht zur Dicke genommenen durchschnittlichen Breite des Isolierelements 136 beträgt.

Insbesondere beträgt die durchschnittliche Dicke des Isolierelements 136 ca. 1,8 mm oder weniger, beispielsweise ca. 1,7 mm oder weniger.

Insbesondere für eine kostengünstige Ausführung der elektrochemischen Zelle 100 kann es vorteilhaft sein, wenn eine durchschnittliche Breite B1 des ersten Kontaktelements 120 in einem ersten Fügebereich 192 mit dem ersten Zellterminal 118 ca. ½ oder weniger, insbesondere ca. 2/5 oder weniger, einer durchschnittlichen Breite des ersten Zellterminals 118 beträgt.

Die durchschnittliche Breite B1 des ersten Kontaktelements 120 und die durchschnittliche Breite des ersten Zellterminals 118 sind vorzugsweise zumindest näherungsweise parallel zueinander definiert und/oder zumindest näherungsweise parallel zu einer Schmalseite der elektrochemischen Zelle 100 angeordnet.

Der erste Fügebereich 192 ist vorzugsweise ein Bereich, in welchem das erste Kontaktelement 120 und das erste Zellterminal 118 miteinander verbunden sind. Vorzugsweise ist das erste Kontaktelement 120 im ersten Fügebereich 192 durch die Durchtrittsöffnung 119 des ersten Zellterminals 118 geführt und/oder füllt diese aus.

Vorzugsweise beträgt eine durchschnittliche Breite B2 des zweiten Kontaktelements 124 in einem zweiten Fügebereich 194 mit dem zweiten Zellterminal 122 ca. ½ oder weniger, insbesondere ca. 2/5 oder weniger, einer durchschnittlichen Breite des zweiten Zellterminals 122.

Die durchschnittliche Breite B2 des zweiten Kontaktelements 124 und die durchschnittliche Breite des zweiten Zellterminals 122 sind vorzugsweise zumindest näherungsweise parallel zueinander definiert und/oder zumindest näherungsweise parallel zu einer Schmalseite der elektrochemischen Zelle 100 angeordnet.

Der zweite Fügebereich 194 ist vorzugsweise ein Bereich, in welchem das zweite Kontaktelement 124 und das zweite Zellterminal 122 miteinander verbunden sind. Vorzugsweise ist das zweite Kontaktelement 124 im zweiten Fügebereich 194 durch die Durchtrittsöffnung 119 des zweiten Zellterminals 122 geführt und/oder füllt diese aus.

Beispielsweise betragen die durchschnittliche Breite B1 des ersten Kontaktelements 120 und/oder die durchschnittliche Breite B2 des zweiten Kontaktelements 124 im jeweiligen Fügebereich 192, 194 ca. 10,5 mm oder weniger, beispielsweise ca. 9,5 mm oder weniger.

Die durchschnittliche Breite B1 des ersten Kontaktelements 120 im ersten Fügebereich 192 entspricht vorzugsweise im Wesentlichen einer durchschnittlichen Breite der Durchtrittsöffnung 119 des ersten Zellterminals 118.

Ergänzend oder alternativ entspricht die durchschnittliche Breite B2 des zweiten Kontaktelements 124 im zweiten Fügebereich 194 vorzugsweise im Wesentlichen einer durchschnittlichen Breite der Durchtrittsöffnung 119 des zweiten Zellterminals 122.

Vorteilhaft kann es sein, wenn das erste Kontaktelement 120 im ersten Fügebereich 192 eine durchschnittliche Dicke D1 aufweist, welche ca. 2/10 oder weniger, beispielsweise ca. 1/10 oder weniger, der durchschnittlichen Breite B1 des ersten Kontaktelements 120 im ersten Fügebereich 192 beträgt.

Günstig kann es sein, wenn das zweite Kontaktelement 124 im zweiten Fügebereich 194 eine durchschnittliche Dicke D2 aufweist, welche ca. 2/10 oder weniger, beispielsweise ca. 1/10 oder weniger, der durchschnittlichen Breite B2 des zweiten Kontaktelements 124 im zweiten Fügebereich 194 beträgt.

Die durchschnittliche Dicke D1 des ersten Kontaktelements 120 ist insbesondere zumindest näherungsweise senkrecht zur durchschnittlichen Breite B1 des ersten Kontaktelements 120 definiert.

Vorzugsweise ist die durchschnittliche Dicke D2 des zweiten Kontaktelements 124 zumindest näherungsweise senkrecht zur durchschnittlichen Breite B2 des zweiten Kontaktelements 124 definiert.

Vorzugsweise beträgt die durchschnittliche Dicke D1 des ersten Kontaktelements 120 im ersten Fügebereich 192 und/oder beträgt die durchschnittliche Dicke D2 des zweiten Kontaktelements 124 im zweiten Fügebereich 194 ca. 0,8 mm oder weniger, beispielsweise ca. 0,7 mm oder weniger.

Die durchschnittliche Dicke D1 des ersten Kontaktelements 120 im ersten Fügebereich 192 ist vorzugsweise im Wesentlichen identisch mit einer durchschnittlichen Länge der Durchtrittsöffnung 119 des ersten Zellterminals 118 im ersten Fügebereich 192.

Insbesondere ist die durchschnittliche Dicke D2 des zweiten Kontaktelements 124 im zweiten Fügebereich 194 im Wesentlichen identisch mit einer durchschnittlichen Länge der Durchtrittsöffnung 119 des zweiten Zellterminals 122 im zweiten Fügebereich 194.

Günstig kann es sein, wenn eine durchschnittliche Dicke des Abdeckelements 110 in einem senkrecht zu dessen Haupterstreckungsebene genommenen Querschnitt ca. 1/10 oder weniger, beispielsweise ca. 1/20 oder weniger, einer durchschnittlichen Breite des Abdeckelements 110 senkrecht zu dessen Dicke beträgt.

Vorzugsweise beträgt die durchschnittliche Dicke des Abdeckelements 110 ca. 1,9 mm oder weniger, beispielsweise ca. 1,8 mm oder weniger.

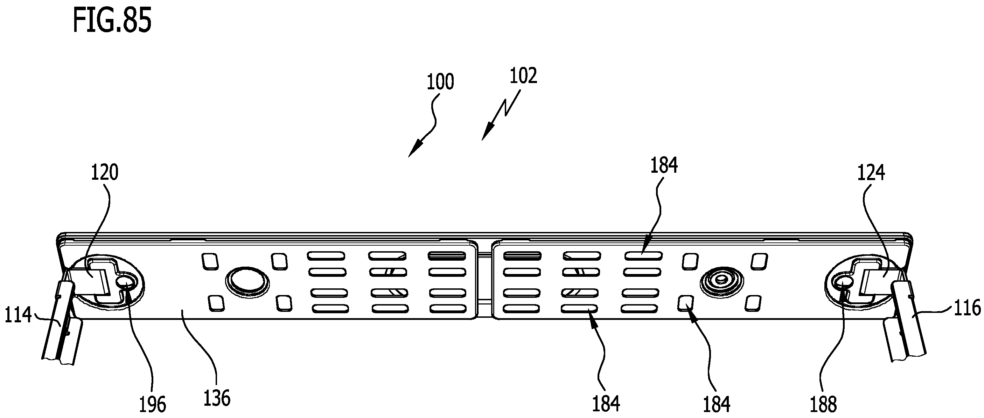

Wie insbesondere in den Fig. 85 bis 87 zu sehen ist, sind der erste Verbindungsleiter 114 und das erste Kontaktelement 120 vorzugsweise einteilig ausgebildet und/oder weisen keine materialübergangsbedingten Verdickungen auf. Insbesondere sind der zweite Verbindungsleiter 116 und das zweite Kontaktelement 124 einteilig ausgebildet und/oder weisen keine materialübergangsbedingten Verdickungen auf.

Günstig kann es sein, wenn der erste Verbindungsleiter 114 und das erste Kontaktelement 120 in einem senkrecht zur Haupterstreckungsebene des Abdeckelements 110 genommenen Querschnitt zumindest näherungsweise stufenförmig ausgebildet sind und/oder keine T-Form (als Ganzes) aufweisen.

Das erste Kontaktelement 120 ist vorzugsweise in einem parallel zur Haupterstreckungsebene des Abdeckelements 110 genommenen Querschnitt zumindest näherungsweise rechteckförmig ausgebildet.

Vorzugsweise sind der zweite Verbindungsleiter 116 und das zweite Kontaktelement 124 in einem senkrecht zur Haupterstreckungsebene des Abdeckelements 110 genommenen Querschnitt zumindest näherungsweise stufenförmig ausgebildet und/oder weisen keine T-Form (als Ganzes) auf.

Insbesondere ist das zweite Kontaktelement 124 in einem parallel zur Haupterstreckungsebene des Abdeckelements 110 genommenen Querschnitt zumindest näherungsweise rechteckförmig ausgebildet.

Die zuvor genannten Unterschiede der in den Fig. 84 bis 87 dargestellten weiteren Ausführungsform einer elektrochemischen Zelle dienen vorzugsweise einer Kostenoptimierung.

Eine Einfüllung des ersten Harzmaterials und/oder des zweiten Harzmaterials ist vorzugsweise durch eine erste Einfüllöffnung 196 bzw. eine zweite Einfüllöffnung 198 realisiert. Die erste Einfüllöffnung 196 und/oder die zweite Einfüllöffnung 198 sind vorliegend als Öffnungen im Isolierelement 136 ausgebildet.

Eine Einfüllung des ersten Harzmaterials und/oder des zweiten Harzmaterials durch das erste Kontaktelement 120 bzw. das zweite Kontaktelement 124 sind vorzugsweise entbehrlich.

Im Übrigen stimmt die in den Fig. 84 bis 87 dargestellte weitere Ausführungsform einer elektrochemischen Zelle hinsichtlich Aufbau und Funktion im Wesentlichen mit der in den Fig. 77 bis 83 dargestellten Ausführungsform überein, sodass auf deren Beschreibung insoweit Bezug genommen wird.

Durch die Vergusselemente 128, 150 sind weitere Werkzeuge zur Herstellung einer Dichtung zwischen dem Abdeckelement und den Kontaktelementen 120, 124 entbehrlich. Es kann eine Aushärtung im Bauteil erfolgen.

Eine Bauteilkomplexität ist vorzugsweise reduziert.

Die Vergusselemente 128, 150 wirken vorzugsweise als Spaltfüller.

## Patentansprüche

1. Elektrochemische Zelle (100) für ein elektrochemisches System (102), umfassend:
- ein elektrochemisches Element (106) zur Aufnahme, Speicherung und/oder Bereitstellung elektrischer Energie;
- ein Gehäuse (104) zur Aufnahme des elektrochemischen Elements (106), wobei das Gehäuse (104) einen Innenraum (108) der elektrochemischen Zelle (100) umgibt und ein Abdeckelement (110) umfasst;
- ein erstes Zellterminal (118) und ein zweites Zellterminal (122) zum Verbinden der elektrochemischen Zelle (100) mit einem Zellkontaktierungssystem;
- ein erstes Kontaktelement (120), welches das erste Zellterminal (118) mit einem ersten Verbindungsleiter (114) verbindet; und
- ein zweites Kontaktelement (124), welches das zweite Zellterminal (122) mit einem zweiten Verbindungsleiter (116) verbindet,
wobei das erste Kontaktelement (120) in einem ersten Verbindungsbereich (130) mittels eines ersten Vergusselements (128) an dem Abdeckelement (110) festgelegt ist, wobei das erste Vergusselement (128) aus einem ersten Polymermaterial gebildet ist, welches insbesondere ein erstes Harzmaterial umfassen kann oder daraus gebildet sein kann
und/oder wobei das zweite Kontaktelement (124) in einem zweiten Verbindungsbereich (156) mittels eines zweiten Vergusselements (150) an dem Abdeckelement (110) festgelegt ist, wobei das zweite Vergusselement (150) aus einem zweiten Polymermaterial gebildet ist, welches insbesondere ein zweites Harzmaterial umfassen kann oder daraus gebildet sein kann,
wobei
- das Abdeckelement (110) an einer dem Innenraum (108) abgewandten Seite einen ersten vertieften Bereich zur Aufnahme des ersten Vergusselements (128) aufweist und/oder das Abdeckelement (110) an einer dem Innenraum (108) abgewandten Seite einen zweiten vertieften Bereich (180) zur Aufnahme des zweiten Vergusselements (150) aufweist, wobei der erste vertiefte Bereich eine Ausbuchtung aufweist und/oder der zweite vertiefte Bereich (180) eine Ausbuchtung (185) aufweist,
wobei optional vorgesehen sein kann, dass der erste vertiefte Bereich und/oder der zweite vertiefte Bereich (180) durch Prägung gebildet sind,
und/oder
- ein Isolierelement (136) der elektrochemischen Zelle (100) mehrere Vertiefungen (165) zur Aufnahme des ersten Vergusselements (128) und/oder des zweiten Vergusselements (150) aufweist,
wobei in den Vertiefungen (165) insbesondere jeweils ein oder mehrere Strömungsleitelemente (168) zur Verteilung des ersten Harzmaterials und/oder des zweiten Harzmaterials während der Herstellung der elektrochemischen Zelle (100) angeordnet sein können,
und/oder
- die elektrochemische Zelle (100) ein Isolierelement (136) umfasst, welches auf einer dem Innenraum (108) zugewandten Innenseite (132) des Abdeckelements (110) mit dem Abdeckelement (110) verbunden ist, wobei das Isolierelement (136) benachbart zu dem ersten Verbindungsbereich (130) und/oder benachbart zu dem zweiten Verbindungsbereich (156) mindestens eine Einfüllöffnung (164) zur Einfüllung des ersten Harzmaterials in den ersten Verbindungsbereich (130) und/oder zur Einfüllung des zweiten Harzmaterials in den zweiten Verbindungsbereich (156) aufweist,
wobei vorgesehen sein kann, dass mit der mindestens einen Einfüllöffnung (164) mindestens ein Einfüllkanal (170) verbunden ist.

2. Elektrochemische Zelle (100) nach Anspruch 1, **dadurch gekennzeichnet, dass** Folgendes gilt:
- das erste Polymermaterial und/oder das zweite Polymermaterial weisen eine gemäß DIN EN ISO 868 bestimmbare Härte in einem Bereich von ca. 40 Shore D bis ca. 100 Shore D auf; und/oder
- das erste Polymermaterial und/oder das zweite Polymermaterial weisen eine Glasübergangstemperatur von ca. 90 °C oder mehr auf; und/oder
- das erste Harzmaterial und/oder das zweite Harzmaterial umfassen eines oder mehrere der folgenden Materialien oder sind daraus gebildet: Epoxidharzmaterial, Phenolharzmaterial, Aminoplastmaterial, Polyurethanmaterial, Silikonmaterial, Polyesterharzmaterial, ABS-Harzmaterial.

3. Elektrochemische Zelle (100) nach Anspruch 1 oder 2, **dadurch gekennzeichnet, dass** das erste Harzmaterial und/oder das zweite Harzmaterial einen oder mehrere Füllstoffe umfassen, wobei der eine oder die mehreren Füllstoffe insbesondere ausgewählt sind aus einem oder mehreren der folgenden: anorganische Füllstoffe, insbesondere Siliziumoxid, Carbonat, Carbid, insbesondere Siliziumcarbid, Nitrid, insbesondere Metallnitrid, Metalloxid.

4. Elektrochemische Zelle (100) nach einem der Ansprüche 1 bis 3, **dadurch gekennzeichnet, dass** das Abdeckelement (110) auf einer dem Innenraum (108) zugewandten Innenseite (132) mit dem, insbesondere plattenförmigen, Isolierelement (136) verbunden ist, wobei das Isolierelement (136) auf einer dem Abdeckelement (110) zugewandten Seite einen oder mehrere Positioniervorsprünge (138) und/oder einen oder mehrere Positionierrücksprünge umfasst, welche in einen oder mehrere komplementär dazu ausgebildete Positionierrücksprünge (140) und/oder Positioniervorsprünge des Abdeckelements (110) eingreifen, wobei optional vorgesehen sein kann, dass das Isolierelement (136) mehrere, insbesondere regelmäßig angeordnete, Durchtrittsöffnungen (184) aufweist, wobei die Durchtrittsöffnungen (184) vorzugsweise zumindest näherungsweise oval oder zumindest näherungsweise rechteckförmig sind.

5. Elektrochemische Zelle (100) nach einem der Ansprüche 1 bis 4, **dadurch gekennzeichnet, dass** die elektrochemische Zelle (100) ein erstes, insbesondere ringförmig geschlossenes oder mindestens eine Unterbrechung (166) aufweisendes, Dichtelement (134) umfasst, welches das erste Vergusselement (128) auf einer dem Innenraum (108) der elektrochemischen Zelle (100) abgewandten Außenseite des Abdeckelements (100) bezüglich einer Mittelachse (142) des ersten Kontaktelements (120) radial umgibt; und/oder dass die elektrochemische Zelle (100) ein zweites, insbesondere ringförmig geschlossenes oder mindestens eine Unterbrechung (166) aufweisendes, Dichtelement (152) umfasst, welches das zweite Vergusselement (150) auf einer dem Innenraum (108) der elektrochemischen Zelle (100) abgewandten Außenseite des Abdeckelements (110) bezüglich einer Mittelachse (154) des zweiten Kontaktelements (124) radial umgibt, wobei optional vorgesehen sein kann, dass das erste Dichtelement (134) in radialer Richtung bezüglich der Mittelachse (142) des ersten Kontaktelements (120) mindestens eine Unterbrechung (166) aufweist oder dass das erste Dichtelement (134) in radialer Richtung bezüglich der Mittelachse (142) des ersten Kontaktelements (120) über das erste Zellterminal (118) hinausragt und/oder dass das zweite Dichtelement (152) in radialer Richtung bezüglich der Mittelachse (154) des zweiten Kontaktelements (124) mindestens eine Unterbrechung (166) aufweist oder dass das zweite Dichtelement (152) in radialer Richtung bezüglich der Mittelachse (154) des zweiten Kontaktelements (124) über das zweite Zellterminal (122) hinausragt.

6. Elektrochemische Zelle (100) nach einem der Ansprüche 1 bis 5, **dadurch gekennzeichnet, dass** ein erstes Dichtelement (134) der elektrochemischen Zelle (100) ein drittes Polymermaterial umfasst oder daraus gebildet ist und/oder dass ein zweites Dichtelement (152) der elektrochemischen Zelle (100) ein viertes Polymermaterial umfasst oder daraus gebildet ist, wobei das erste Dichtelement (134) und/oder das zweite Dichtelement (152) insbesondere in einem Druckverfahren auf einen Grundkörper des Abdeckelements (100), insbesondere in Form einer Dichtraupe, aufgebracht sind, wobei optional vorgesehen sein kann, dass das dritte Polymermaterial und/oder das vierte Polymermaterial einen oder mehrere Füllstoffe umfassen, wobei der eine oder die mehreren Füllstoffe insbesondere ausgewählt sind aus einem oder mehreren der folgenden: anorganische Füllstoffe, insbesondere Siliziumoxid, Carbonat, Carbid, insbesondere Siliziumcarbid, Nitrid, insbesondere Metallnitrid, Metalloxid; und/oder dass das vierte Polymermaterial ein oder mehrere Leitadditive umfasst, wobei das eine oder die mehreren Leitadditive insbesondere ausgewählt sind aus einem oder mehreren der folgenden: Kohlenstoffmaterialen, insbesondere Leitruß, Graphit, Graphen, Kohlenstoffnanoröhren, Kohlenstofffasern und/oder Kohlenstoffnanozwiebeln, partikuläre metallische Materialien, insbesondere MetallPulver, elektrisch leitfähige keramische Materialien, insbesondere Nitride und/oder Carbide, elektrisch leitfähige Polymere, insbesondere trans-Polyacetylen, Polypyrrol, Polyanilin, Poly(-phenylen), Polythiophen und/oder Polystyrol dotiertes Poly-(3,4-ethylendioxythiophen) (PEDOT:PSS).

7. Elektrochemische Zelle (100) nach einem der Ansprüche 1 bis 6, **dadurch gekennzeichnet, dass** ein erstes Dichtelement (134) der elektrochemischen Zelle (100) und/oder ein zweites Dichtelement (152) der elektrochemischen Zelle (100) einen Bestandteil des Abdeckelements (110) bilden und insbesondere jeweils durch eine, insbesondere ringförmig geschlossene oder mindestens eine Unterbrechung aufweisende, Erhebung des Abdeckelements (110) gebildet ist, welche sich in einer von dem Innenraum (108) der elektrochemischen Zelle (100) weg weisenden Richtung von einem Grundkörper des Abdeckelements (110) weg erstreckt.

8. Elektrochemische Zelle (100) nach einem der Ansprüche 1 bis 7, **dadurch gekennzeichnet,**
a) **dass** das erste Kontaktelement (120) und/oder das zweite Kontaktelement (124) mindestens zwei Kontaktelementbauteile (120a, 120b, 120c, 124a, 124b, 124c) umfassen, welche insbesondere voneinander verschiedene metallische Materialien umfassen oder daraus gebildet sind und welche, insbesondere in dem ersten Verbindungsbereich (130) und/oder in dem zweiten Verbindungsbereich (156), stoffschlüssig, insbesondere mittels Laserschweißens und/oder Walzplattierens, miteinander verbunden sind; und/oder
b) **dass** das erste Kontaktelement (120) eine erste Harzmaterialeinfüllöffnung (188) zur Einfüllung des ersten Harzmaterials in den ersten Verbindungsbereich (130) aufweist und/oder
**dass** das zweite Kontaktelement (124) eine zweite Harzmaterialeinfüllöffnung (186) zur Einfüllung des zweiten Harzmaterials in den zweiten Verbindungsbereich (150) aufweist; und/oder
c) **dass** der erste Verbindungsleiter (114) eine durchschnittliche Dicke aufweist, welche ca. 1/10 oder weniger einer senkrecht zur Dicke genommenen durchschnittlichen Breite des ersten Verbindungsleiters (114) beträgt, wobei die durchschnittliche Dicke vorzugsweise ca. 0,8 mm oder weniger, beispielsweise ca. 0,7 mm oder weniger, beträgt und/oder
**dass** der zweite Verbindungsleiter (116) eine durchschnittliche Dicke aufweist, welche ca. 1/10 oder weniger einer senkrecht zur Dicke genommenen durchschnittlichen Breite des zweiten Verbindungsleiters (116) beträgt, wobei die durchschnittliche Dicke vorzugsweise ca. 0,8 mm oder weniger, beispielsweise ca. 0,7 mm oder weniger, beträgt; und/oder
d) **dass** das erste Kontaktelement (120) in einem ersten Fügebereich (192) mit dem ersten Zellterminal eine durchschnittliche Dicke (D1) aufweist, welche ca. 2/10 oder weniger einer senkrecht zur Dicke (D1) genommenen durchschnittlichen Breite (B1) des ersten Kontaktelements (120) beträgt, wobei die durchschnittliche Dicke (D1) vorzugsweise ca. 0,8 mm oder weniger, beispielsweise ca. 0,7 mm oder weniger, beträgt und/oder
**dass** das zweite Kontaktelement (124) in einem zweiten Fügebereich (194) mit dem zweiten Zellterminal (122) eine durchschnittliche Dicke (D2) aufweist, welche ca. 2/10 oder weniger einer senkrecht zur Dicke (D2) genommenen durchschnittlichen Breite (B2) des zweiten Kontaktelements (124) beträgt, wobei die durchschnittliche Dicke (D2) vorzugsweise ca. 0,8 mm oder weniger, beispielsweise ca. 0,7 mm oder weniger, beträgt; und/oder
e) **dass** eine durchschnittliche Breite (B1) des ersten Kontaktelements (120) in einem ersten Fügebereich (192) mit dem ersten Zellterminal (118) ca. ½ oder geringer, insbesondere 2/5 oder geringer, als eine durchschnittliche Breite des ersten Zellterminals (118) in einer parallel zur Breite (B1) des ersten Kontaktelements (120) genommenen Richtung ist, wobei die durchschnittliche Breite (B1) vorzugsweise ca. 10,0 mm oder weniger beträgt und/oder dass eine durchschnittliche Breite (B2) des zweiten Kontaktelements (124) in einem zweiten Fügebereich (194) mit dem zweiten Zellterminal (122) ca. ½ oder geringer, insbesondere 2/5 oder geringer, als eine durchschnittliche Breite des zweiten Zellterminals (122) in einer parallel zur Breite (B2) des zweiten Kontaktelements (124) genommenen Richtung ist, wobei die durchschnittliche Breite (B2) vorzugsweise ca. 10,0 mm oder weniger beträgt.

9. Elektrochemische Zelle (100) nach einem der Ansprüche 1 bis 8, **dadurch gekennzeichnet, dass** der erste Verbindungsleiter (114) und das erste Kontaktelement (120) einteilig ausgebildet sind und/oder dass das erste Kontaktelement (120) in einem parallel zu einer Haupterstreckungsebene des Abdeckelements (110) genommenen Querschnitt zumindest näherungsweise rechteckförmig ausgebildet ist und/oder
dass der zweite Verbindungsleiter (116) und das zweite Kontaktelement (124) einteilig ausgebildet sind und/oder dass das zweite Kontaktelement (124) in einem parallel zur Haupterstreckungsebene des Abdeckelements (110) genommenen Querschnitt zumindest näherungsweise rechteckförmig ausgebildet ist.

10. Elektrochemische Zelle (100) nach einem der Ansprüche 1 bis 9, **dadurch gekennzeichnet,**
a) **dass** eine durchschnittliche Dicke des Abdeckelements (110) in einem senkrecht zu dessen Haupterstreckungsebene genommenen Querschnitt ca. 1/10 oder weniger, beispielsweise ca. 1/20 oder weniger, einer durchschnittlichen Breite des Abdeckelements (110) senkrecht zu dessen Dicke beträgt und/oder dass die durchschnittliche Dicke des Abdeckelements (110) ca. 1,9 mm oder weniger, beispielsweise ca. 1,8 mm oder weniger, beträgt; und/oder
b) **dass** eine durchschnittliche Dicke eines Isolierelements (136) der elektrochemischen Zelle (100) ca. 1/10 oder weniger, beispielsweise ca. 1/15 oder weniger, einer senkrecht zur Dicke genommenen durchschnittlichen Breite des Isolierelements beträgt, wobei die durchschnittliche Dicke des Isolierelements (136) vorzugsweise ca. 1,7 mm oder weniger beträgt.

11. Elektrochemische Zelle (100) nach einem der Ansprüche 1 bis 10, **dadurch gekennzeichnet,**
a) **dass** die elektrochemische Zelle (100) mindestens ein Umschnappelement (162) umfasst, welches bei einem Übersteigen eines kritischen Drucks und/oder einer kritischen Temperatur in dem Innenraum (108) der elektrochemischen Zelle (100) von einem Ruhezustand in einen Arbeitszustand nach außen umlenkbar ist, und so einen elektrischen Kontakt zwischen dem Abdeckelement (110) und dem ersten Zellterminal (118) herstellt; und/oder
b) **dass** das erste Kontaktelement (120) und/oder das zweite Kontaktelement (124) stoffschlüssig und/oder formschlüssig und/oder kraftschlüssig mit einem Isolierelement (136) der elektrochemischen Zelle verbunden (100) sind.

12. Elektrochemisches System (102), umfassend eine oder mehrere elektrochemische Zellen (100) nach einem der Ansprüche 1 bis 11.

13. Verfahren zur Herstellung einer elektrochemischen Zelle nach einem der Ansprüche 1 bis 11,
wobei
- das Abdeckelement (110) an einer dem Innenraum (108) abgewandten Seite einen ersten vertieften Bereich zur Aufnahme des ersten Vergusselements (128) aufweist und/oder das Abdeckelement (110) an einer dem Innenraum (108) abgewandten Seite einen zweiten vertieften Bereich (180) zur Aufnahme des zweiten Vergusselements (150) aufweist, wobei der erste vertiefte Bereich eine Ausbuchtung aufweist und/oder der zweite vertiefte Bereich (180) eine Ausbuchtung (185) aufweist,
wobei optional vorgesehen sein kann, dass der erste vertiefte Bereich und/oder der zweite vertiefte Bereich (180) durch Prägung gebildet sind,
und/oder
- ein Isolierelement (136) der elektrochemischen Zelle (100) mehrere Vertiefungen (165) zur Aufnahme des ersten Vergusselements (128) und/oder des zweiten Vergusselements (150) aufweist,
wobei in den Vertiefungen (165) insbesondere jeweils ein oder mehrere Strömungsleitelemente (168) zur Verteilung des ersten Harzmaterials und/oder des zweiten Harzmaterials während der Herstellung der elektrochemischen Zelle (100) angeordnet sein können,
und/oder
- die elektrochemische Zelle (100) ein Isolierelement (136) umfasst, welches auf einer dem Innenraum (108) zugewandten Innenseite (132) des Abdeckelements (110) mit dem Abdeckelement (110) verbunden ist, wobei das Isolierelement (136) benachbart zu dem ersten Verbindungsbereich (130) und/oder benachbart zu dem zweiten Verbindungsbereich (156) mindestens eine Einfüllöffnung (164) zur Einfüllung des ersten Harzmaterials in den ersten Verbindungsbereich (130) und/oder zur Einfüllung des zweiten Harzmaterials in den zweiten Verbindungsbereich (156) aufweist,
wobei vorgesehen sein kann, dass mit der mindestens einen Einfüllöffnung (164) mindestens ein Einfüllkanal (170) verbunden ist,
wobei das Verfahren Folgendes umfasst:
- Bereitstellen des Abdeckelements (110), welches eine erste Öffnung (126a) und/oder eine zweite Öffnung (126b) umfasst;
- Positionieren des ersten Kontaktelements (120), welches insbesondere mit dem ersten Zellterminal (118) verbunden oder verbindbar ist, in der ersten Öffnung (126a) und/oder Positionieren des zweiten Kontaktelements (124), welches insbesondere mit dem zweiten Zellterminal (122) verbunden oder verbindbar ist, in der zweiten Öffnung (126b);
- Einfüllen des ersten Harzmaterials in einen von dem Abdeckelement (110), dem ersten Kontaktelement (120) und insbesondere dem ersten Zellterminal (118) umgebenen ersten Verbindungsbereich (130) in einem Gießverfahren und/oder Einfüllen des zweiten Harzmaterials in einen von dem Abdeckelement, dem zweiten Kontaktelement (124) und insbesondere dem zweiten Zellterminal (122) umgebenen zweiten Verbindungsbereich (156) in einem Gießverfahren;
- Trocknen und/oder Aushärten des ersten Harzmaterials unter Bildung des ersten Vergusselements (128) und/oder Trocknen und/oder Aushärten des zweiten Harzmaterials unter Bildung des zweiten Vergusselements (150),
wobei bei dem Verfahren optional vorgesehen ist, dass auf einer einem Innenraum (108) der elektrochemischen Zelle (100) abgewandten Außenseite eines Grundkörpers des Abdeckelements (110) mindestens ein erstes Dichtelement (134) auf das Abdeckelement (110) aufgebracht und/oder in das Abdeckelement (110) eingebracht wird, welches den ersten Verbindungsbereich (130) radial umgibt und/oder dass auf der dem Innenraum (108) der elektrochemischen Zelle (100) abgewandten Außenseite des Grundkörpers des Abdeckelements (110) mindestens ein zweites Dichtelement (152) auf das Abdeckelement (110) aufgebracht und/oder in das Abdeckelement (110) eingebracht wird, welches den zweiten Verbindungsbereich (156) radial umgibt.

## Claims

1. Electrochemical cell (100) for an electrochemical system (102), comprising:
- an electrochemical element (106) for receiving, storing and/or providing electrical energy;
- a housing (104) for receiving the electrochemical element (106), wherein the housing (104) surrounds an interior (108) of the electrochemical cell (100) and comprises a cover element (110);
- a first cell terminal (118) and a second cell terminal (122) for connecting the electrochemical cell (100) to a cell contacting system;
- a first contact element (120), which connects the first cell terminal (118) to a first connecting conductor (114); and
- a second contact element (124), which connects the second cell terminal (122) to a second connecting conductor (116),
wherein the first contact element (120), in a first connecting region (130), is fixed to the cover element (110) by means of a first potting element (128), wherein the first potting element (128) is formed from a first polymer material, which can comprise or be formed from a first resin material in particular,
and/or wherein the second contact element (124), in a second connecting region (156), is fixed to the cover element (110) by means of a second potting element (150), wherein the second potting element (150) is formed from a second polymer material, which can comprise or be formed from a second resin material in particular,
wherein
- the cover element (110), on a side facing away from the interior (108), has a first recessed region for receiving the first potting element (128) and/or the cover element (110), on a side facing away from the interior (108), has a second recessed region (180) for receiving the second potting element (150), wherein the first recessed region has a protruding portion and/or the second recessed region (180) has a protruding portion (185),
wherein optionally provision can be made for the first recessed region and/or the second recessed region (180) to be formed by embossing,
and/or
- an insulating element (136) of the electrochemical cell (100) has a plurality of recesses (165) for receiving the first potting element (128) and/or the second potting element (150),
wherein in particular one or more flow guiding elements (168) for distributing the first resin material and/or the second resin material during production of the electrochemical cell (100) can be arranged in each of the recesses (165),
and/or
- the electrochemical cell (100) comprises an insulating element (136) which, on an inner side (132) of the cover element (110), the inner side facing the interior (108), is connected to the cover element (110), wherein the insulating element (136), adjacent to the first connecting region (130) and/or adjacent to the second connecting region (156), has at least one filling opening (164) for filling the first resin material into the first connecting region (130) and/or for filling the second resin material into the second connecting region (156),
wherein provision can be made for at least one filling channel (170) to be connected to the at least one filling opening (164).

2. Electrochemical cell (100) according to Claim 1, **characterized in that** the following applies:
- the first polymer material and/or the second polymer material have/has a hardness, which can be determined in accordance with DIN EN ISO 868, in a range of approximately 40 Shore D to approximately 100 Shore D; and/or
- the first polymer material and/or the second polymer material have/has a glass transition temperature of approximately 90°C or more; and/or
- the first resin material and/or the second resin material comprise/comprises or are/is formed from one or more of the following materials: epoxy resin material, phenolic resin material, aminoplast material, polyurethane material, silicone material, polyester resin material, ABS resin material.

3. Electrochemical cell (100) according to Claim 1 or 2, **characterized in that** the first resin material and/or the second resin material comprise/comprises one or more fillers, wherein the one or more fillers are selected in particular from one or more of the following: inorganic fillers, in particular silicon oxide, carbonate, carbide, in particular silicon carbide, nitride, in particular metal nitride, metal oxide.

4. Electrochemical cell (100) according to any of Claims 1 to 3, **characterized in that** the cover element (110), on an inner side (132) facing the interior (108), is connected to the, in particular plate-like, insulating element (136), wherein the insulating element (136), on a side facing the cover element (110), comprises one or more positioning projections (138) and/or one or more positioning depressions, which engage into one or more complementary positioning depressions (140) and/or positioning projections of the cover element (110), wherein optionally provision can be made for the insulating element (136) to have a plurality of, in particular regularly arranged, passage openings (184), wherein the passage openings (184) are preferably at least approximately oval or at least approximately rectangular.

5. Electrochemical cell (100) according to any of Claims 1 to 4, **characterized in that** the electrochemical cell (100) comprises a first sealing element (134), which in particular is annularly closed or has at least one interruption (166) and radially surrounds the first potting element (128) with respect to a central axis (142) of the first contact element (120) on an outer side of the cover element (100), the outer side facing away from the interior (108) of the electrochemical cell (100); and/or in that the electrochemical cell (100) comprises a second sealing element (152) which in particular is annularly closed or has at least one interruption (166) and radially surrounds the second potting element (150) with respect to a central axis (154) of the second contact element (124) on an outer side of the electrochemical cell (100) of the cover element (110), the outer side facing away from the interior (108), wherein optionally provision can be made for the first sealing element (134) to have at least one interruption (166) in the radial direction with respect to the centre axis (142) of the first contact element (120) or for the first sealing element (134) to project beyond the first cell terminal (118) in the radial direction with respect to the centre axis (142) of the first contact element (120) and/or for the second sealing element (152) to have at least one interruption (166) in the radial direction with respect to the centre axis (154) of the second contact element (124) or for the second sealing element (152) to project beyond the second cell terminal (122) in the radial direction with respect to the centre axis (154) of the second contact element (124).

6. Electrochemical cell (100) according to any of Claims 1 to 5, **characterized in that** a first sealing element (134) of the electrochemical cell (100) comprises or is formed from a third polymer material and/or **in that** a second sealing element (152) of the electrochemical cell (100) comprises or is formed from a fourth polymer material, wherein the first sealing element (134) and/or the second sealing element (152) are/is applied to a main body of the cover element (100), in particular in the form of a sealing bead, in a printing process in particular, wherein optionally provision can be made for the third polymer material and/or the fourth polymer material to comprise one or more fillers, wherein the one or more fillers are selected in particular from one or more of the following: inorganic fillers, in particular silicon oxide, carbonate, carbide, in particular silicon carbide, nitride, in particular metal nitride, metal oxide; and/or
for the fourth polymer material to comprise one or more conductive additives, wherein the one or more conductive additives are selected in particular from one or more of the following: carbon materials, in particular conductive black, graphite, graphene, carbon nanotubes, carbon fibres and/or carbon nanobulbs, particulate metal materials, in particular metal powder, electrically conductive ceramic materials, in particular nitrides and/or carbides, electrically conductive polymers, in particular trans-polyacetylene, polypyrrole, polyaniline, poly(phenylene), polythiophene and/or polystyrene-doped poly-(3.4-ethylenedioxythiophene) (PEDOT:PSS).

7. Electrochemical cell (100) according to any of Claims 1 to 6, **characterized in that** a first sealing element (134) of the electrochemical cell (100) and/or a second sealing element (152) of the electrochemical cell (100) form a constituent part of the cover element (110) and in particular are each formed by a raised portion of the cover element (110), which raised portion in particular is annularly closed or has at least one interruption and extends away from a main body of the cover element (110) in a direction pointing away from the interior (108) of the electrochemical cell (100).

8. Electrochemical cell (100) according to any of Claims 1 to 7, **characterized**
a) **in that** the first contact element (120) and/or the second contact element (124) comprise at least two contact element components (120a, 120b, 120c, 124a, 124b, 124c) which in particular comprise or are formed from different metal materials and which, in particular in the first connecting region (130) and/or in the second connecting region (156), are connected to each other in a cohesive fashion, in particular by means of laser welding and/or roll plating; and/or
b) **in that** the first contact element (120) has a first resin material filling opening (188) for filling the first resin material into the first connecting region (130) and/or in that the second contact element (124) has a second resin material filling opening (186) for filling the second resin material into the second connecting region (150); and/or
c) **in that** the first connecting conductor (114) has an average thickness which is approximately 1/10 or less of an average width of the first connecting conductor (114) perpendicular to the thickness, wherein the average thickness is preferably approximately 0.8 mm or less, for example approximately 0.7 mm or less, and/or in that the second connecting conductor (116) has an average thickness which is approximately 1/10 or less of an average width of the second connecting conductor (116) perpendicular to the thickness, wherein the average thickness is preferably approximately 0.8 mm or less, for example approximately 0.7 mm or less, and/or
d) **in that** the first contact element (120), in a first joining region (192) with the first cell terminal, has an average thickness (D1) which is approximately 2/10 or less of an average width (B1) of the first contact element (120) perpendicular to the thickness (D1), wherein the average thickness (D1) is preferably approximately 0.8 mm or less, for example approximately 0.7 mm or less and/or
**in that** the second contact element (124), in a second joining region (194) with the second cell terminal (122), has an average thickness (D2) which is approximately 2/10 or less of an average width (B2) of the second contact element (124) perpendicular to the thickness (D2). wherein the average thickness (D2) is preferably approximately 0.8 mm or less, for example approximately 0.7 mm or less; and/or
e) **in that** an average width (B1) of the first contact element (120) in a first joining region (192) with the first cell terminal (118) is approximately ½ or less, in particular 2/5 or less, than an average width of the first cell terminal (118) in a direction parallel to the width (B1) of the first contact element (120), wherein the average width (B1) is preferably approximately 10.0 mm or less and/or in that an average width (B2) of the second contact element (124) in a second joining region (194) with the second cell terminal (122) is approximately ½ or less, in particular 2/5 or less, of an average width of the second cell terminal (122) in a direction parallel to the width (B2) of the second contact element (124), wherein the average width (B2) is preferably approximately 10.0 mm or less.

9. Electrochemical cell (100) according to any of Claims 1 to 8, **characterized in that** the first connecting conductor (114) and the first contact element (120) are formed in one piece and/or **in that** the first contact element (120) is at least approximately rectangular in a cross section parallel to a main plane of extent of the cover element (110) and/or
**in that** the second connecting conductor (116) and the second contact element (124) are formed in one piece and/or **in that** the second contact element (124) is at least approximately rectangular in a cross section parallel to a main plane of extent of the cover element (110).

10. Electrochemical cell (100) according to any of Claims 1 to 9, **characterized**
a) **in that** an average thickness of the cover element (110) in a cross section perpendicular to its main plane of extent is approximately 1/10 or less, for example approximately 1/20 or less, of an average width of the cover element (110) perpendicular to its thickness, and/or in that the average thickness of the cover element (110) is approximately 1.9 mm or less, for example, approximately 1.8 mm or less; and/or
b) **in that** an average thickness of an insulating element (136) of the electrochemical cell (100) is approximately 1/10 or less, for example approximately 1/15 or less, of an average width of the insulating element perpendicular to the thickness, wherein the average thickness of the insulating element (136) is preferably approximately 1.7 mm or less.

11. Electrochemical cell (100) according to any of Claims 1 to 10, **characterized**
a) **in that** the electrochemical cell (100) comprises at least one snap-over element (162), which can be deflected outwards from an inoperative state to a working state when a critical pressure and/or a critical temperature in the interior (108) of the electrochemical cell (100) is exceeded, and thus establishes electrical contact between the cover element (110) and the first cell terminal (118); and/or
b) **in that** the first contact element (120) and/or the second contact element (124) are connected to an insulating element (136) of the electrochemical cell (100) in a cohesive and/or positively locking and/or non-positively locking fashion.

12. Electrochemical system (102) comprising one or more electrochemical cells (100) according to any of Claims 1 to 11.

13. Method for producing an electrochemical cell according to any of Claims 1 to 11, wherein
- the cover element (110), on a side facing away from the interior (108), has a first recessed region for receiving the first potting element (128) and/or the cover element (110), on a side facing away from the interior (108), has a second recessed region (180) for receiving the second potting element (150), wherein the first recessed region has a protruding portion and/or the second recessed region (180) has a protruding portion (185),
wherein optionally provision can be made for the first recessed region and/or the second recessed region (180) to be formed by embossing,
and/or
- an insulating element (136) of the electrochemical cell (100) has a plurality of recesses (165) for receiving the first potting element (128) and/or the second potting element (150),
wherein in particular one or more flow guiding elements (168) for distributing the first resin material and/or the second resin material during production of the electrochemical cell (100) can be arranged in each of the recesses (165),
and/or
- the electrochemical cell (100) comprises an insulating element (136) which, on an inner side (132) of the cover element (110), the inner side facing the interior (108), is connected to the cover element (110), wherein the insulating element (136), adjacent to the first connecting region (130) and/or adjacent to the second connecting region (156), has at least one filling opening (164) for filling the first resin material into the first connecting region (130) and/or for filling the second resin material into the second connecting region (156),
wherein provision can be made for at least one filling channel (170) to be connected to the at least one filling opening (164),
wherein the method comprises the following:
- providing the cover element (110), which comprises a first opening (126a) and/or a second opening (126b);
- positioning the first contact element (120), which is or can be connected to the first cell terminal (118) in particular, in the first opening (126a) and/or positioning the second contact element (124), which is or can be connected to the second cell terminal (122) in particular, in the second opening (126b);
- filling the first resin material into a first connecting region (130) surrounded by the cover element (110), the first contact element (120) and in particular the first cell terminal (118) in a casting process and/or filling the second resin material into a second connecting region (156) surrounded by the cover element, the second contact element (124) and in particular the second cell terminal (122) in a casting process;
- drying and/or curing the first resin material so as to form the first potting element (128) and/or drying and/or curing the second resin material so as to form the second potting element (150),
wherein optionally provision is made in the method for at least one first sealing element (134) to be applied to the cover element (110) and/or introduced into the cover element (110), the first sealing element radially surrounding the first connecting region (130), on an outer side of a main body of the cover element (110), the outer side facing away from an interior (108) of the electrochemical cell (100), and/or for at least one second sealing element (152) to be applied to the cover element (110) and/or introduced into the cover element (110), the second sealing element radially surrounding the second connecting region (156), on the outer side of the main body of the cover element (110), the outer side facing away from the interior (108) of the electrochemical cell (100).

## Revendications

1. Cellule électrochimique (100) pour un système électrochimique (102), comprenant :
- un élément électrochimique (106) pour recevoir, stocker et/ou fournir de l'énergie électrique ;
- un boîtier (104) pour recevoir l'élément électrochimique (106), le boîtier (104) entourant un espace intérieur (108) de la cellule électrochimique (100) et comprenant un élément de recouvrement (110) ;
- un premier terminal de cellule (118) et un deuxième terminal de cellule (122) pour relier la cellule électrochimique (100) à un système de contact de cellule ;
- un premier élément de contact (120) qui relie le premier terminal de cellule (118) à un premier conducteur de liaison (114) ; et
- un deuxième élément de contact (124) qui relie le deuxième terminal de cellule (122) à un deuxième conducteur de liaison (116) ;
le premier élément de contact (120) étant fixé à l'élément de recouvrement (110) dans une première zone de liaison (130) au moyen d'un premier élément de scellement (128), le premier élément de scellement (128) étant formé d'un premier matériau polymère qui peut notamment comprendre un premier matériau de résine ou être formé à partir de celui-ci
et/ou le deuxième élément de contact (124) étant fixé à l'élément de recouvrement (110) dans une première zone de liaison (156) au moyen d'un deuxième élément de scellement (150), le deuxième élément de scellement (150) étant formé d'un deuxième matériau polymère qui peut notamment comprendre un deuxième matériau de résine ou être formé à partir de celui-ci
où
- l'élément de recouvrement (110) présente, sur un côté détourné de l'espace intérieur (108), une première zone en creux pour recevoir le premier élément de scellement (128) et/ou l'élément de recouvrement (110) présente, sur un côté détourné de l'espace intérieur (108), une deuxième zone en creux (180) pour recevoir le deuxième élément de scellement (150), la première zone en creux présentant un renflement et/ou la deuxième zone en creux (180) présentant un renflement (185),
où il peut être prévu en option que la première zone en creux et/ou la deuxième zone en creux (180) soient formées par estampage,
et/ou
- un élément isolant (136) de la cellule électrochimique (100) présente plusieurs creux (165) pour recevoir le premier élément de scellement (128) et/ou le deuxième élément de scellement (150),
où un ou plusieurs éléments de guidage d'écoulement (168) peuvent notamment être agencés dans les creux (165) pour distribuer le premier matériau de résine et/ou le deuxième matériau de résine pendant la fabrication de la cellule électrochimique (100),
et/ou
- la cellule électrochimique (100) comprend un élément isolant (136) qui est relié à l'élément de recouvrement (110) sur un côté intérieur (132) de l'élément de recouvrement (110) tourné vers l'espace intérieur (108), l'élément isolant (136) présentant au voisinage de la première zone de liaison (130) et/ou au voisinage de la deuxième zone de liaison (156) au moins une ouverture de remplissage (164) pour remplir la première zone de liaison (130) avec le premier matériau de résine et/ou pour remplir la deuxième zone de liaison (156) avec le deuxième matériau de résine,
où il peut être prévu qu'au moins un canal de remplissage (170) soit relié à l'au moins une ouverture de remplissage (164).

2. Cellule électrochimique (100) selon la revendication 1, **caractérisée en ce que** :
- le premier matériau polymère et/ou le deuxième matériau polymère présentent une dureté déterminable selon la norme DIN EN ISO 868 dans une plage d'environ 40 Shore D à environ 100 Shore D ; et/ou
- le premier matériau polymère et/ou le deuxième matériau polymère présentent une température de transition vitreuse d'environ 90 °C ou plus ; et/ou
- le premier matériau de résine et/ou le deuxième matériau de résine comprennent un ou plusieurs des matériaux suivants ou sont formés de ceux-ci : matériau de résine époxy, matériau de résine phénolique, matériau aminoplaste, matériau de polyuréthane, matériau de silicone, matériau de résine polyester, matériau de résine ABS.

3. Cellule électrochimique (100) selon la revendication 1 ou 2, **caractérisée en ce que** le premier matériau de résine et/ou le deuxième matériau de résine comprennent une ou plusieurs charges, les une ou plusieurs charges étant notamment choisies parmi une ou plusieurs des charges suivantes : charges inorganiques, notamment oxyde de silicium, carbonate, carbure, notamment carbure de silicium, nitrure, notamment nitrure métallique, oxyde métallique.

4. Cellule électrochimique (100) selon l'une quelconque des revendications 1 à 3, **caractérisée en ce que** l'élément de recouvrement (110) est relié, sur un côté intérieur (132) tourné vers l'espace intérieur (108), à l'élément isolant (136), notamment en forme de plaque, l'élément isolant (136) comprenant, sur un côté tourné vers l'élément de recouvrement (110), une ou plusieurs saillies de positionnement (138) et/ou un ou plusieurs retraits de positionnement, qui s'engagent dans un ou plusieurs retraits de positionnement (140) et/ou saillies de positionnement complémentaires de l'élément de recouvrement (110), où il peut être prévu en option que l'élément isolant (136) présente plusieurs ouvertures de passage (184), notamment agencées régulièrement, où les ouvertures de passage (184) sont de préférence au moins approximativement ovales ou au moins approximativement rectangulaires.

5. Cellule électrochimique (100) selon l'une quelconque des revendications 1 à 4, **caractérisée en ce que** la cellule électrochimique (100) comprend un premier élément d'étanchéité (134), notamment fermé sous forme annulaire ou présentant au moins une interruption (166), qui entoure radialement le premier élément de scellement (128) sur un côté extérieur de l'élément de recouvrement (100) détourné de l'espace intérieur (108) de la cellule électrochimique (100) par rapport à un axe central (142) du premier élément de contact (120) ; et/ou en ce que la cellule électrochimique (100) comprend un deuxième élément d'étanchéité (152), notamment fermé sous forme annulaire ou présentant au moins une interruption (166), qui entoure radialement le deuxième élément de scellement (150) sur un côté extérieur de l'élément de recouvrement (110) détourné de l'espace intérieur (108) de la cellule électrochimique (100) par rapport à un axe central (154) du deuxième élément de contact (124), où il peut être prévu en option que le premier élément d'étanchéité (134) présente au moins une interruption (166) dans la direction radiale par rapport à l'axe central (142) du premier élément de contact (120), ou que le premier élément d'étanchéité (134) dépasse dans la direction radiale par rapport à l'axe central (142) du premier élément de contact (120) au-delà du premier terminal de cellule (118) et/ou que le deuxième élément d'étanchéité (152) présente au moins une interruption (166) dans la direction radiale par rapport à l'axe central (154) du deuxième élément de contact (124) ou que le deuxième élément d'étanchéité (152) dépasse dans la direction radiale par rapport à l'axe central (154) du deuxième élément de contact (124) au-delà du deuxième terminal de cellule (122).

6. Cellule électrochimique (100) selon l'une quelconque des revendications 1 à 5, **caractérisée en ce qu'**un premier élément d'étanchéité (134) de la cellule électrochimique (100) comprend un troisième matériau polymère ou est formé à partir de celui-ci et/ou **en ce qu'**un deuxième élément d'étanchéité (152) de la cellule électrochimique (100) comprend un quatrième matériau polymère ou est formé à partir de celui-ci, le premier élément d'étanchéité (134) et/ou le deuxième élément d'étanchéité (152) étant appliqués, notamment dans un procédé d'impression, sur un corps de base de l'élément de recouvrement (100), notamment sous la forme d'un cordon d'étanchéité, où il peut être prévu en option que le troisième matériau polymère et/ou le quatrième matériau polymère comprennent une ou plusieurs charges, où les une ou plusieurs charges sont notamment choisies parmi une ou plusieurs des charges suivantes : charges inorganiques, notamment oxyde de silicium, carbonate, carbure, notamment carbure de silicium, nitrure, notamment nitrure métallique, oxyde métallique ; et/ou en ce que le quatrième matériau polymère comprend un ou plusieurs additifs conducteurs, les un ou plusieurs additifs conducteurs étant notamment choisis parmi un ou plusieurs des suivants : matériaux carbonés, notamment noir de carbone conducteur, graphite, graphène, nanotubes de carbone, fibres de carbone et/ou nano-oignons de carbone, matériaux métalliques particulaires, notamment poudre métallique, matériaux céramiques électriquement conducteurs, notamment nitrures et/ou carbures, polymères électriquement conducteurs, notamment trans-polyacétylène, polypyrrole, polyaniline, poly(phénylène), polythiophène et/ou poly(3,4-éthylènedioxythiophène) dopé au polystyrène(PEDOT:PSS).

7. Cellule électrochimique (100) selon l'une quelconque des revendications 1 à 6, **caractérisée en ce qu'**un premier élément d'étanchéité (134) de la cellule électrochimique (100) et/ou un deuxième élément d'étanchéité (152) de la cellule électrochimique (100) forment un constituant de l'élément de recouvrement (110) et sont notamment formés chacun par une surélévation de l'élément de recouvrement (110), notamment fermée sous forme annulaire ou présentant au moins une interruption, qui s'étend dans une direction opposée à l'espace intérieur (108) de la cellule électrochimique (100) à partir d'un corps de base de l'élément de recouvrement (110).

8. Cellule électrochimique (100) selon l'une quelconque des revendications 1 à 7, **caractérisée en ce que**
a) le premier élément de contact (120) et/ou le deuxième élément de contact (124) comprennent au moins deux composants d'éléments de contact (120a, 120b, 120c, 124a, 124b, 124c) qui comprennent notamment des matériaux métalliques différents les uns des autres ou qui sont formés à partir de ceux-ci et qui sont reliés entre eux par liaison de matière, notamment par soudage au laser et/ou par laminage, notamment dans la première zone de liaison (130) et/ou dans la deuxième zone de liaison (156) ; et/ou
b) le premier élément de contact (120) présente une première ouverture de remplissage de matériau de résine (188) pour remplir la première zone de liaison (130) avec le premier matériau de résine et/ou
**en ce que** le deuxième élément de contact (124) présente une première ouverture de remplissage de matériau de résine (186) pour remplir la première zone de liaison (150) avec le deuxième matériau de résine et/ou
c) **en ce que** le premier conducteur de liaison (114) présente une épaisseur moyenne qui est d'environ 1/10 ou moins d'une largeur moyenne du premier conducteur de liaison (114) prise perpendiculairement à l'épaisseur, l'épaisseur moyenne étant de préférence d'environ 0,8 mm ou moins, par exemple d'environ 0,7 mm ou moins, et/ou
**en ce que** le deuxième conducteur de liaison (116) présente une épaisseur moyenne qui est d'environ 1/10 ou moins d'une largeur moyenne du deuxième conducteur de liaison (116) prise perpendiculairement à l'épaisseur, l'épaisseur moyenne étant de préférence d'environ 0,8 mm ou moins, par exemple d'environ 0,7 mm ou moins, et/ou
d) **en ce que** le premier élément de contact (120) présente, dans une première zone de jonction (192) avec le premier terminal de cellule, une épaisseur moyenne (D1) qui est d'environ 2/10 ou moins d'une largeur moyenne (B1) du premier élément de contact (120), prise perpendiculairement à l'épaisseur (D1), l'épaisseur moyenne (D1) étant de préférence d'environ 0,8 mm ou moins, par exemple d'environ 0,7 mm ou moins, et/ou
**en ce que** le deuxième élément de contact (124) présente, dans une première zone de jonction (194) avec le deuxième terminal de cellule (122), une épaisseur moyenne (D2) qui est d'environ 2/10 ou moins d'une largeur moyenne (B2) du deuxième élément de contact (124), prise perpendiculairement à l'épaisseur (D2), l'épaisseur moyenne (D2) étant de préférence d'environ 0,8 mm ou moins, par exemple d'environ 0,7 mm ou moins ; et/ou
e) **en ce que** la largeur moyenne (B1) du premier élément de contact (120) dans une première zone de jonction (192) avec le premier terminal de cellule (118) est d'environ ½ ou moins, notamment 2/5 ou moins, d'une largeur moyenne du premier terminal de cellule (118) dans une direction prise parallèle à la largeur (B1) du premier élément de contact (120), la largeur moyenne (B1) étant de préférence d'environ 10,0 mm ou moins, et/ou
**en ce que** la largeur moyenne (B2) du deuxième élément de contact (124) dans une première zone de jonction (194) avec le deuxième terminal de cellule (122) est d'environ ½ ou moins, notamment 2/5 ou moins, d'une largeur moyenne du deuxième terminal de cellule (122) dans une direction prise parallèlement à la largeur (B2) du deuxième élément de contact (124), la largeur moyenne (B2) étant de préférence d'environ 10,0 mm ou moins.

9. Cellule électrochimique (100) selon l'une quelconque des revendications 1 à 8, **caractérisée en ce que** le premier conducteur de liaison (114) et le premier élément de contact (120) sont réalisés d'un seul tenant et/ou **en ce que** le premier élément de contact (120) est réalisé sous forme au moins approximativement rectangulaire dans une section transversale prise parallèlement à un plan d'extension principal de l'élément de recouvrement (110) et/ou
**en ce que** le deuxième conducteur de liaison (116) et le deuxième élément de contact (124) sont réalisés d'un seul tenant et/ou **en ce que** le deuxième élément de contact (124) est réalisé sous forme au moins approximativement rectangulaire dans une section transversale prise parallèlement au plan d'extension principal de l'élément de recouvrement (110).

10. Cellule électrochimique (100) selon l'une quelconque des revendications 1 à 9, **caractérisée en ce que**
a) une épaisseur moyenne de l'élément de recouvrement (110) dans une section transversale prise perpendiculairement à son plan d'extension principal est d'environ 1/10 ou moins, par exemple d'environ 1/20 ou moins, d'une largeur moyenne de l'élément de recouvrement (110) perpendiculaire à son épaisseur et/ou **en ce que** l'épaisseur moyenne de l'élément de recouvrement (110) est d'environ 1,9 mm ou moins, par exemple d'environ 1,8 mm ou moins ; et/ou
b) une épaisseur moyenne d'un élément isolant (136) de la cellule électrochimique (100) est d'environ 1/10 ou moins, par exemple d'environ 1/15 ou moins, d'une largeur moyenne de l'élément isolant prise perpendiculairement à l'épaisseur, l'épaisseur moyenne de l'élément isolant (136) étant de préférence d'environ 1,7 mm ou moins.

11. Cellule électrochimique (100) selon l'une quelconque des revendications 1 à 10, **caractérisée en ce que**
a) la cellule électrochimique (100) comprend au moins un élément à basculement (162) qui lors du dépassement d'une pression critique et/ou d'une température critique dans l'espace intérieur (108) de la cellule électrochimique (100) peut être dévié vers l'extérieur d'un état de repos vers un état de fonctionnement, et établit ainsi un contact électrique entre l'élément de recouvrement (110) et le premier terminal de cellule (118) ; et/ou
b) le premier élément de contact (120) et/ou le deuxième élément de contact (124) sont reliés (100) à un élément isolant (136) de la cellule électrochimique par liaison de matière et/ou par complémentarité de forme et/ou par adhérence.

12. Système électrochimique (102), comprenant une ou plusieurs cellules électrochimiques (100) selon l'une quelconque des revendications 1 à 11.

13. Procédé de fabrication d'une cellule électrochimique selon l'une quelconque des revendications 1 à 11,
où
- l'élément de recouvrement (110) présente, sur un côté détourné de l'espace intérieur (108), une première zone en creux pour recevoir le premier élément de scellement (128) et/ou l'élément de recouvrement (110) présente, sur un côté détourné de l'espace intérieur (108), une deuxième zone en creux (180) pour recevoir le deuxième élément de scellement (150), la première zone en creux présentant un renflement et/ou la deuxième zone en creux (180) présentant un renflement (185),
où il peut être prévu en option que la première zone en creux et/ou la deuxième zone en creux (180) soient formées par estampage,
et/ou
- un élément isolant (136) de la cellule électrochimique (100) présente plusieurs creux (165) pour recevoir le premier élément de scellement (128) et/ou le deuxième élément de scellement (150),
où un ou plusieurs éléments de guidage d'écoulement (168) peuvent notamment être agencés dans les creux (165) pour distribuer le premier matériau de résine et/ou le deuxième matériau de résine pendant la fabrication de la cellule électrochimique (100),
et/ou
- la cellule électrochimique (100) comprend un élément isolant (136) qui est relié à l'élément de recouvrement (110) sur un côté intérieur (132) de l'élément de recouvrement (110) tourné vers l'espace intérieur (108), l'élément isolant (136) présentant au voisinage de la première zone de liaison (130) et/ou au voisinage de la deuxième zone de liaison (156) au moins une ouverture de remplissage (164) pour remplir la première zone de liaison (130) avec le premier matériau de résine et/ou pour remplir la deuxième zone de liaison (156) avec le deuxième matériau de résine,
où il peut être prévu qu'au moins un canal de remplissage (170) soit relié à l'au moins une ouverture de remplissage (164),
le procédé comprenant :
- la fourniture de l'élément de recouvrement (110) qui comprend une première ouverture (126a) et/ou une deuxième ouverture (126b) ;
- le positionnement du premier élément de contact (120), qui est notamment relié ou peut être relié au premier terminal de cellule (118), dans la première ouverture (126a) et/ou le positionnement du deuxième élément de contact (124), qui est notamment relié ou peut être relié au deuxième terminal de cellule (122), dans la deuxième ouverture (126b) ;
- le remplissage d'une première zone de liaison (130) entourée par l'élément de recouvrement (110), le premier élément de contact (120) et notamment le premier terminal de cellule (118) avec le premier matériau de résine dans un procédé de coulée et/ou le remplissage d'une deuxième zone de liaison (156) entourée par l'élément de recouvrement, le deuxième élément de contact (124) et notamment le deuxième terminal de cellule (122) avec le deuxième matériau de résine dans un procédé de coulée ;
- le séchage et/ou le durcissement du premier matériau de résine pour former le premier élément de scellement (128) et/ou le séchage et/ou le durcissement du deuxième matériau de résine pour former le deuxième élément de scellement (150),
où il est prévu en option dans le procédé que, sur un côté extérieur d'un corps de base de l'élément de recouvrement (110) détourné d'un espace intérieur (108) de la cellule électrochimique (100), au moins un premier élément d'étanchéité (134) soit appliqué sur l'élément de recouvrement (110) et/ou soit introduit dans l'élément de recouvrement (110), lequel entoure radialement la première zone de liaison (130), et/ou que, sur le côté extérieur du corps de base de l'élément de recouvrement (110) détourné de l'espace intérieur (108) de la cellule électrochimique (100), au moins un deuxième élément d'étanchéité (152) soit appliqué sur l'élément de recouvrement (110) et/ou introduit dans l'élément de recouvrement (110), lequel entoure radialement la deuxième zone de liaison (156).
